# EUROPÄISCHE PATENTSCHRIFT

(11) **EP 4 472 047 B1**
(45) Veröffentlichungstag und Bekanntmachung des Hinweises auf die Patenterteilung: **22.04.2026**
(21) Anmeldenummer: 24163336.1
(22) Anmeldetag: 13.03.2024
(51) Int. Cl.: H02M 1/00, H02M 3/158, H02M 1/38

(54) **GLEICHSPANNUNGSWANDLER ZUR WANDLUNG EINER EINGANGSSPANNUNG IN MINDESTENS ZWEI SOLL-AUSGANGSSPANNUNGEN**
DC-DC CONVERTER FOR CONVERTING AN INPUT VOLTAGE INTO AT LEAST TWO DESIRED OUTPUT VOLTAGES
CONVERTISSEUR DE TENSION CONTINUE DESTINÉ À CONVERTIR UNE TENSION D'ENTRÉE EN AU MOINS DEUX TENSIONS DE SORTIE DE CONSIGNE

(30) Priorität: 31.05.2023 EP 23176399
(43) Veröffentlichungstag der Anmeldung: 04.12.2024
(73) Patentinhaber: Elmos Semiconductor SE, 51379 Leverkusen (DE)
(72) Erfinder: Fronen, Rob, 40878 Ratingen (DE); Gersemsky, Frank, 45659 Recklinghausen (DE); Hauschild, Ralf, 42699 Solingen (DE)
(74) Vertreter: dompatent

(56) Entgegenhaltungen:
- GB-A- 2 600 389
- US-A1- 2012 250 369
- US-A1- 2020 091 836
- US-A1- 2021 281 173
- US-B1- 10 291 126
- JIN WEIJIAN ET AL: "Single-Inductor Multiple-Output Inverter With Precise and Independent Output Voltage Regulation", IEEE TRANSACTIONS ON POWER ELECTRONICS, INSTITUTE OF ELECTRICAL AND ELECTRONICS ENGINEERS, USA, vol. 35, no. 10, 10 March 2020 (2020-03-10), pages 11222 - 11234, XP011796582, ISSN: 0885-8993, [retrieved on 20200629], DOI: 10.1109/TPEL.2020.2979893
- LEE ALBERT TING LEUNG ET AL: "Single-Inductor Multiple-Output (SIMO) Buck Hybrid Converter for Simultaneous Wireless and Wired Power Transfer", IEEE JOURNAL OF EMERGING AND SELECTED TOPICS IN POWER ELECTRONICS, IEEE, PISCATAWAY, NJ, USA, vol. 10, no. 2, 17 June 2020 (2020-06-17), pages 2163 - 2177, XP011904877, ISSN: 2168-6777, [retrieved on 20200617], DOI: 10.1109/JESTPE.2020.3002987

## Beschreibung

Die Erfindung betrifft einen Gleichspannungswandler zur Wandlung einer Eingangsspannung in mindestens zwei Soll-Ausgangsspannungen, die unterschiedlich oder gleiche Werte innerhalb eines vorgebbaren Ausgangsspannungsbereichs annehmen können. Dabei ist nicht festgelegt, an welchem der Ausgangsanschlüsse des Gleichspannungswandlers die höhere Soll-Ausgangsspannung und damit auch die höhere Ist-Ausgangsspannung anliegt.

Gleichspannungswandler in Form von Boost-Konvertern oder Buck-Boost-Konvertern sind grundsätzlich bekannt. In beiden Fällen wird ein induktiver Energiespeicher getaktet geladen und entladen.

Will man mit einem Gleichspannungswandler aus einer (einzigen) Eingangsspannung mehrere unterschiedlich große Ausgangsspannungen erzeugen (SIMO - Single Input Multiple Output), so sind dafür typischerweise auch mehrere induktive Energiespeicher erforderlich. Das erhöht den Hardware-Aufwand. Dies gilt umso mehr, als je nach Applikation gefordert wird, nicht im Vorhinein festlegen zu wollen, an welchem Ausgang die größere Ausgangsspannung anstehen soll.

Aus JIN WEIJAN Et AL: "Single- Inductor Multiple-Output Inverter With Precise and Independent Output Voltage Regulation", IEEE TRANSACTIONS ON POWER ELECTRONICS, INSTITUTE OF ELECTRONICAL AND ELECTRONICS ENGINEERS, USA, Bd. 35, Nr. 10, 10. März 2020 (2020-03-10), Seiten 11222-11234, XP011796582, ISSN: 0885-8992, DOI: 10.1109/TPEL. 2020.2979893 [gefundenam 2020-06-29] ist ein Gleichspannungswandler mit einem einzigen Induktor (Energiespeicher) bekannt, durch den zwei Ausgänge des Gleichspannungswandlers mit Energie versorgbar sind.

Aufgabe der Erfindung ist es, einen Gleichspannungswandler zur Wandlung einer Eingangsspannung in mindestens zwei Soll-Ausgangsspannungen anzugeben, der insbesondere hinsichtlich der Bereitstellung des induktiven Energiespeichers Vorteile gegenüber dem Stand der Technik hat.

Zur Lösung dieser Aufgabe wird gemäß einer ersten Variante der Erfindung ein Gleichspannungswandler (in Form eines Buck-Boost-Konverters) zur Wandlung einer Eingangsspannung in mindestens zwei Soll-Ausgangsspannungen vorgeschlagen, die innerhalb eines vorgebbaren Ausgangsspannungsbereichs unterschiedlich oder gleich sein können, wobei der Gleichspannungswandler versehen ist mit
- einer Eingangshalbbrücke, die einen Eingangsspannungsanschluss zum Anlegen der Eingangsspannung sowie einen Bezugspotenzialanschluss und eine Reihenschaltung aus einem elektronischen Highside-Schalter sowie einem elektronischen Lowside-Schalter mit einem Verbindungsknoten zwischen beiden Schaltern aufweist, wobei der Lowside-Schalter der Eingangshalbbrücke eine parallel zum Schalter liegenden Diode mit einer mit dem Bezugspotentialanschluss verbundener Kathode aufweist,
- einer Ausgangshalbbrücke, die mindestens einen ersten und einen zweiten Ausgangsanschluss, an denen mindestens eine erste bzw. eine zweite Ausgangsspannung abgreifbar ist, einen Bezugspotenzialanschluss, einen elektronischen Lowside-Schalter sowie mindestens zwei elektronische Highside-Schaltereinheiten aufweist, von denen jede zwischen einem der Ausgangsanschlüsse und einem gemeinsamen Verbindungsknoten geschaltet ist, mit dem ferner der Lowside-Schalter verbunden ist,
- einem Induktor, der zwischen den Verbindungsknoten der Eingangs- und der Ausgangshalbbrücken angeordnet ist und der in einer Aufladephase eines von mehreren aufeinanderfolgenden getakteten Ansteuerzyklen mit elektrischer Energie aufladbar sowie in einer Entladephase eines Ansteuerzyklus zur Weiterleitung elektrischer Energie an einen der Ausgangsanschlüsse entladbar ist,
- wobei jede Highside-Schaltereinheit einen ersten elektronischen Schalter und einen zweiten elektronischen Schalter mit jeweils einer parallel zum Schalter liegenden Diode aufweist, wobei die beiden Schalter jeder Highside-Schaltereinheit unter antiserieller Ausrichtung ihrer Dioden in Reihe liegen und derjenige Schalter jeder Highside-Schaltereinheit, dessen Diode bezogen auf einen Stromfluss von dem Verbindungsknoten zu dem mit der betreffenden Highside-Schaltereinheit verbundenen Ausgangsanschluss in Sperrrichtung liegt, der erste Schalter der betreffenden Highside-Schaltereinheit ist und der jeweils andere Schalter der zweite Schalter der betreffenden Highside-Schaltereinheit ist, und
- einer Auswerte- und Ansteuereinheit, die anhand der Größe der Eingangsspannung den Eingangsspannungsanschluss und der Größen der Ist- sowie der Soll-Ausgangsspannungen an den Ausgangsanschlüssen die elektronischen Schalter der Eingangshalbbrücke und der Ausgangshalbbrücken ansteuert, wobei die Auswerte- und Ansteuereinheit anhand eines Entscheidungskriteriums, das sich auf Basis einer potentiellen Unterschreitung einer bereitzustellenden Soll-Ausgangsspannung oder elektrischen Soll-Leistung an mindestens einem der Ausgangsanschlüsse durch die an diesem aktuell anliegende Ist-Ausgangsspannung bzw. bereitgestellte elektrische Ist-Leistung ergibt, diejenige Highside-Schaltereinheit auswählt, die mit demjenigen Ausgangsanschluss verbunden ist, an den in der Entladephase eines Ansteuerzyklus in dem Induktor gespeicherte elektrische Energie weiterzuleiten ist,
- wobei die Auswerte- und Ansteuereinheit
   - in der zum Speichern des Induktors mit elektrischer Energie vorgesehenen Aufladephase eines Ansteuerzyklus
      - den Lowside-Schalter der Eingangshalbbrücke sperrend schaltet,
      - den Highside-Schalter der Eingangshalbbrücke leitend schaltet,
      - den Lowside-Schalter der Ausgangshalbbrücken leitend schaltet und
      - sofern noch nicht zum Ende der Entladephase des vorherigen Ansteuerzyklus geschehen und für den Fall, dass eine der beiden Ist-Ausgangsspannungen kleiner als die jeweilige vorgegebene Soll-Ausgangsspannung ist, für den aktuellen Ansteuerzyklus anhand des Entscheidungskriteriums eine der beiden Highside-Schaltereinheiten auswählt, womit diese Highside-Schaltereinheit die ausgewählte Highside-Schaltereinheit ist und die andere Highside-Schaltereinheit die nicht ausgewählte Highside-Schaltereinheit ist,
      - die beiden Schalter der nicht ausgewählten Highside-Schaltereinheit sperrend schaltet oder sperrend geschaltet hält,
      - den ersten Schalter der ausgewählten Highside-Schaltereinheit von sperrend geschaltet nach leitend geschaltet überführt oder diesen ersten Schalter, wenn dieser bereits leitend geschaltet ist, leitend geschaltet hält, und
      - den zweiten Schalter der ausgewählten Highside-Schaltereinheit sperrend schaltet oder, wenn dieser bereits sperrend geschaltet ist, sperrend geschaltet hält,
   - in einer sich an die Aufladephase anschließenden ersten Übergangsphase
      - den ersten Schalter der ausgewählten Highside-Schaltereinheit leitend geschaltet hält,
         - den Lowside-Schalter der Ausgangshalbbrücken und den Highside-Schalter der Eingangshalbbrücke jeweils von leitend geschaltet nach sperrend geschaltet überführt und
         - den zweiten Schalter der ausgewählten Highside-Schaltereinheit und den Lowside-Schalter der Eingangshalbbrücke von sperrend geschaltet nach leitend geschaltet überführt,
   - in der sich an die erste Übergangsphase anschließenden Entladephase eines Ansteuerzyklus
      - die zum Ende der ersten Übergangsphase eingenommenen Zustände der elektronischen Schalter der Eingangshalbbrücke und der Ausgangshalbbrücken beibehält und
   - in einer sich an die Entladephase anschließenden zweiten Übergangsphase, auf die die Aufladephase des nächsten Ansteuerzyklus folgt,
   - den zweiten Schalter der ausgewählten Highside-Schaltereinheit und den den Lowside-Schalter der Eingangshalbbrücke von leitend geschaltet nach sperrend geschaltet überführt,
   - den Lowside-Schalter der Ausgangshalbbrücken und den Highside-Schalter der Eingangshalbbrücke von sperrend geschaltet nach leitend geschaltet überführt,
   - sofern es jetzt schon erfolgen soll und für den Fall, dass eine der beiden Ist-Ausgangsspannungen kleiner als die jeweilige vorgegebene Soll-Ausgangsspannung ist, für den nächsten Ansteuerzyklus anhand des Entscheidungskriteriums eine der beiden Highside-Schaltereinheiten auswählt und
      - die beiden Schalter der nicht ausgewählten Highside-Schaltereinheit des aktuellen Ansteuerzyklus sperrend geschaltet hält, wenn für den nächsten Ansteuerzyklus gemäß dem Entscheidungskriterium die nicht ausgewählte Highside-Schaltereinheit des aktuellen Ansteuerzyklus auch im nächsten Ansteuerzyklus nicht ausgewählt sein soll und die ausgewählte Highside-Schaltereinheit des aktuellen Ansteuerzyklus auch im nächsten Ansteuerzyklus ausgewählt sein soll,
      - oder den ersten Schalter der im aktuellen Ansteuerzyklus ausgewählten Highside-Schaltereinheit von leitend geschaltet nach sperrend geschaltet überführt und den ersten Schalter der im aktuellen Ansteuerzyklus nicht ausgewählten Highside-Schaltereinheit von sperrend geschaltet nach leitend geschaltet überführt, wenn für den nächsten Ansteuerzyklus gemäß dem Entscheidungskriterium die ausgewählte Highside-Schaltereinheit des aktuellen Ansteuerzyklus nicht ausgewählt sein soll und die nicht ausgewählte Highside-Schaltereinheit des aktuellen Ansteuerzyklus ausgewählt sein soll.

Der erfindungsgemäße Gleichspannungswandler zeichnet sich unter anderem dadurch aus, dass für die Bereitstellung mehrerer Ausgangsspannungen nur ein einziger induktiver Energiespeicher (nachfolgend Induktor genannt) erforderlich ist. Bei dem induktiven Energiespeicher handelt es sich typischerweise um eine Spule oder einen Transformator, d.h. um ein Gebilde, das induktive Energie speichert und in Form eines nach Trennung von der Versorgungsspannung automatisch (weiter-)fließenden Entladestroms abgibt.

Die mehreren Ausgangshalbbrücken weisen bidirektionale Highside-Schaltereinheiten auf, die jeweils zwischen einem anderen der Ausgangsanschlüsse und einem gemeinsamen Verbindungsknoten geschaltet sind. Zwischen den Verbindungsknoten und einem Bezugspotential liegt ein Lowside-Schalter, der sämtlichen Ausgangshalbbrücken gemein ist. Während der Totzeitintervalle in den Umschaltphasen bzw. bei der Kommutierung ist einer der beiden elektronischen Schalter derjenigen Highside-Schaltereinheit geschlossen, die mit dem mit elektrischer Ladung zu versorgenden Ausgangsanschluss verbunden ist. Dieser Schalter, der auch als Select-Schalter bezeichnet werden kann, wird bereits in der Aufladephase geschlossen. Eingangsseitig ist der Eingangsspannungsanschluss entweder über den Induktor mit dem Verbindungsknoten der Ausgangshalbbrücken gekoppelt (Boost-Konverter) oder aber es existiert eine Eingangshalbbrücke mit Highside-Schalter und Lowside-Schalter, deren gemeinsamer Verbindungsknoten mit dem Induktor verbunden ist (Buck-Boost-Konverter).

Wie bei Schaltwandlern üblich, erfolgt die Wandlung der Eingangsspannung in eine Ausgangsspannung in getakteten Ansteuerzyklen. Eine Ansteuerzyklus weist eine Aufladephase auf, in der der Induktor mit elektrischer Energie aufgeladen wird. In einer sich an die Aufladephase anschließenden ersten Übergangsphase kommt es zur Kommutierung, d.h. zur Umschaltung der einzelnen elektronischen Schalter, wie dies grundsätzlich bekannt ist. Dabei wird während eines Totzeitintervalls die Freilauf-Diode einiger der typischerweise als Leistungstransistoren ausgebildeten elektronischen Schalter genutzt.

Da die Ausgangshalbbrücken über den Verbindungsknoten untereinander verbunden sind, muss dafür Sorge getragen werden, dass es nicht zu Querströmen kommt. Diese entstehen, wenn an den Ausgangsanschlüssen unterschiedlich hohe Ausgangsspannungen bereitgestellt werden müssen. Welche Ausgangsspannungen applikationsabhängig bereitgestellt werden müssen und ob überhaupt Ausgangsspannungen bereitgestellt werden müssen, kann durch die angeschlossenen Verbraucher vorgegeben werden, die dazu beispielsweise gemäß einem Kommunikationsstandard mit der Auswerte- und Ansteuereinheit des Gleichspannungswandlers kommunizieren. Dadurch kann auch festgestellt werden, ob und, wenn ja, an welchem der Ausgangsanschlüsse beispielsweise kein Verbraucher angeschlossen ist.

Die hinsichtlich ihrer Freilauf-Dioden antiseriell geschalteten elektronischen Schalter der Highside-Schalteranordnungen erfüllen nun erfindungsgemäß zwei Funktionen. Zur Erläuterung sei von einem Gleichspannungswandler mit zwei Ausgangsanschlüssen ausgegangen, wobei der zweite Ausgang eine größere Ausgangsspannung liefern soll als der erste Ausgang. In der Aufladephase muss also nun darauf geachtet werden, dass es nicht zu einem Querstrom vom zweiten Ausgang zum ersten Ausgang kommt. Dies wird verhindert, indem derjenige der beiden Schalter der mit dem zweiten Ausgangsanschluss verbundenen Highside-Schalteranordnung geöffnet ist, dessen Freilauf-Diode bezogen auf den potentiellen Querstrom in Sperrrichtung liegt. Dieser Schalter ist dann in den Übergangsphasen derjenige Schalter, der, wenn der zweite Ausgangsanschluss mit elektrischer Ladung versorgt wird, während der Totzeitintervalle den aus dem Induktor weiterfließenden (Entlade-)Strom über seine Freilauf-Diode zum Ausgangsanschluss leitet.

Der jeweils andere Schalter jeder Highside-Schalteranordnung dient als Select-Schalter, um bereits während der Aufladephase geschlossen zu werden. Wenn also im oben genannten Beispiel der zweite Ausgangsanschluss in der Entladephase mit elektrischer Energie versorgt werden soll, wird bereits dieser Select-Schalter geschlossen, so dass sich anschließend in der ersten Übergangsphase zwischen Auflade- und Entladephase letztendlich die typischerweise bei Gleichspannungswandlern mit einer Ausgangshalbbrücke anzutreffenden Szenarien ergeben. Es muss dann also, wie es üblich ist, nach Abschluss der Aufladephase zunächst der gemeinsame Lowside-Schalter der Ausgangshalbbrücken geöffnet werden, um anschließend nach Abwarten des Totzeitintervalls den bis dahin noch offenen Schalter der betreffenden Highside-Schalteranordnung zu schließen. Während dieses Totzeitintervalls fließt der Strom aus dem Induktor über die Freilauf-Diode dieses besagten Schalters ab, wobei dabei in Kauf genommen wird, dass es für die Dauer des Totzeitintervalls zu einer erhöhten Verlustleistung in dem besagten Schalter kommt (zu einer erhöhten Verlustleistung kommt es übrigens auch im Falle eines Buck-Boost-Konverters im Lowside-Schalter der Eingangshalbbrücke).

Nach dem Schließen des besagten Schalters der betreffenden Highside-Schalteranordnung (und im Falle eines Buck-Boost-Konverters nach dem Schließen des Lowside-Schalters der Eingangshalbbrücke), fließt dann der Strom über die jeweils geschlossenen Schalter, womit die Verlustleistung gegenüber ihrem Wert während des Totzeitintervalls deutlich reduziert ist.

Das erfindungsgemäße Konzept bringt also den Vorteil mit sich, die Bereitstellung mehrerer unterschiedlich großer Ausgangsspannungen durch einen einzigen Induktor realisieren zu können. In jedem Ansteuerzyklus muss wieder neu entschieden werden, welcher der Ausgangsanschlüsse während der Übergangsphasen und insbesondere während der Totzeitintervalle mit elektrischer Energie versorgt werden muss. Idealerweise lässt sich so ein Gleichspannungswandler mit beispielsweise zwei Ausgangsanschlüssen realisieren. Es ist auch denkbar, dass ein Gleichspannungswandler mit drei oder vier (gegebenenfalls auch mehr) Ausgangsanschlüssen realisierbar ist, wobei allerdings zu bedenken ist, dass die Taktrate, mit der der Gleichspannungswandler betrieben wird, umso höher ist, je mehr Ausgänge er aufweist.

Die oben genannte Aufgabe wird gemäß einer zweiten Variante der Erfindung durch einen Gleichspannungswandler (in Form eines Boost-Konverters) zur Wandlung einer Eingangsspannung in mindestens zwei Soll-Ausgangsspannungen gelöst, die innerhalb eines vorgebbaren Ausgangsspannungsbereichs unterschiedlich oder gleich sein können, wobei der Gleichspannungswandler versehen ist mit
- einem Eingangsspannungsanschluss zum Anlegen der Eingangsspannung,
- einer Ausgangshalbbrücke, die mindestens einen ersten und einen zweiten Ausgangsanschluss, an denen mindestens eine erste bzw. eine zweite Ausgangsspannung abgreifbar ist, einen Bezugspotenzialanschluss, einen elektronischen Lowside-Schalter und mindestens zwei elektronische Highside-Schaltereinheiten aufweist, von denen jede zwischen einem anderen der Ausgangsanschlüsse und einem gemeinsamen Verbindungsknoten geschaltet ist, mit dem ferner der Lowside-Schalter verbunden ist,
- einem Induktor, der zwischen dem Eingangsspannungsanschluss und dem Verbindungsknoten der Ausgangshalbbrücken angeordnet ist und der in einer Aufladephase eines von mehreren aufeinanderfolgenden getakteten Ansteuerzyklen mit elektrischer Energie aufladbar ist sowie in einer Entladephase eines Ansteuerzyklus zur Weiterleitung der elektrischen Energie an einen der Ausgangsanschlüsse entladbar ist,
- wobei jede Highside-Schaltereinheit einen ersten elektronischen Schalter und einen zweiten elektronischen Schalter mit jeweils einer parallel zum Schalter liegenden Diode aufweist, wobei die beiden Schalter jeder Highside-Schaltereinheit unter antiserieller Ausrichtung ihrer Dioden in Reihe liegen und derjenige Schalter jeder Highside-Schaltereinheit, dessen Diode bezogen auf einen Stromfluss von dem Verbindungsknoten zu dem mit der betreffenden Highside-Schaltereinheit verbundenen Ausgangsanschluss in Sperrrichtung liegt, der erste Schalter der betreffenden Highside-Schaltereinheit ist und der jeweils andere Schalter der zweite Schalter der betreffenden Highside-Schaltereinheit ist, und
- einer Auswerte- und Ansteuereinheit, die anhand der Größe der Eingangsspannung an dem Eingangsspannungsanschluss und der Größen der Istsowie der Soll-Ausgangsspannungen an den Ausgangsanschlüssen die elektronischen Schalter der Ausgangshalbbrücken ansteuert, wobei die Auswerte- und Ansteuereinheit anhand eines Entscheidungskriteriums , das sich auf Basis einer potentiellen Unterschreitung einer bereitzustellenden Soll-Ausgangsspannung oder elektrischen Soll-Leistung an mindestens einem der Ausgangsanschlüsse (Vout1, Vout2) durch die an diesem aktuell anliegende Ist-Ausgangsspannung bzw. bereitgestellte elektrische Ist-Leistungergibt, diejenige Highside-Schaltereinheit auswählt, die mit demjenigen Ausgangsanschluss verbunden ist, an den in der Entladephase eines Ansteuerzyklus in dem Induktor gespeicherte elektrische Energie weiterzuleiten ist,
- wobei die Auswerte- und Ansteuereinheit
   - in der Aufladephase eines Ansteuerzyklus
      - den Lowside-Schalter der Ausgangshalbbrücken leitend schaltet und
      - , sofern noch nicht zum Ende der Entladephase des vorherigen Ansteuerzyklus geschehen und für den Fall, dass eine der beiden Ist-Ausgangsspannungen kleiner als die jeweilige ihr zugeordnete Soll-Ausgangsspannung ist, für den aktuellen Ansteuerzyklus anhand des Entscheidungskriteriums eine der beiden Highside-Schaltereinheiten auswählt, womit diese Highside-Schaltereinheit die ausgewählte Highside-Schaltereinheit ist und die andere Highside-Schaltereinheit die nicht ausgewählte Highside-Schaltereinheit ist,
      - die beiden Schalter der nicht ausgewählten Highside-Schaltereinheit sperrend schaltet oder sperrend geschaltet hält,
      - den ersten Schalter der ausgewählten Highside-Schaltereinheit von sperrend geschaltet nach leitend geschaltet überführt oder diesen ersten Schalter, wenn dieser bereits leitend geschaltet ist, leitend geschaltet hält, und
      - den zweiten Schalter der ausgewählten Highside-Schaltereinheit sperrend schaltet oder, wenn dieser bereits sperrend geschaltet ist, sperrend geschaltet hält,
   - in einer sich an die Aufladephase anschließenden ersten Übergangsphase
      - die beiden Schalter der nicht ausgewählten Highside-Schaltereinheit sperrend geschaltet hält,
      - den ersten Schalter der ausgewählten Highside-Schaltereinheit leitend geschaltet hält,
      - den Lowside-Schalter der Ausgangshalbbrücken von leitend geschaltet nach sperrend geschaltet überführt und,
      - anschließend nach Abwarten des Totzeitintervalls den zweiten Schalter der ausgewählten Highside-Schaltereinheit von sperrend geschaltet nach leitend geschaltet überführt,
   - in der sich an die erste Übergangsphase anschließenden Entladephase eines Ansteuerzyklus
      - die zum Ende der ersten Übergangsphase eingenommenen Zustände der elektronischen Schalter der Ausgangshalbbrücken beibehält und
   - in einer sich an die Entladephase anschließenden zweiten Übergangsphase, auf die die Aufladephase des nächsten Ansteuerzyklus folgt,
      - den Lowside-Schalter der Ausgangshalbbrücken von sperrend geschaltet nach leitend geschaltet überführt,
      - anschließend nach Abwarten des Totzeitintervalls den zweiten Schalter der ausgewählten Highside-Schaltereinheit von leitend geschaltet nach sperrend geschaltet überführt und
      - , sofern es jetzt schon erfolgen soll und für den Fall, dass eine der beiden Ist-Ausgangsspannungen kleiner als die jeweilige vorgegebene Soll-Ausgangsspannung ist, für den nächsten Ansteuerzyklus anhand des Entscheidungskriteriums eine der beiden Highside-Schaltereinheiten auswählt und
         - die beiden Schalter der nicht ausgewählten Highside-Schaltereinheit des aktuellen Ansteuerzyklus sperrend geschaltet hält, wenn für den nächsten Ansteuerzyklus gemäß dem Entscheidungskriterium die nicht ausgewählte Highside-Schaltereinheit des aktuellen Ansteuerzyklus auch im nächsten Ansteuerzyklus nicht ausgewählt sein soll und die ausgewählte Highside-Schaltereinheit des aktuellen Ansteuerzyklus auch im nächsten Ansteuerzyklus ausgewählt sein soll,
         - oder den ersten Schalter der im aktuellen Ansteuerzyklus ausgewählten Highside-Schaltereinheit von leitend geschaltet nach sperrend geschaltet überführt und den ersten Schalter der im aktuellen Ansteuerzyklus nicht ausgewählten Highside-Schaltereinheit von sperrend geschaltet nach leitend geschaltet überführt, wenn für den nächsten Ansteuerzyklus gemäß dem Entscheidungskriterium die ausgewählte Highside-Schaltereinheit des aktuellen Ansteuerzyklus nicht ausgewählt sein wird und die nicht ausgewählte Highside-Schaltereinheit des aktuellen Ansteuerzyklus ausgewählt sein wird.

Im Unterschied zum Gleichspannungswandler gemäß erster Variante der Erfindung weist der Gleichspannungswandler nach der zweiten Variante der Erfindung keine Eingangshalbbrücke auf. Wie bereits oben angeklungen, ist der Induktor direkt mit dem Eingangsanschluss verbunden, während die Halbbrücken an seinen Ausgängen so ausgebildet sind, wie es oben im Zusammenhang mit dem Buck-Boost-Konverter beschrieben ist.

Für die Besonderheiten im Zusammenhang mit der Vorbereitung der Umschaltphasen inklusive der Entscheidung, welcher Ausgangsanschluss in der nach der Übergangsphase auf die Aufladephase folgenden Entladephase mit elektrischer Energie versorgt werden muss, gelten für beide Varianten erfindungsgemäß die nachfolgenden Überlegungen.

In beiden Varianten des erfindungsgemäßen Gleichspannungswandlers wird die zuvor genannte Entscheidung, welcher der Ausgänge mit im Induktor gespeicherten Energie versorgt werden soll, anhand mindestens eines der nachfolgenden Entscheidungskriterien getroffen. Gemäß diesen Entscheidungskriterien kann
- diejenige Highside-Schaltereinheit für die Entladephase eines Ansteuerzyklus diejenige Highside-Schaltereinheit ausgewählt wird, die mit demjenigen Ausgangsanschluss verbunden ist, an dem aktuell eine Ist-Ausgangsspannung anliegt, die kleiner als die bereitzustellende Soll-Ausgangsspannung ist, wobei die ausgewählte Highside-Schaltereinheit maximal für eine vorgebbare Anzahl von Ansteuerzyklen ausgewählt bleibt, sofern die Ist-Ausgangsspannung des mit der ausgewählten Highside-Steuereinheit, verbundenen Ausgangsanschluss weiterhin kleiner ist als die jeweilige bereitzustellende Soll-Ausgangsspannung, und/oder
- für die Entladephase eines Ansteuerzyklus dann, wenn an sämtlichen Ausgangsanschlüssen aktuell eine Ist-Ausgangsspannung anliegt, die kleiner als die jeweilige bereitzustellende Soll-Ausgangsspannung ist, diejenige Highside-Schaltereinheit ausgewählt wird, die mit demjenigen Ausgangsanschluss verbunden ist, an dem eine Ist-Ausgangsspannung anliegt, die die jeweilige bereitzustellende Soll-Ausgangsspannung um die betragsmäßig größere Differenz (in %-Werten oder in Absolutwerten betrachtet) unterschreitet, wobei die ausgewählte Highside-Schaltereinheit maximal für eine vorgebbare Anzahl von Ansteuerzyklen ausgewählt bleibt, sofern die Ist-Ausgangsspannung des mit der ausgewählten Highside-Schaltereinheit verbundenen des Ausgangsanschlusses die bereitzustellende Soll-Ausgangsspannung weiterhin um die im Vergleich zur Unterschreitung der Ist-Ausgangsspannungen des oder der anderen Ausgangsanschlüsse betragsmäßig größte Differenz unterschreitet, und/oder
- für die Entladephase eines Ansteuerzyklus dann, wenn an sämtlichen Ausgangsanschlüssen aktuell jeweils eine Ist-Ausgangsspannung anliegt, die kleiner als die jeweilige bereitzustellende Soll-Ausgangsspannung ist, diejenige Highside-Schaltereinheit ausgewählt wird, die mit demjenigen Ausgangsanschluss verbunden ist, an dem eine Ist-Spannung anliegt, der ein Verringerungsgrad gegenüber ihrem Wert im vorherigen Ansteuerzyklus größer ist als der Verringerungsgrad der Ist-Ausgangsspannungen an den anderen Ausgangsanschlüssen gegenüber deren jeweiligen Werte im vorherigen Ansteuerzyklus, wobei die ausgewählte Highside-Schaltereinheit maximal für eine vorgebbare Anzahl von Ansteuerzyklen ausgewählt bleibt, und/oder
- für die Entladephase eines Ansteuerzyklus, wenn an sämtlichen Ausgangsanschlüssen aktuell eine Ist-Ausgangsspannung anliegt, die kleiner als die jeweilige bereitzustellende Soll-Ausgangsspannung ist, die Highside-Schaltereinheiten wechselweise oder zyklisch ausgewählt werden oder die jeweils ausgewählte Highside-Schaltereinheit maximal für eine vorgebbare Anzahl von Ansteuerzyklen ausgewählt bleibt, bevor eine Highside-Schaltereinheit ausgewählt wird, die mit einem anderen Ausgangsanschluss verbunden ist, dessen Ist-Ausgangsspannung kleiner als die jeweils bereitzustellende Soll-Ausgangsspannung ist,
- wobei die zuvor aufgeführten Fälle auf die Betrachtungen der jeweils bereitgestellten elektrischen Ist-Leistungen und der jeweils entsprechend geforderten elektrischen Soll-Leistungen übertragbar ist.

Alternativ wird nicht zwingend überprüft, an welchem Ausgang aktuell eine Ist-Ausgangsspannung mit der größeren Differenz zur geforderten Soll-Ausgangsspannung ansteht, sondern lediglich, ob einer der Ausgangsanschlüsse eine Ist-Ausgangsspannung aufweist, die kleiner als die jeweilige Soll-Ausgangsspannung ist, und welcher Ausgangsanschluss beim vorherigen Ansteuerzyklus mit Energie versorgt worden ist. Wenn also z.B. beim Anlaufen des Gleichspannungswandlers sämtliche Ausgangsanschlüsse eine Ist-Ausgangsspannung unterhalb der jeweiligen Soll-Ausgangsspannung aufweisen, werden die Ausgangsanschlüsse abwechselnd bzw. zyklisch geladen, und zwar so lange, bis einer von ihnen die betreffende Soll-Ausgangsspannung liefert. Das verhindert, dass ein Ausgangsanschluss mit hohem Energiebedarf (weil z.B. die Soll-Ausgangsspannung aktuell recht hoch ist) die anderen Ausgangsanschlüsse daran hindert, geladen zu werden, womit sie unter ihren Minimalwert bzw. Sollwert fallen könnten.

In weiterer vorteilhafter Ausgestaltung der Erfindung kann vorgesehen sein, dass die Auswerte- und Ansteuereinheit einen Komparator, insbesondere in Form eines Schmitt-Triggers, aufweist, dessen beide Eingänge mit den beiden Ausgangsanschlüssen verbunden sind und der an seinem Ausgang ein Ausgangssignal liefert, das für das Entscheidungskriterium repräsentativ ist, welche der Highside-Schaltereinheiten auszuwählen ist.

Bei den zuvor genannten Varianten für das Entscheidungskriterium wird die maximale Anzahl an Ansteuerzyklen, für die jeweils ausgewählte Highside-Schaltereinheit ausgewertet bleibt, applikationsabhängig gewählt. So ist es möglich, dass die für die Entladephase eines Ansteuerzyklus gewählte Highside-Schaltereinheit auf keinen Fall für den nächsten Ansteuerzyklus beibehalten bleibt, so dass die Anzahl in diesem Fall gleich Null wäre. Es ist aber je nach Situation durchaus von Vorteil, eine einmal ausgewählte Highside-Schaltereinheit für beispielsweise einizige wenige folgende Ansteuerzyklen, beispielsweise für eins bis drei oder eins bis fünf nachfolgende Ansteuerzyklen beizubehalten. Insbesondere die Highside-Schaltereinheit, die mit einem Ausgangsanschluss verbunden ist, der zwischenzeitlich einen höheren Nachladeenergiebedarf hat, kann die ausgewählte Highside-Schaltereinheit für ein oder mehrere nachfolgende Ansteuerzyklen bzw. für die Entladephasen dieser Ansteuerzyklen beibehalten bleiben. Die Anzahl derartiger Aufladezyklen hängt letztendlich auch davon ab, wieviel Energie von den anderen Ausgangsanschlüssen gefordert wird. Wenn die an diesen anderen Ausgangsanschlüssen angeschlossenen Verbrauchern aktuell einen geringen Energiebedarf haben, der besagte zuvor genannte Ausgangsanschluss aber einen hohen, kann sicherlich eine größere Anzahl von Ansteuerzyklen ohne Änderung der auszuwählenden Highside-Schaltereinheit tolerieren, als beispielsweise in Fällen, in denen an mehreren Ausgangsanschlüssen Verbraucher mit aktuellem vergleichsweise hohem Energiebedarf angeschlossen sind.

Insoweit können also für die exakte Anzahl an maximal vorgebbaren Ansteuerzyklen, für deren Entladephasen eine einmal ausgewählte Highside-Schaltereinheit ausgewählt bleibt, keine absoluten Werte angegeben werden, wobei man allenfalls sagen kann, dass diese Anzahl jeweils in einem Bereich von 2 bis 10, insbesondere von 2 bis 6 und vorzugsweise von 2 bis 4 liegen würde.

Der Entscheidungsprozess, welcher Ausgang mit elektrischer Energie zu versorgen ist, ist sehr vielfällig. Im Falle der Anwendung der Erfindung auf das USB-C-System wird beispielsweise über eine höhere Systemebene entschieden, welcher Ausgang mit elektrischer Energie zu versorgen ist. Die angeschlossenen Verbraucher melden z.B. ihre Leistungsanforderungen an das USB- C-System an und die übergeordnete Systemebene entscheidet daraufhin laufend, welcher Ausgang im nächsten Entladezyklus mit elektrischer Energie versorgt wird. Der Energie- bzw. Leistungsbedarf der Verbraucher kann sich während der Dauer, für die sie an den Wandler angeschlossen sind, ändern, so kann z.B. ein Verbraucher dessen Akku nur noch eine geringe Energie speichert und somit "dringend" bis auf ein gewisses Niveau aufgeladen werden sollte, in dieser Phase mehr Energie bzw. Leistung benötigen, als danach. Hinter dem gesamten Konzept steckt also in gewisser Weise ein Energiemanagement, das den Entscheidungsprozess und das Entscheidungskriterium, welcher Ausgang mit Energie zu versorgen ist, steuert.

Für den Fall, dass keiner der Ausgangsanschlüsse mit elektrischer Energie versorgt werden muss (weil nämlich sämtliche Ausgangsanschlüsse Ist-Ausgangsspannungen liefern, die größer sind als die jeweils geforderten Soll-Ausgangsspannung), kann der Gleichspannungswandler gemäß erster Variante der Erfindung in der Entladephase im Free-Wheeling-Modus betrieben werden, in dem
- in der ersten Übergangsphase
   - die ersten Schalter der beiden Highside-Schaltereinheiten leitend schaltend oder leitend geschaltet hält oder sperrend schaltet oder sperrend geschaltet hält,
   - die zweiten Schalter der beiden Highside-Schaltereinheiten sperrend geschaltet hält,
   - den Lowside-Schalter der Ausgangshalbbrücken leitend geschaltet hält und
   - den Highside-Schalter der Eingangshalbbrücke von leitend geschaltet nach sperrend geschaltet überführt und
   - anschließend nach Abwarten des Totzeitintervalls den Lowside-Schalter der Eingangshalbbrücke von sperrend geschaltet nach leitend geschaltet überführt,
- in der Entladephase
   - die am Ende der ersten Übergangsphase eingenommenen Zustände sämtlicher Schalter der Eingangshalbbrücke und der Ausgangshalbbrücken beibehält und
- in der zweiten Übergangsphase
   - den Lowside-Schalter der Eingangshalbbrücke von leitend geschaltet nach sperrend geschaltet überführt und
   - anschließend nach Abwarten des Totzeitintervalls den Highside-Schalter der Eingangshalbbrücke von sperrend geschaltet nach leitend geschaltet überführt.

Der erfindungsgemäße Gleichspannungswandler gemäß beider Varianten kann mit einer Peak Current Control (PCC) Regelung versehen sein, die vorteilhafterweise in Kombination mit einer Slope-Compensation-Regelung durchgeführt wird. Beide Konzepte sind bei Schaltwandlern grundsätzlich bekannt, weshalb an dieser Stelle auf diese Regelungen nicht weiter eingegangen wird.

Zusätzlich zu diesen beiden Regelungen lässt sich gemäß einer vorteilhaften Weiterbildung der Erfindung der Strom für den Induktor auch noch in Abhängigkeit davon regeln, in welchem Ausmaß an den Ausgangsanschlüssen die jeweiligen Ist-Ausgangsspannungen unterhalb oder oberhalb ihrer betreffenden Soll-Ausgangsspannungen liegen. Das Ausmaß der Abweichungen (sowohl nach oben als auch nach unten) kann durch Fehlersignale unterschiedlicher Größen repräsentiert werden, die nach einer Summation und Tiefpassfilterung ein zusätzliches Signal liefern, das wie das Slope-Compensation-Signal vom vorgegebenen Maximalstrom subtrahiert wird, um dann das sich ergebende Signal als den Stromwert zu verwenden, auf den der Induktorstrom geregelt werden soll. Hierzu bedarf es einer Messeinrichtung zur Erfassung dieses Stroms bzw. seiner Größe und eines Reglers in Form beispielsweise einer Finite-State-Machine.

Mit anderen Worten ist es also von Vorteil, wenn die Auswerte- und Ansteuereinheit eine Messvorrichtung zur Lieferung eines die Größe des Stroms durch die Induktorspule repräsentierenden Messsignals aufweist, wobei die Auswerte- und Ansteuereinheit die Aufladephase eines Ansteuerzyklus dann beendet, wenn das Messsignal einen Schwellwert überschreitet, der einen vorgebbaren Maximalstrom repräsentiert, wobei insbesondere vorgesehen sein kann, dass der Schwellwert in Abhängigkeit davon, ob eine der oder jede der aktuellen Ist-Ausgangsspannungen größer oder kleiner als die jeweilige Soll-Ausgangsspannung ist, und/oder in Abhängigkeit von der Soll-Größe einer Slope-Compensation-Regelung veränderbar ist.

Wie bereits oben kurz erwähnt, werden als Highside- und Lowside-Schalter der Ausgangshalbbrücken und, sofern vorhanden, der Eingangshalbbrücke zweckmäßigerweise Leistungstransistoren, also beispielsweise MOS-Transistoren mit entsprechend ausgebildeten Freilauf-Dioden eingesetzt.

Grundsätzlich können diese MOS-Transistoren jeder Highside-Schalteranordnung als bidirektionale Schalter mit Common-Source oder Common-Drain verschaltet sein. Die Common-Source-Anordnung ist hinsichtlich der Ansteuerung der Gates der MOS-Transistoren einfacher zu realisieren, weshalb insoweit Vorteile gegenüber der Common-Drain-Anordnung bestehen.

Alternativ zur Realisierung der elektronischen Schalter des Gleichspannungswandlers nach der Erfindung als MOS-Transistoren bieten sich Bipolar-Transistoren oder IGPTs an, wobei parallel zu den Strompfaden dieser Transistoren jeweils eine (Freilauf-)Diode liegt, die insbesondere als Schottky-Diode ausgeführt sein kann.

Der erfindungsgemäße Gleichspannungswandler ist insbesondere geeignet für Systeme, bei denen die als Eingangsspannung für den Gleichspannungswandler zur Verfügung gestellte Spannung innerhalb eines vorgebbaren Spannungsbereichs schwankt. Dies ist beispielsweise der Fall bei einem Fahrzeug-Bordnetz, welches beispielhaft je nach Zustand der Fahrzeugbatterie schwanken kann. Die geforderten Ausgangsspannungen können je nach angeschlossenem Verbraucher und der Höhe der zur Verfügung stehenden Eingangsspannung höher oder niedriger als die aktuell zur Verfügung stehende Bordnetz- bzw. Eingangsspannung sein. Daher muss davon ausgegangen werden, dass der Gleichspannungswandler nicht nur als Aufwärtswandler (Boost-Konverter) sondern auch als Abwärtswandler (Buck-Boost-Konverter) betreibbar sein muss. Auch sollte dafür Sorge getragen werden, dass im Laufe des Betriebs des Gleichspannungswandlers einer der Ausgänge aufgrund von Sicherheitsmaßnahmen nicht weiter mit elektrischer Ladung versorgt werden darf. Das ist beispielsweise der Fall, wenn an einem Ausgang (oder auch an beiden) eine Powerbank mit einem Lithium-Ionen-Akku oder ein Verbraucher mit einem derartigen Akku angeschlossen ist. Aus Sicherheitsgründen darf ein derartiger Akku ab einer bestimmten Spannung nicht mehr mit weiterem Ladestrom versorgt werden.

Während des Betriebs des erfindungsgemäßen Gleichspannungswandlers kann also der Fall eintreten, dass einer der beiden Ausgänge abgeschaltet werden muss. Dies ist aber letztendlich unproblematisch, da in diesem Fall dann ausschließlich der andere Ausgang mit elektrischer Ladung versorgt wird, der erfindungsgemäße Gleichspannungswandler dann also wie ein Gleichspannungswandler mit einem (einzigen) Ausgang arbeitet.

Die zuvor genannte Schutzfunktion zum Ausschalten bzw. Inaktivschalten eines der oder beider bzw. sämtlicher Ausgänge bei für den angeschlossenen Verbraucher ausreichend bereitgestellter Ausgangsspannung und das partielle oder gesamte Ausschalten des Gleichspannungswandlers (z.B. durch für die Zeit des Ausschaltens Öffnen sämtlicher Schalter) wird beispielsweise gesteuert durch die Auswerte- und Ansteuereinheit des erfindungsgemäßen Gleichspannungswandlers.

Die Erfindung wird nachfolgend anhand eines Ausführungsbeispiels und unter Bezugnahme auf die Zeichnung näher erläutert. Im Einzelnen zeigen dabei:
- Fig. 1: den grundsätzlichen Aufbau eines Buck-Boost-Konverters, wobei angenommen ist, dass die Ausgangsspannung an Vout2 größer ist als an Vout1 und Vout2 mit Energie aus dem Induktor versorgt werden soll, und wobei die Schalterstellungen für die Aufladephase gezeigt sind,
- Fign. 2 bis 6: verschiedene Schaltzustände der Schalter in den sich an die Aufladephase anschließenden weiteren Phasen und während der Totzeitintervalle für den in Fig. 1 gezeigten Fall, dass in der Entladephase der Ausgang Vout2 mit Energie aus dem Induktor versorgt werden soll,
- Fign. 7 bis 12: die Schalterstellungen des Buck-Boost-Konverters mit den Randbedingungen gemäß Fig. 1 für den Fall, dass in der Entladephase Vout1 mit elektrischer Energie aus dem Induktor versorgt werden soll,
- Fign. 13 bis 16: die Schalterstellungen des Buck-Boost-Konverters mit den Randbedingungen gemäß Fig. 1 für den Fall, dass in der Entladephase keiner der Ausgänge mit elektrischer Energie aus dem Induktor versorgt werden muss (Free Wheeling),
- Fign. 17 bis 22: ein Ausführungsbeispiel des Gleichspannungswandlers als Boost-Konverter unter Annahme der Randbedingungen wie weiter oben definiert, wobei der Ausgang Vout2 mit elektrischer Energie aus dem Induktor versorgt werden soll,
- Fign. 23 bis 28: ein Ausführungsbeispiel des Gleichspannungswandlers als Boost-Konverter unter Annahme der Randbedingungen wie weiter oben definiert, wobei der Ausgang Vout1 mit elektrischer Energie aus dem Induktor versorgt werden soll,
- Fig. 29: als Blockschaltbild die Komponenten der Auswerte- und Ansteuereinheit für die Schalter,
- Fig. 30: ein Beispiel für die Zeitverläufe der Ist-Ausgangsspannungen und des zugehörigen Zeitverlaufs des Stroms durch den Induktor sowie die unterschiedlichen Duty-Cycle betreffend das Verhältnis aus Aufladephasendauer zur Entladephasendauer und
- Fig. 31: eine tabellarische Übersicht zur Erläuterung der Regelung gemäß Blockschaltbild der Fig. 29 für den Fall der Realisierung des Gleichspannungswandlers als Buck-Boost-Konverter.

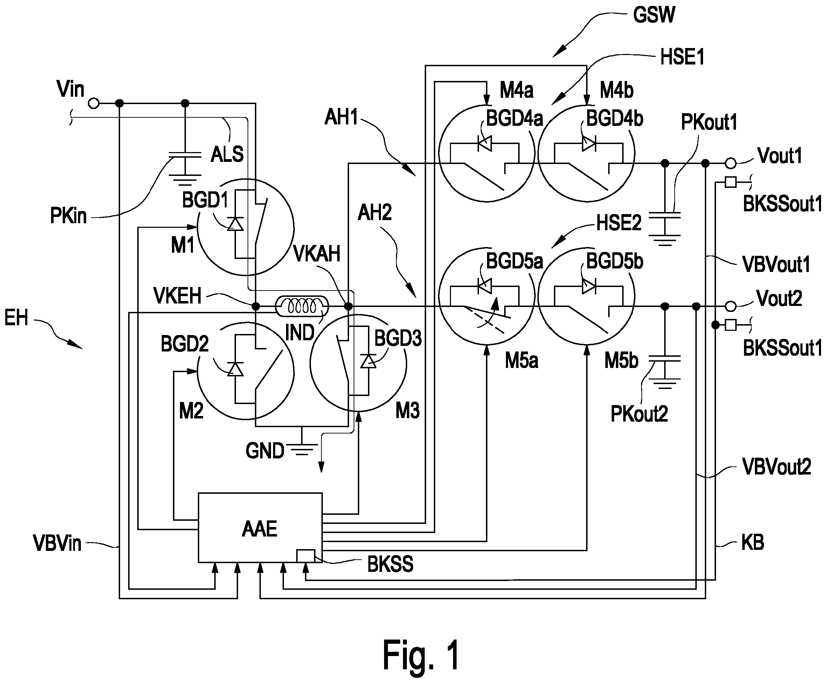

Fig. 1 zeigt schematisch den grundsätzlichen Aufbau eines ersten Ausführungsbeispiels eines erfindungsgemäßen Gleichspannungswandlers, der in diesem Fall als Buck-Boost-Konverter ausgebildet ist. Der Gleichspannungswandler GSW weist in bekannter Weise eine Eingangshalbbrücke EH mit einem elektronischen Highside-Schalter M1 und einem elektronischen Lowside-Schalter M2 auf. Beide Schalter weisen in bekannter Weise jeweils eine Backgate-Diode BGD1 bzw. BGD2 auf. Die Backgate-Dioden BGD1 und BGD2 sind in gleicher Ausrichtung geschaltet, wobei die Anode der Backgate-Diode BGD2 mit dem Bezugspotential GND verbunden ist und ihre Kathode mit dem Verbindungsknoten VKEH der Eingangshalbbrücke verbunden ist.

Der Gleichspannungswandler GSW weist ausgangsseitig mindestens zwei Ausgangshalbbrücken AH1 und AH2 auf, die jeweils eine Highside-Schaltereinheit HSE1 bzw. HSE2 und einen gemeinsamen elektronischen Schalter als Lowside-Schalter M3 aufweisen. Der Lowside-Schalter M3 ist zwischen dem Bezugspotential GND und einem Verbindungsknoten VKAH der Ausgangshalbbrücken AH1 und AH2 geschaltet. An dem Verbindungsknoten VKAH sind die Highside-Schaltereinheiten HSE1 und HSE2 miteinander verbunden.

Zwischen den Verbindungsknoten VKEH und VKAH der Eingangshalbbrücke EH und der beiden Ausgangshalbbrücken AH1 und AH2 befindet sich ein Induktor IND, d.h. ein induktiver Energiespeicher, der in diesem Ausführungsbeispiel als Spule ausgebildet ist.

Jede der Highside-Schaltereinheiten HSE1 und HSE2 weist zwei elektronische Highside-Schalter M4a, M4b bzw. M5a, M5b auf. Auch diese Highside-Schalter sind jeweils mit einer Backgate-Diode BGD4a, BGD4b bzw. BGD5a, BGD5b versehen. Die beiden Schalter jeder Highside-Schaltereinheit HSE1 und HSE2 sind jeweils derart verschaltet, dass ihre Backgate-Dioden antiseriell geschaltet sind. In diesem Ausführungsbeispiel sind die Anoden der jeweils antiseriell geschalteten Backgate-Dioden miteinander verbunden. Bei Ausbildung der elektronischen Schalter als MOS-Transistoren ergibt sich somit eine Common-Source-Schaltungsanordnung.

An der Eingangshalbbrücke EH liegt an dessen Eingangsspannungsanschluss Vin die Eingangsspannung an, während an den Highside-Schaltereinheiten der beiden Ausgangshalbbrücken AH1, AH2 die Ausgangsspannungsanschlüsse Vout1, Vout2 vorgesehen sind. Sämtliche zuvor genannten Anschlüsse des Gleichspannungswandlers GSW können mit Pufferkondensatoren Pkin, Pkout1 und Pkout2 versehen sein.

Gesteuert werden die elektronischen Schalter des Gleichspannungswandlers GSW durch eine Auswerte- und Ansteuereinheit AAE, bei der es sich typischerweise um eine ECU mit beispielsweise Mikrocontroller und zugehöriger Hardware wie I/O-Ports, CPU, ROM bzw. RAM usw. handelt. Die Auswerte- und Ansteuereinheit AAE empfängt über die Verbindungsleitungen VBVin, VBVout1 und VBVout2 Signale von den Eingangs- und Ausgangsspannungsanschlüssen Vin, Vout1 und Vout2 und erhält während des Betriebs des Betriebs des Gleichspannungswandlers GSW somit Informationen über die aktuellen Ist-Ausgangsspannungen. Über einen Kommunikationsbus KB zwischen einer Buskommunikationsschnittstelle BKSS der Ansteuer- und Auswerteeinheit AAE und den Buskommunikationsschnittstellen BKSSout1 und BKSSout2 senden an die Ausgangsanschlüsse Vout1 und Vout2 angeschlossene Verbraucher Daten an die Ansteuer- und Auswerteeinheit AAE über die Größe der Soll-Ausgangsspannungen, die für den Betrieb der Verbraucher zur Verfügung gestellt werden müssen.

Der Gleichspannungswandler GSW versorgt aus einer einzigen Energiequelle, nämlich aus der Eingangsspannung bzw. aus dem Induktor IND die mindestens zwei Ausgangsanschlüsse Vout1 und Vout2 mit Ausgangsspannungen unterschiedlicher Größe. Dabei spielt es keine Rolle, welcher der beiden Ausgangsanschlüsse Vout1, Vout2 die größere Ausgangsspannung benötigt. Im hier dargestellten Beispiel der Fig. 1 sei angenommen, dass am zweiten Ausgangsanschluss Vout2 eine Soll-Ausgangsspannung von beispielhaft 10 V anliegen soll, während am ersten Ausgangsanschluss Vout1 eine Soll-Ausgangsspannung von 5 V anliegen soll.

Wie bei Gleichspannungswandlern üblich, arbeitet auch der Gleichspannungswandler GSW getaktet, wobei jedoch die Besonderheit darin besteht, dass pro Takt- bzw. Ansteuerzyklus jeweils einer der beiden Ausgangsanschlüsse Vout1 oder Vout2 mit elektrischer Energie versorgt wird. Dabei ergibt sich die weitere Besonderheit, dass dafür gesorgt werden muss, dass es nicht zu Querströmen zwischen den beiden Ausgangsanschlüssen kommt. Im hier betrachteten Fall muss also verhindert werden, dass Strom vom zweiten Ausgangsanschluss Vout2 über die zweite Highside-Schaltereinheit HSE2, den Verbindungsknoten VKAH und die erste Highside-Schaltereinheit HSE1 zum ersten Ausgangsanschluss Vout1 fließt, und zwar in allen drei möglichen Betriebssituationen, nämlich dass der erste Ausgangsanschluss Vout1 mit elektrischer Energie versorgt werden muss, dass Vout2 mit elektrischer Energie versorgt werden muss oder dass keiner der beiden Ausgangsanschüsse mit elektrischer Energie versorgt werden muss (Free Wheeling).

In den Fign. 1 bis 6 sind die Schaltzustände der einzelnen elektronischen Schalter in den einzelnen Phasen eines Ansteuerzyklus für den Fall gezeigt, dass der zweite Ausgangsanschluss Vout2 mit Energie versorgt werden soll, weil beispielsweise die Ist-Ausgangsspannung am ersten Ausgangsanschluss Vout1 aktuell größer ist als die geforderte Soll-Ausgangsspannung, am zweiten Ausgangsanschluss Vout2 aber aktuell eine Ist-Ausgangsspannung anliegt, die kleiner ist als die verlangte Soll-Ausgangsspannung.

Zunächst wird, wie bei einem Gleichspannungswandler typisch, in einer Aufladephase (Fig. 1) der Induktor IND über den Highside-Schalter M1 der Eingangshalbbrücke EH und den Lowside-Schalter M3 der Ausgangshalbbrücken AH1, AH2 mit elektrischer Energie aufgeladen. Diese beiden zuvor genannten Schalter sind also geschlossen, während der Lowside-Schalter M2 der Eingangshalbbrücke EH geöffnet ist. In dieser Phase fließt der Aufladestrom ALS, wie in Fig. 1 gezeigt. Ausgangsseitig sind die elektronischen Schalter der beiden Highside-Schaltereinheiten HSE1 und HSE2 geöffnet. Die Backgate-Diode BGD5b des Highside-Schalters M5b verhindert einen Stromfluss vom zweiten Ausgangsanschluss Vout2 zum ersten Ausgangsanschluss Vout1 (die Ausgangsspannung an Vout2 ist größer als die an Vout1, wie oben angenommen).

In der Aufladephase wird nun untersucht, welcher Ausgangsanschluss in der Entladephase des aktuellen Ansteuerzyklus mit elektrischer Energie versorgt werden soll. Wie bereits oben erwähnt, wird angenommen, dass der zweite Ausgangsanschluss Vout2 mit elektrischer Energie versorgt werden muss. Daher wird bereits während der Aufladephase der Highside-Schalter M5a (Select-Schalter) der zweiten Highside-Schaltereinheit HSE2 geschlossen, um nämlich für das Totzeitintervall in der sich an die Aufladephase anschließenden ersten Umschaltphase die zweite Highside-Schaltereinheit HSE2 schon darauf vorzubereiten, dass die Backgate-Diode BGD5b des Highside-Schalters M5b nach Öffnung des Lowside-Schalters M3 den weiterfließenden Strom des Induktors IND zum zweiten Ausgangsanschluss Vout2 leitet.

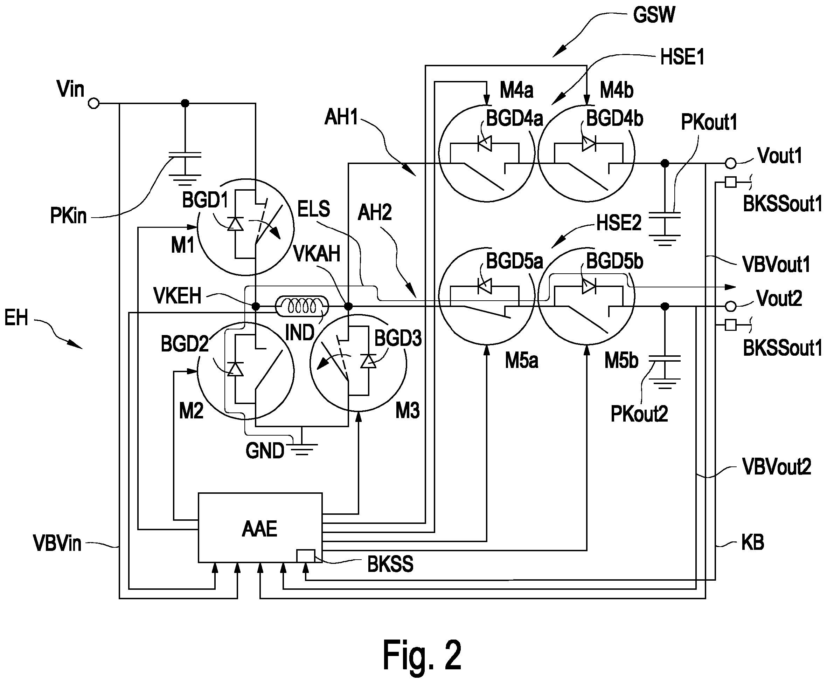

Die Situation in der ersten Umschaltphase ist in Fig. 2 gezeigt. Zunächst wird der Lowside-Schalter M3 geöffnet. Gleichzeitig dazu wird auch der Highside-Schalter M1 der Eingangshalbbrücke geöffnet. Der Strom aus dem Induktor IND fließt nun als Entladestrom ELS über die zweite Highside-Schaltereinheit HSE2 zum zweiten Ausgangsanschluss Vout2.

Sofern in Fig. 2 und in den weiteren Figuren Schalter mit gestrichelt und mit durchgezogener Linie symbolisierten Zuständen gezeigt sind, bezieht sich der gestrichelt gezeigte Zustand auf denjenigen, der in der betreffenden Phase des Ansteuerzyklus verlassen wird, um den mit durchgezogener Linie gekennzeichneten Schalter-Zustand einzunehmen.

Nach dem bei Schaltwandlern typischen und zu beachtenden Umschaltszenario, wonach durch das Schließen der Schalter Kurzschlussströme dadurch verhindert werden, dass der zu schließende Schalter erst dann geschlossen wird, wenn der zu öffnende Schalter geöffnet ist ("break before make", d.h. zunächst die Verbindung unterbrechen, bevor sie dann wieder geschlossen wird), ist in dem sich an das Öffnen des Lowside-Schalters M3 anschließende Totzeitintervall der Highside-Schalter M5b zunächst noch geöffnet (siehe Fig. 2), weshalb der Strom über die Backgate-Diode BGD5b und damit hinsichtlich seiner Größe begrenzt fließt. Diesen Zustand sollte man so kurz wie möglich halten, da nämlich die Verlustleistung im Highside-Schalter M5b ansonsten stark ansteigen würde.

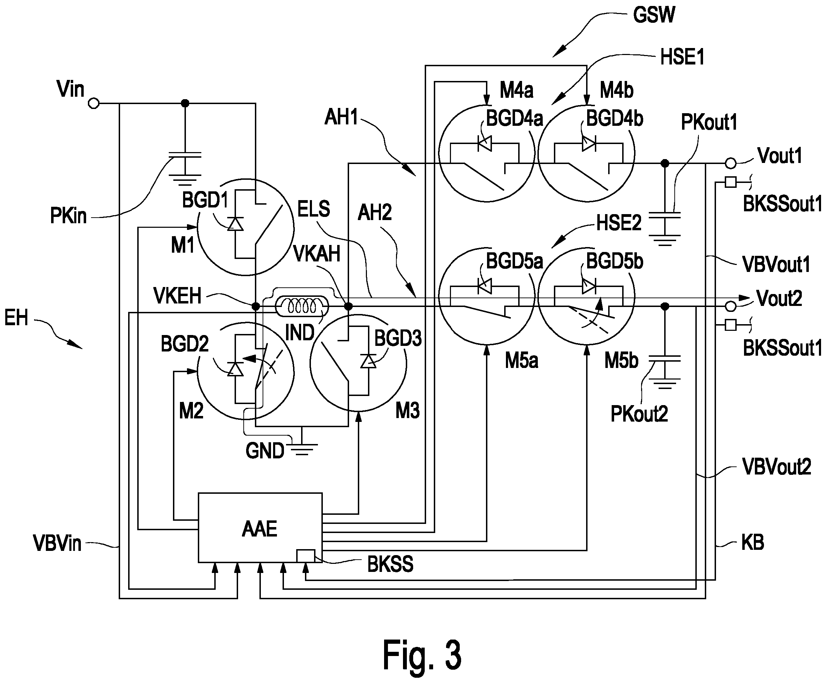

Deshalb wird während des Totzeitintervalls der Highside-Schalter M5b geschlossen (siehe Fig. 3), womit die Entladephase eingeleitet wird (siehe Fig. 3).

Während des Totzeitintervalls (siehe Fig. 3) und damit ab dem Öffnen des Lowside-Schalters M3 fließt der Entladestrom ELS auch über die Backgate-Diode BGD2 des Lowside-Schalters M2 der Eingangshalbbrücke EH. Dieser Schalter wird nun im ersten Totzeitintervall ebenso geschlossen (siehe Fig. 3), so dass er zu Beginn der Entladephase (siehe Fig. 3) geschlossen ist, womit nun die Verlustleistungen in den beiden Schaltern M2 und M5b wegen des Leitend-Zustandes beider Schalter auf ein Minimum reduziert sind.

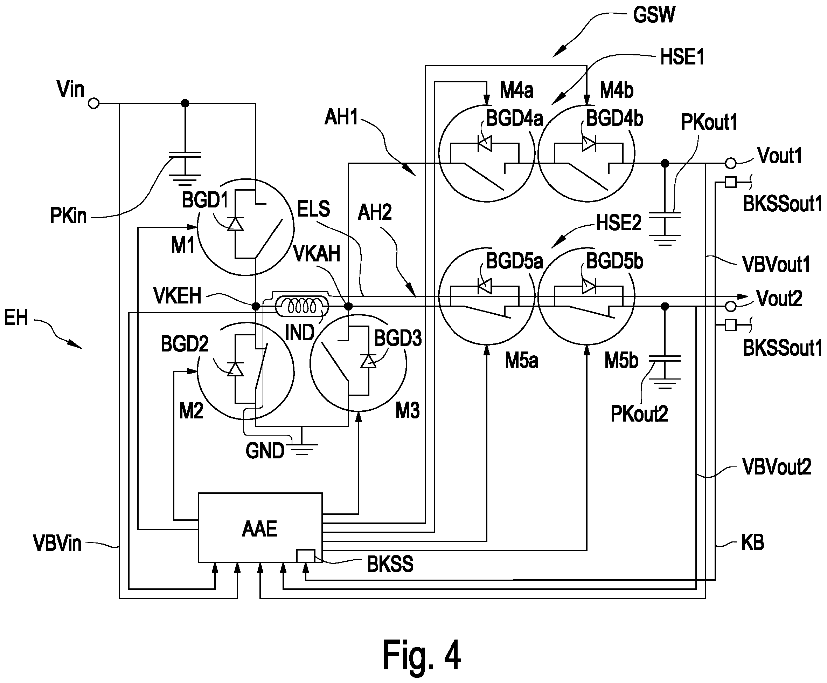

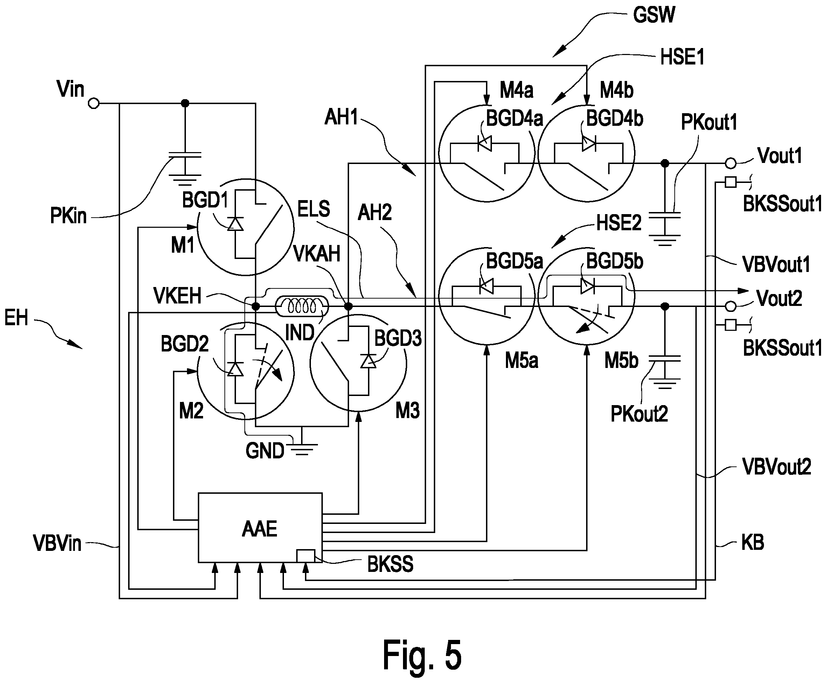

Gegen Ende der in Fig. 4 gezeigten Aufladephase schließt sich wiederum eine Umschaltphase, nämlich die zweite Umsatzphase an (siehe Fig. 5). Auch hier muss wieder darauf geachtet werden, dass die elektrische Verbindung zwischen dem zweiten Ausgangsanschluss Vout2 und dem Bezugspotential GND, an dem der Lowside-Schalter M2 der Eingangshalbbrücke EH anliegt, unterbrochen wird, bevor die elektrische Verbindung zwischen dem Eingangseinschluss Vin der Eingangshalbbrücke EH und dem Bezugspotential GND über die elektronischen Schalter M1 und M3 geschlossen wird.

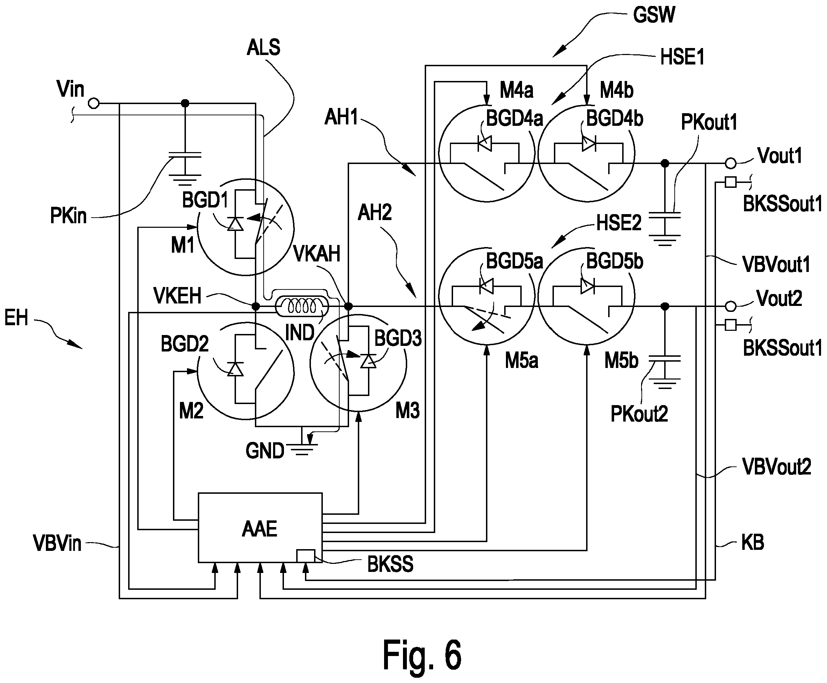

Daher werden zunächst der Highside-Schalter M5b der zweiten Highside-Schaltereinheit HSE2 und der Lowside-Schalter M2 der Eingangshalbbrücke EH geöffnet, wobei nun wieder für ein Totzeitintervall der Entladestrom EAS über die Backgate-Dioden BGD5b und BGD2 dieser beiden Schalter weiter fließt. Nun werden der Highside-Schalter M1 der Eingangshalbbrücke EH und der Lowside-Schalter M3 der Ausgangshalbbrücken AH1 und AH2 geschlossen (siehe Fig. 6), so dass nun wieder der Aufladestrom ALS vom Eingangsanschluss Vin über die beiden besagten Schalter zum Bezugspotential GND fließen kann.

Zum Ende der zweiten Umschaltphase (siehe Fig. 6) könnte bereits untersucht werden, welcher der beiden Ausgangsanschlüsse Vout1, Vout2 in der Entladephase des nächsten Ansteuerzyklus mit elektrischer Energie zu versorgen ist.

Sollte es so sein, dass auch beim nächsten Ansteuerzyklus in dessen Entladephase wiederum der zweite Ausgangsanschluss Vout2 mit elektrischer Energie zu versorgen ist, so könnte der Highside-Schalter M5a der zweiten Highside-Schaltereinheit HSE2 geschlossen bleiben. Das Ansteuerszenario kann aber auch so gewählt werden, dass grundsätzlich gegen Ende bzw. in der Entladephase der Select-Schalter, nämlich in diesem Fall der Highside-Schalter M5a, der in der Aufladephase geschlossen wurde, grundsätzlich wieder geöffnet wird, weil nämlich die Entscheidung, welcher der beiden Select-Schalter M4a, M5a für einen anstehenden Ladevorgang eines der beiden Ausgangsanschlüsse geschlossen werden muss, stets in der Aufladephase eines Ansteuerzyklus getroffen wird.

Im hier zu betrachtenden Fall wird in der zweiten Umschaltphase der Select-Schalter M5a wieder geöffnet, da angenommen wird, dass bereits feststeht, dass in der Entladephase des nächsten Ansteuerzyklus der erste Ausgangsanschluss Vout1 mit elektrischer Energie zu versorgen ist.

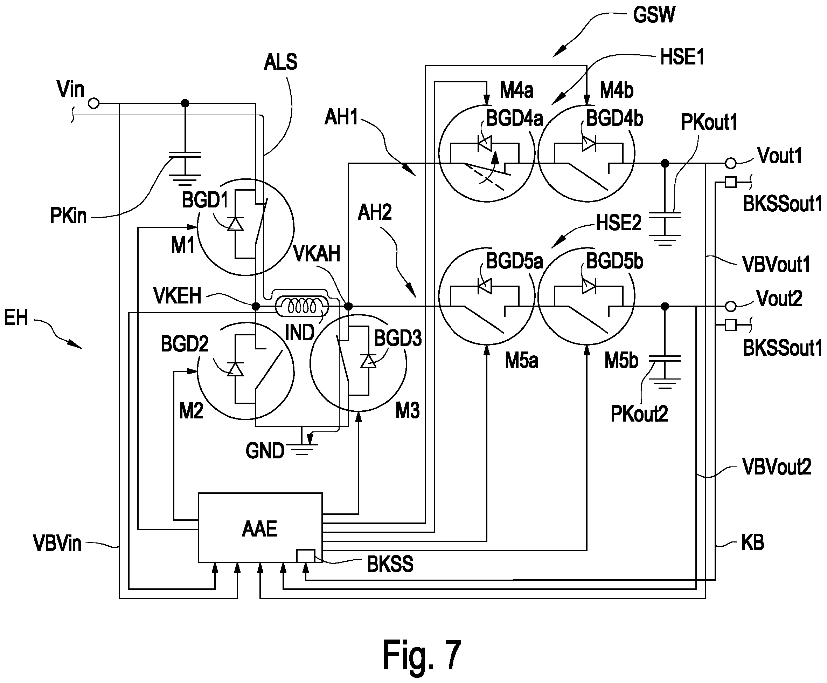

Die Situation in der Aufladephase des nächsten Ansteuerzyklus ist in Fig. 7 gezeigt. Sie unterscheidet sich insofern von der Situation gemäß Fig. 1, als nun der Select-Schalter M4a geschlossen wird, weil nämlich im Totzeitintervall der ersten Umschaltphase und in der Entladephase des nächsten Ansteuerzyklus der Strom aus dem Induktor IND zum ersten Ausgangsanschluss Vout1 fließen soll.

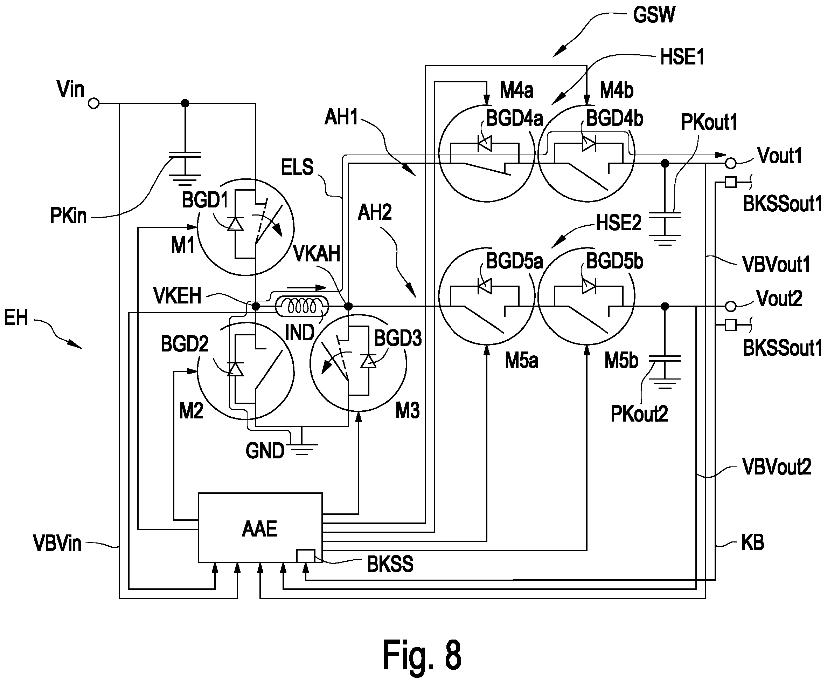

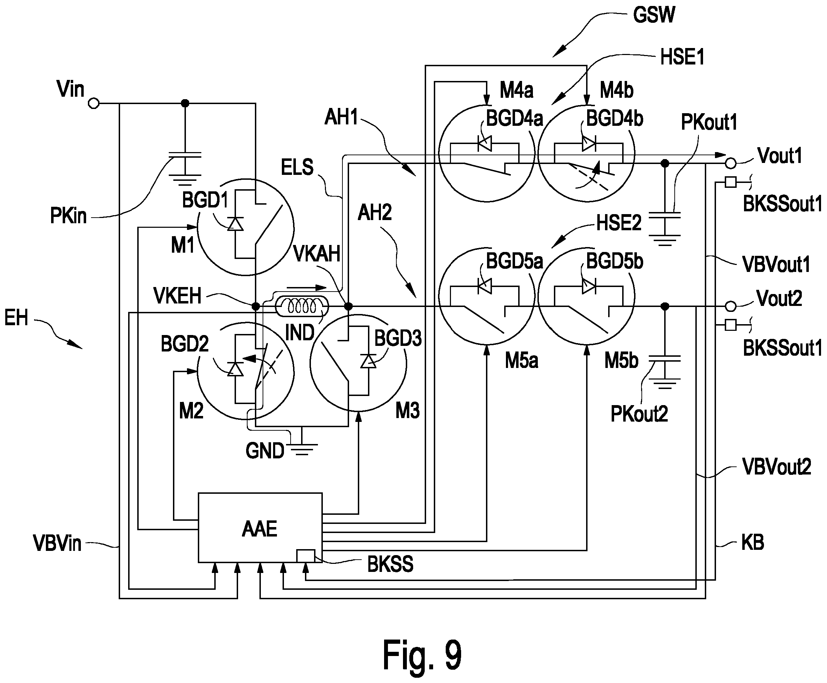

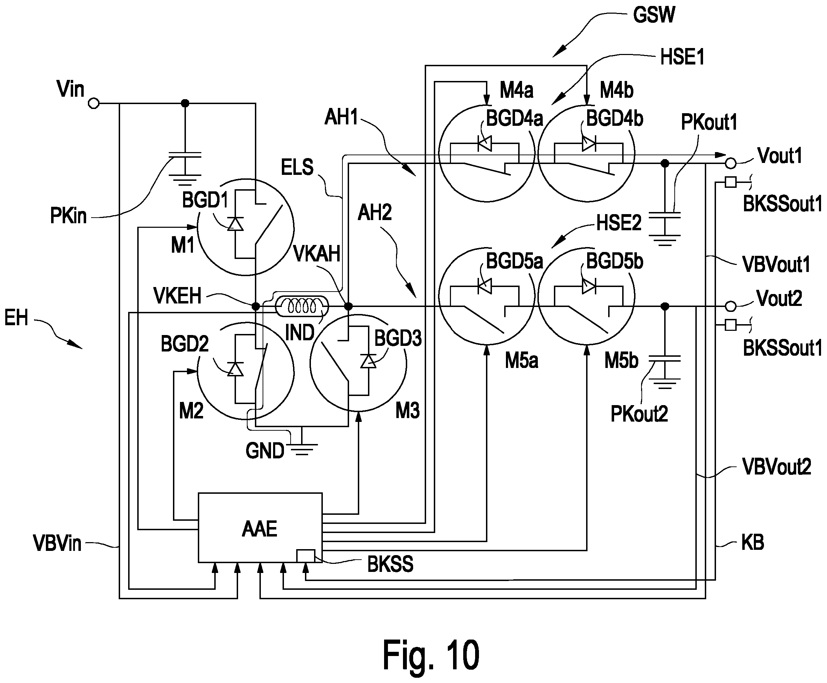

Die Fig. 8 zeigt die Umschaltphase, in der zunächst der Highside-Schalter M1 der Eingangshalbbrücke EH und der Lowside-Schalter M3 der Ausgangshalbbrücken geöffnet werden, während der Highside-Schalter M4b der Highside-Schaltereinheit HSE1 und der Lowside-Schalter M2 der Eingangshalbbrücke EH noch geöffnet sind ("break before make", d.h. zunächst die Verbindung zu unterbrechen, bevor sie dann wieder geschlossen wird). Fig. 8 zeigt die Situation während des ersten Totzeitintervalls. In diesem Intervall fließt der Entladestrom EAS wiederum über die Backgate-Dioden BGD2 und BGD4b der Lowside- und Highside-Schalter M2 bzw. M4b, bis diese Schalter selbst geschlossen sind (siehe Fig. 9), was gleichbedeutend ist mit dem Beginn der Entladephase (siehe Fig. 10).

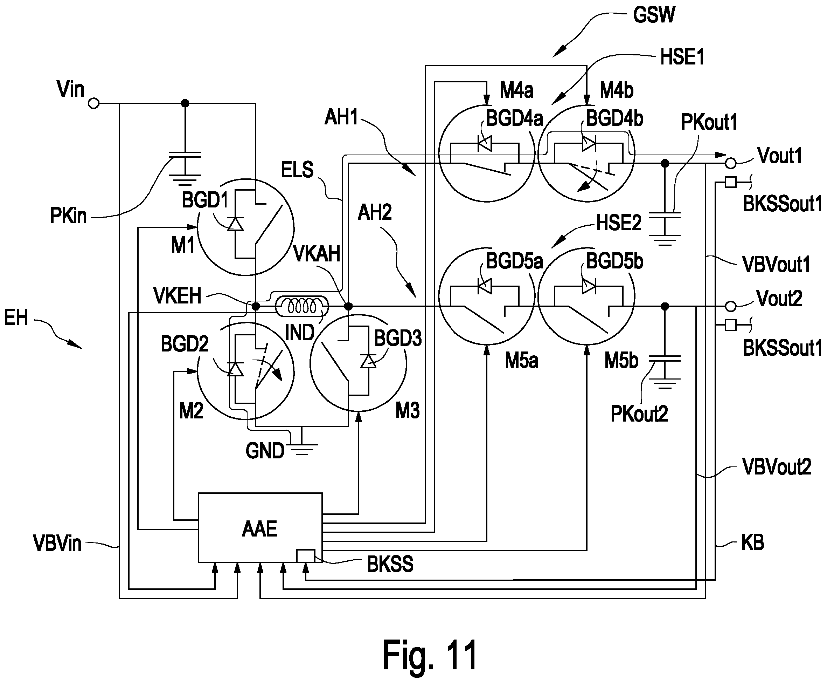

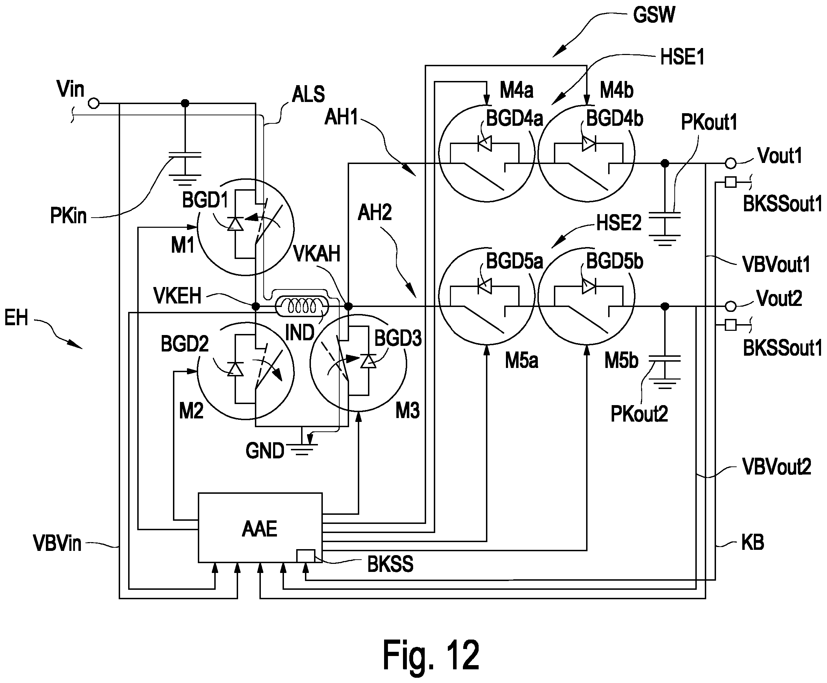

An die Entladephase (siehe Fig. 11) schließt sich wiederum die nächste Umschaltphase an, in der der Highside-Schalter M4b und der Lowside-Schalter M2 vorzugsweise gleichzeitig geöffnet werden, womit für das sich anschließende zweite Totzeitintervall der Entladestrom wiederum über die Backgate-Dioden dieser beiden Schalter fließt, bis der Highside-Schalter M1 der Eingangshalbbrücke EH und der Lowside-Schalter M3 der Ausgangshalbbrücken geschlossen sind. Dadurch ergibt sich die Situation gemäß Fig. 12. In dieser Figur ist wiederum angedeutet, dass nun bereits der Select-Schalter M4a grundsätzlich wieder geöffnet wird, und zwar unabhängig davon, ob eventuell in der Entladephase des nächsten Ansteuerzyklus es wiederum der erste Ausgangsanschluss Vout1 sein wird, der mit elektrischer Energie zu versorgen ist. Hier wird deutlich, dass es von Vorteil ist, dass die Entscheidung, welcher Select-Schalter im nächsten Ansteuerzyklus geschlossen und welcher geöffnet sein muss, gegen Ende der zweiten Umschaltphase getroffen werden sollte.

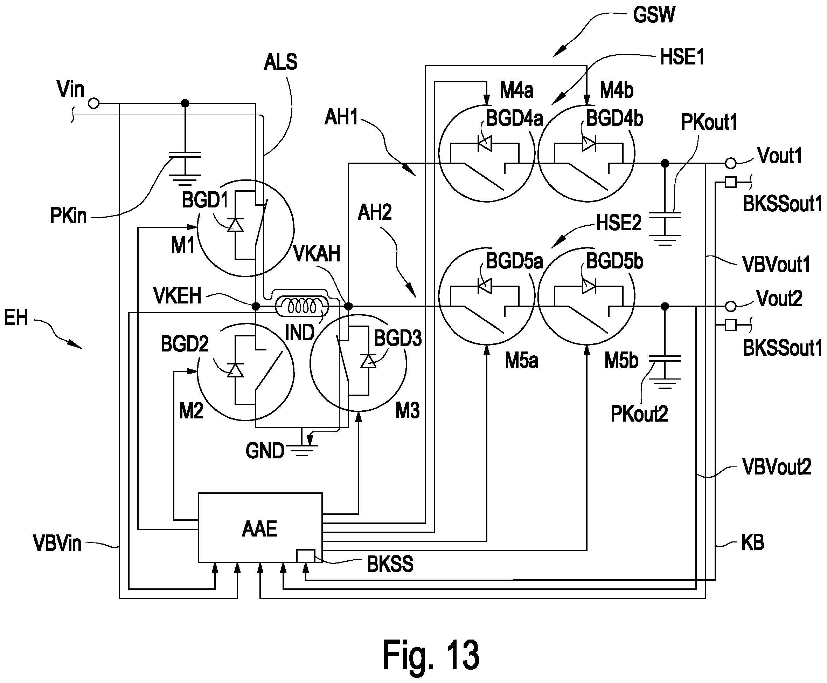

Anhand der Fign. 13 bis 16 soll kurz auf den Fall eingegangen werden, dass in der Entladephase eines Ansteuerzyklus keiner der Ausgangsanschlüsse Vout1, Vout2 mit elektrischer Energie versorgt werden muss, weil nämlich die Ist-Ausgangsspannungen an beiden Ausgangsanschlüssen größer sind als die jeweils geforderte Soll-Ausgangsspannung. In diesem Fall kommt es zum sogenannten "Free Wheeling".

In der Aufladephase eines derartigen Ansteuerzyklus stellt sich zunächst die Situation gemäß Fig. 13 ein. Keiner der beiden Select-Schalter M4a, M5a wird in dieser Aufladephase geschlossen.

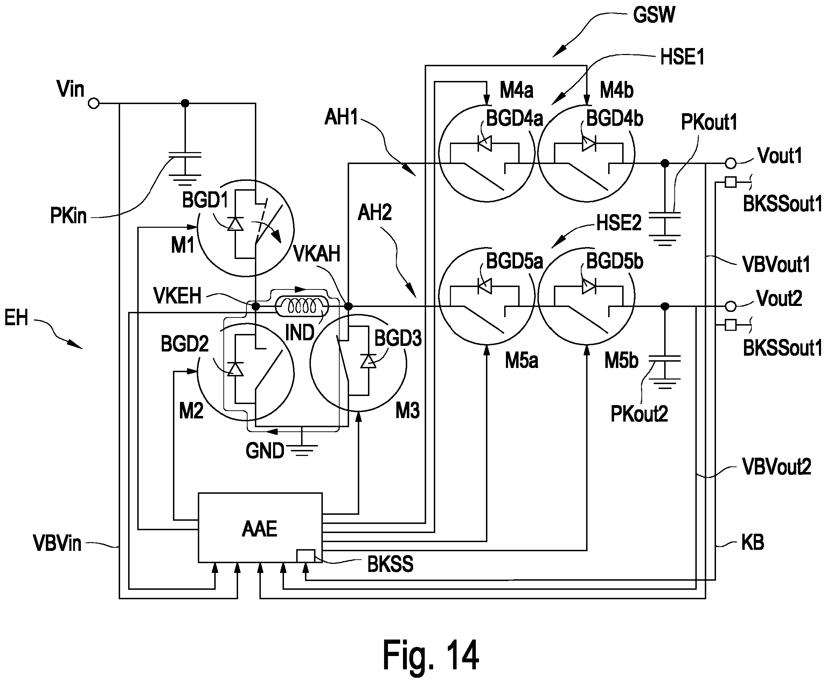

Gegen Ende der Aufladephase, also in der sich anschließenden ersten Umschaltphase (siehe Fig. 14) wird nun der Highside-Schalter M1 der Eingangshalbbrücke EH geöffnet, während der Lowside-Schalter M3 der Ausgangshalbbrücken geschlossen bleibt. Über die Backgate-Diode BGD2 des weiterhin geöffneten Lowside-Schalters M2 der Eingangshalbbrücke EH fließt nun der Induktorstrom weiter, und zwar sozusagen im durch die beiden Lowside-Schalter M2 und M3 und den Induktor IND gegebenen Kreis, wie in Fig. 14 gezeigt.

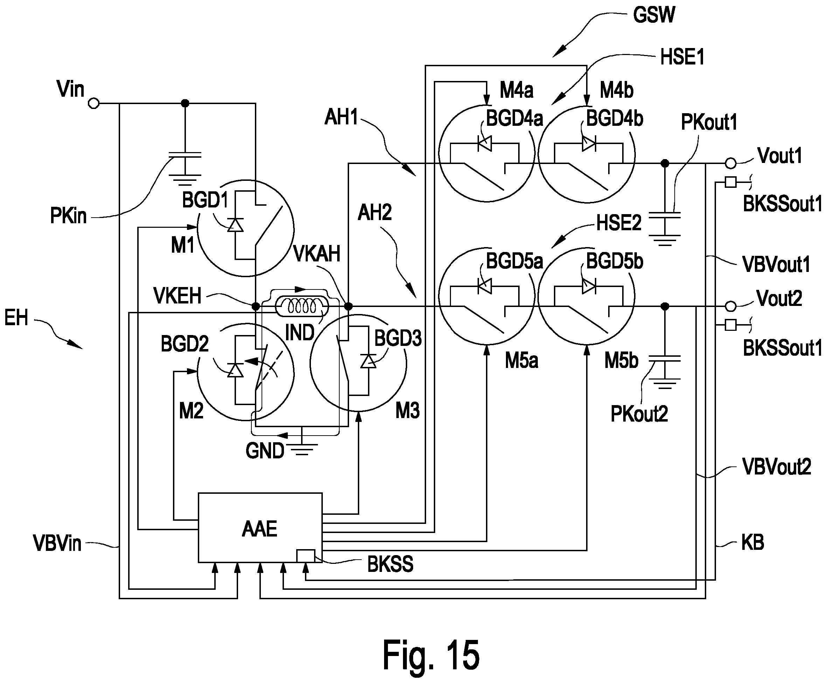

Anschließend, und zwar im Totzeitintervall (siehe Fig. 15) wird nun der Lowside-Schalter M2 der Eingangshalbbrücke EH geschlossen, so dass für die Entladephase die im Induktor IND gespeicherte Energie quasi erhalten bleibt.

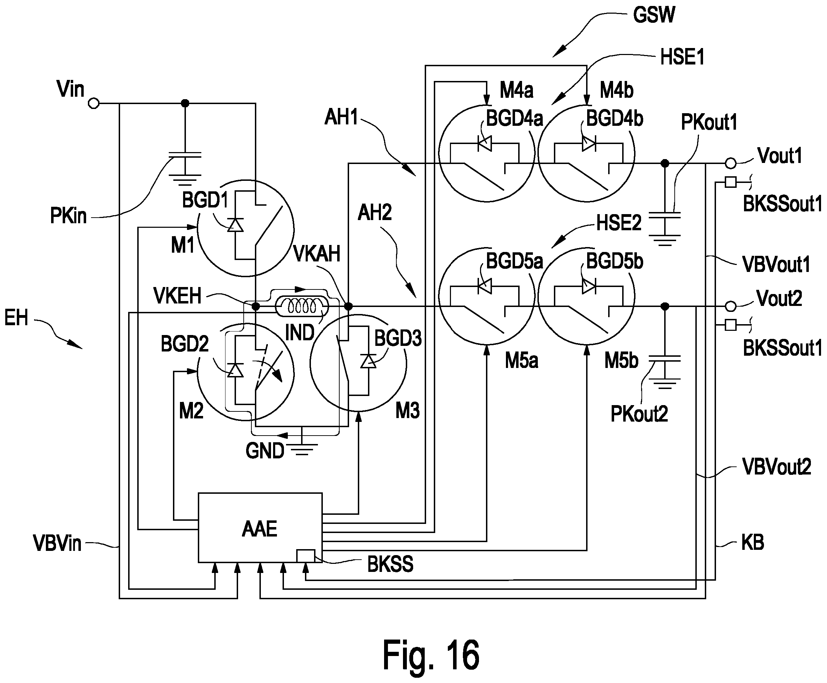

Dieser Vorgang wird mit Beginn der nächsten Umschaltphase (siehe Fig. 16) beendet. Es öffnet sich zunächst der Lowside-Schalter M2 der Eingangshalbbrücke EH, so dass der Strom des Induktors IND wiederum über dessen Backgate-Diode BGD2 fließt, bis der Highside-Schalter M1 der Eingangshalbbrücke EH wieder geschlossen wird, so dass sich wieder die Situation gemäß Fig. 13 einstellt.

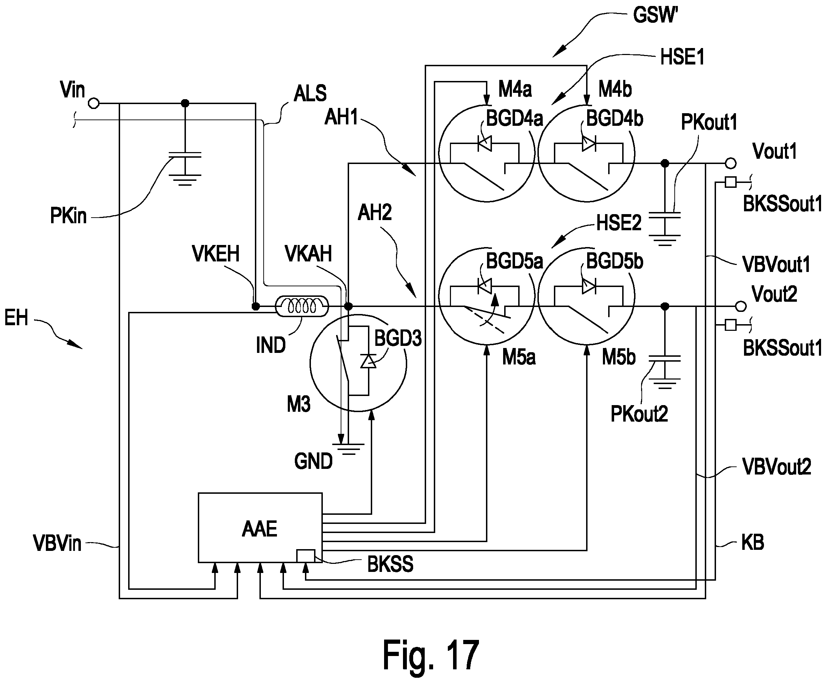

In den Fign. 17 bis 28 sind die verschiedenen Schalterstellungen der ausgangsseitigen Schalter eines alternativ ausgeführten Gleichspannungswandlers GSW' gezeigt, der als Boost-Konverter ausgebildet ist. Der Boost-Konverter weist sozusagen keine Eingangshalbbrücke auf; vielmehr liegt der Induktor IND direkt am Eingangsanschluss Vin.

Der Strom des Induktors IND wird also in der Aufladephase eines Ansteuerzyklus über den Lowside-Schalter M3 der Ausgangshalbbrücken geleitet, während er in der Entladephase eines Ansteuerzyklus zu einem der beiden Ausgangsanschlüsse Vout1, Vout2 umgeleitet wird.

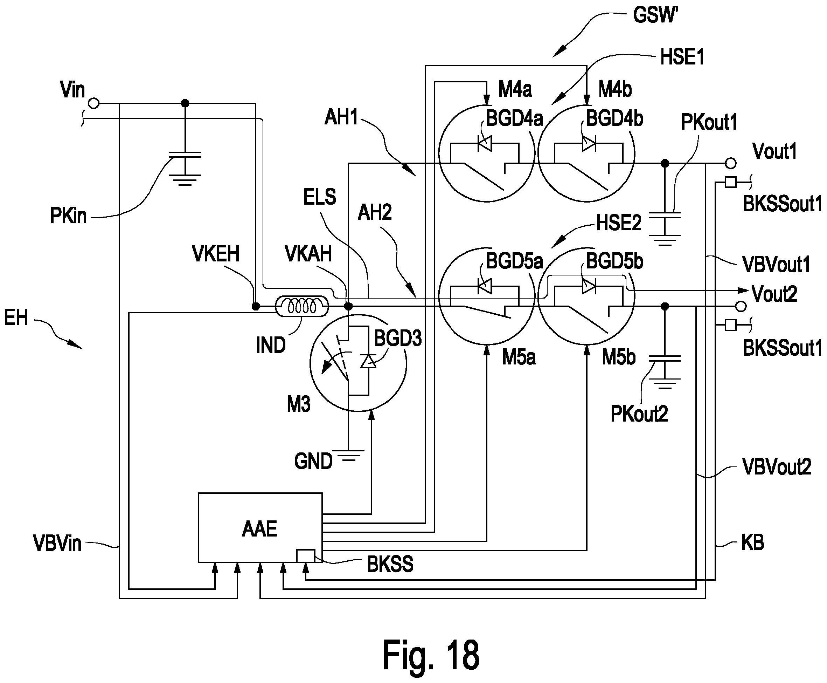

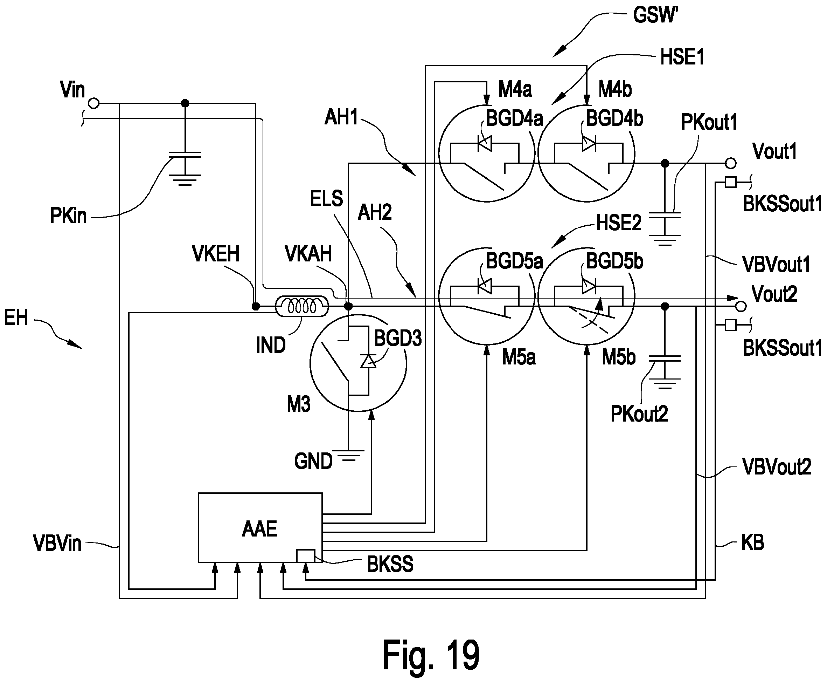

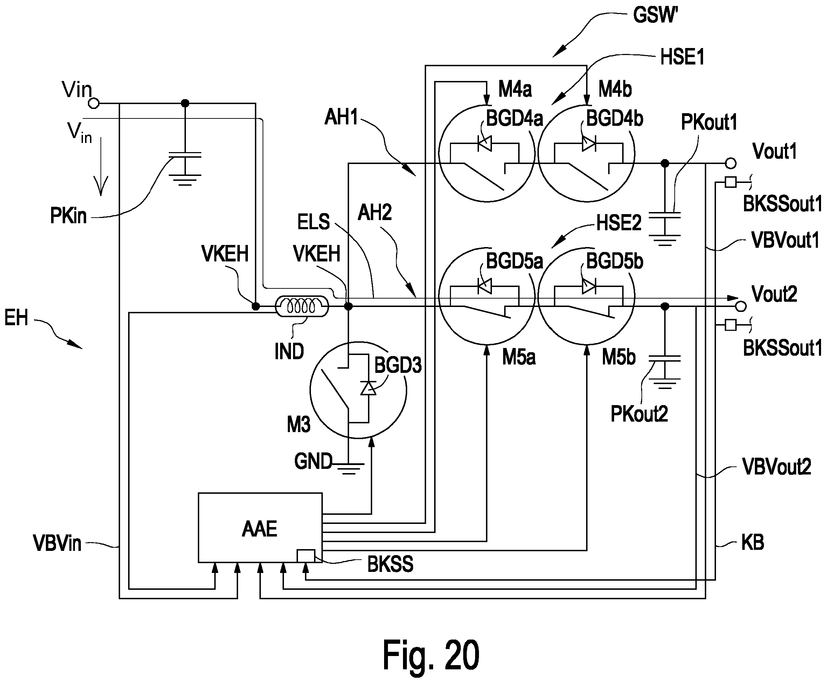

Die Fign. 17 bis 22 zeigen das Szenario für den Fall, dass in der Entladephase der zweite Ausgangsanschluss Vout 2 mit elektrischer Energie versorgt werden soll. Demzufolge wird in der Aufladephase (siehe Fig. 17) der Select-Schalter M5a geschlossen. Kommt es dann in der Umschaltphase (siehe Fig. 18) zum zunächst Öffnen des Lowside-Schalters M3, so fließt der Strom aus dem Induktor IND über den geschlossenen Select-Schalter M5a und die Backgate-Diode BGD5b des Highside-Schalters M5a der insoweit ausgewählten Highside-Schaltereinheit HSE2. Am Ende des Totzeitintervalls (siehe Fig. 19) wird nun der Highside-Schalter M5b der ausgewählten Highside-Schaltereinheit HSE2 geschlossen, so dass ab diesem Zeitpunkt und für die Dauer der sich anschließenden Entladephase der Entladestrom ELS über die geschlossenen Schalter der ausgewählten Highside-Schaltereinheit HSE2 fließt (Fig. 20).

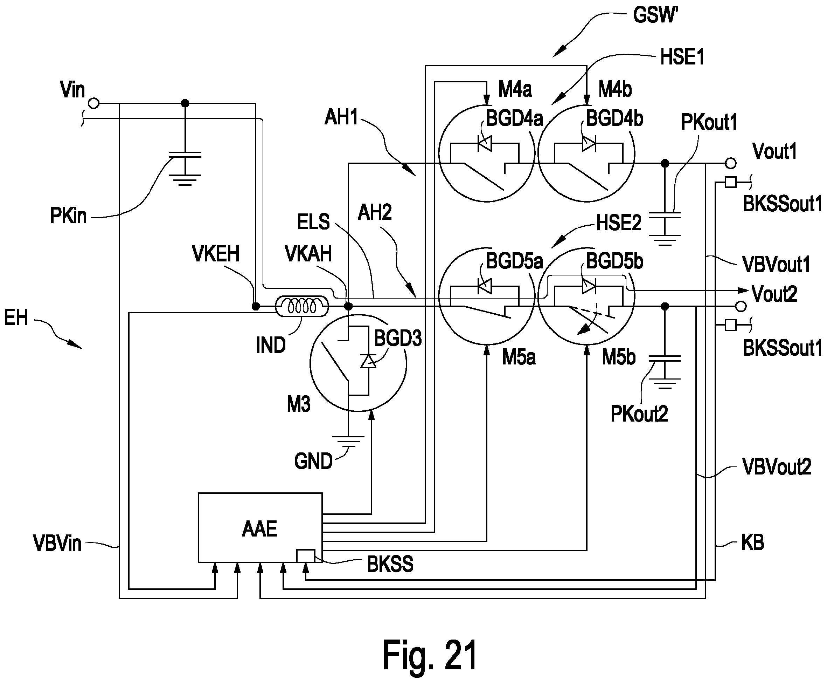

An die Entladephase schließt sich dann die zweite Umschaltphase an (siehe Fig. 21), in der zunächst der Highside-Schalter M5b der ausgewählten Highside-Schaltereinheit HSE2 geöffnet wird, mit der Folge, dass nun wiederum der Entladestrom ELS über dessen Backgate-Diode BGD5b fließt.

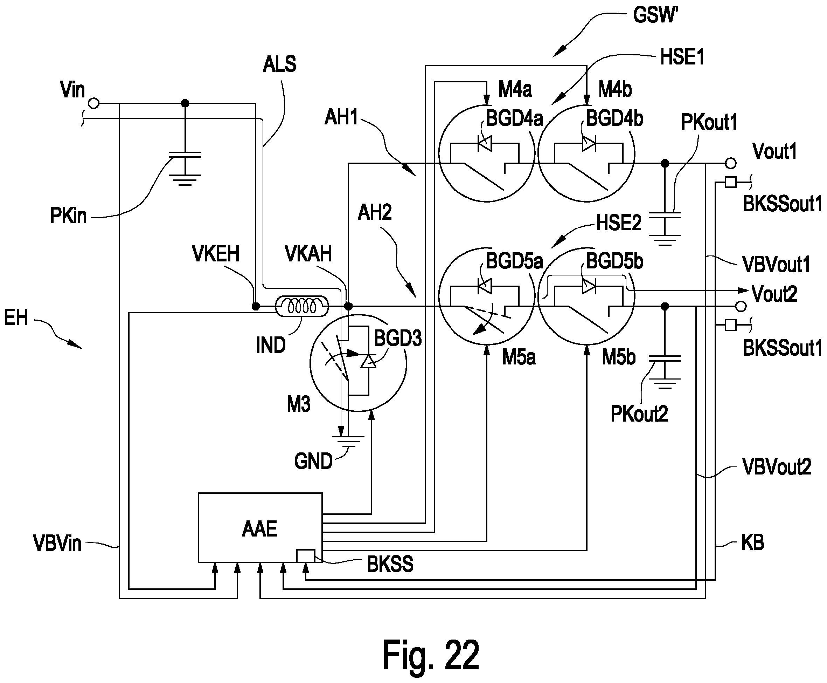

An diese Situation schließen sich dann die Schalterstellungen gemäß Fig. 22 an, indem nun der Lowside-Schalter M3 der Ausgangshalbbrücken geschlossen wird, mit der Folge, dass nun wiederum der (in diesem Fall) Aufladestrom ALS über den geschlossenen Lowside-Schalter M3 fließt und kein Strom mehr über die zuvor ausgewählte Highside-Schaltereinheit HSE2.

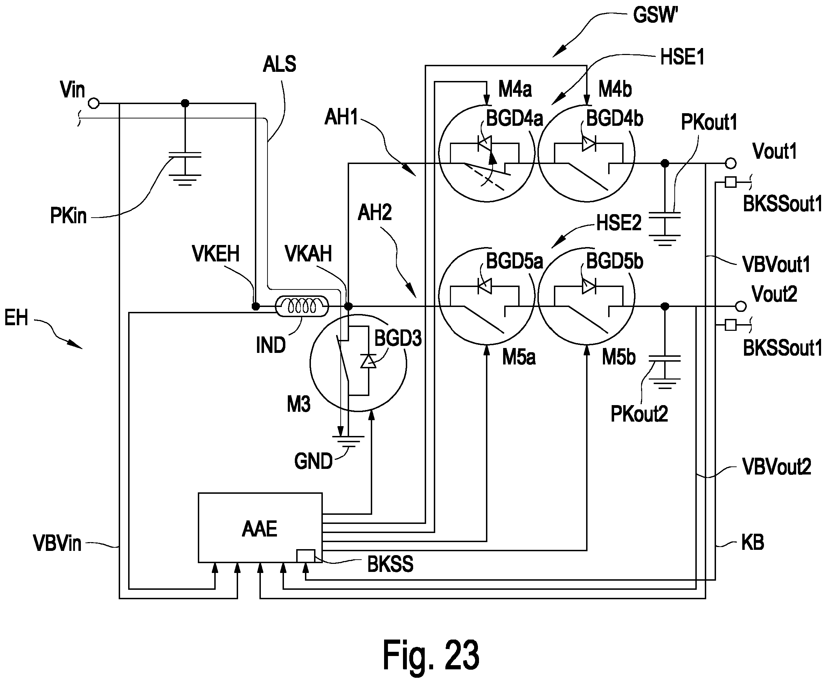

Die Fign. 23 bis 28 zeigen die entsprechende Situation für den Fall, dass in der Entladephase eines Ansteuerzyklus des Gleichspannungswandlers GSW' der erste Ausgangsanschluss Vout1 mit elektrischer Energie versorgt werden soll.

In der Aufladephase (Fig. 23) werden zunächst die Select-Schalter geöffnet bzw. geschlossen (Schalter M5a wird, wenn er nicht schon zum Ende der zweiten Umschaltphase geöffnet worden ist, nun wieder geöffnet, während der Select-Schalter M4a geschlossen wird).

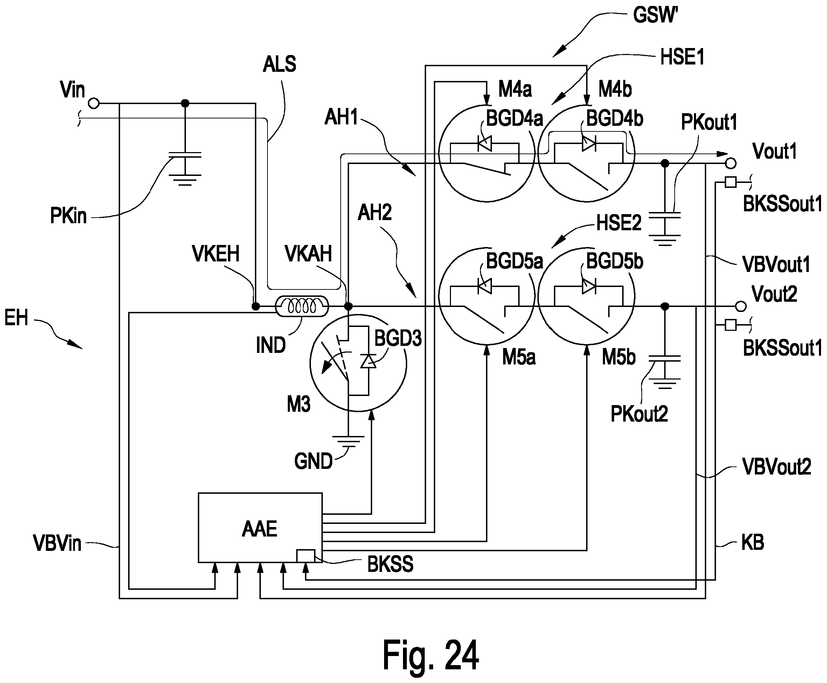

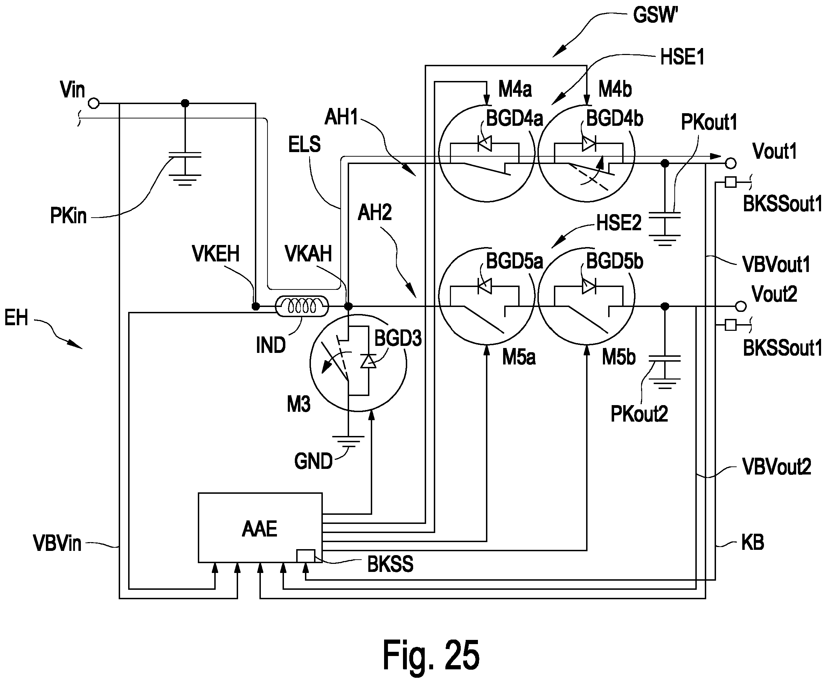

Gemäß Fig. 24 wird in der ersten Umschaltphase der Lowside-Schalter M3 geöffnet, so dass der Strom des Induktors IND als Entladestrom ELS über den geschlossenen Select-Schalter M4a und die Backgate-Diode BGD4b des noch geöffneten Highside-Schalters M4b der ausgewählten Highside-Schaltereinheit HSE1 fließt. Dieser Zustand bleibt für das Totzeitintervall beibehalten, an dessen Ende der Highside-Schalter M4b der ausgewählten Highside-Schaltereinheit HSE1 geschlossen ist (siehe Fig. 25).

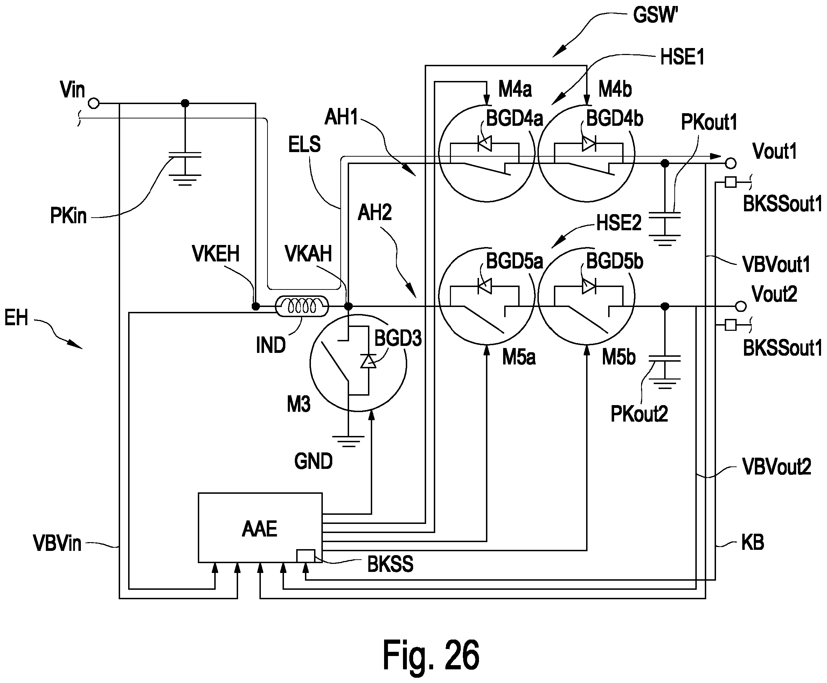

Es ergibt sich damit die Situation der Entladephase dieses Ansteuerzyklus (siehe Fig. 26).

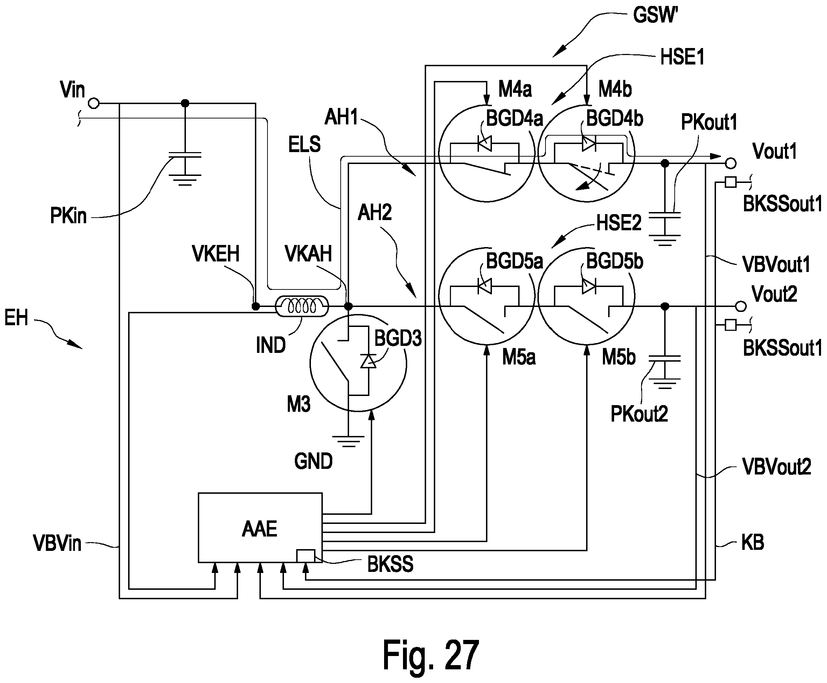

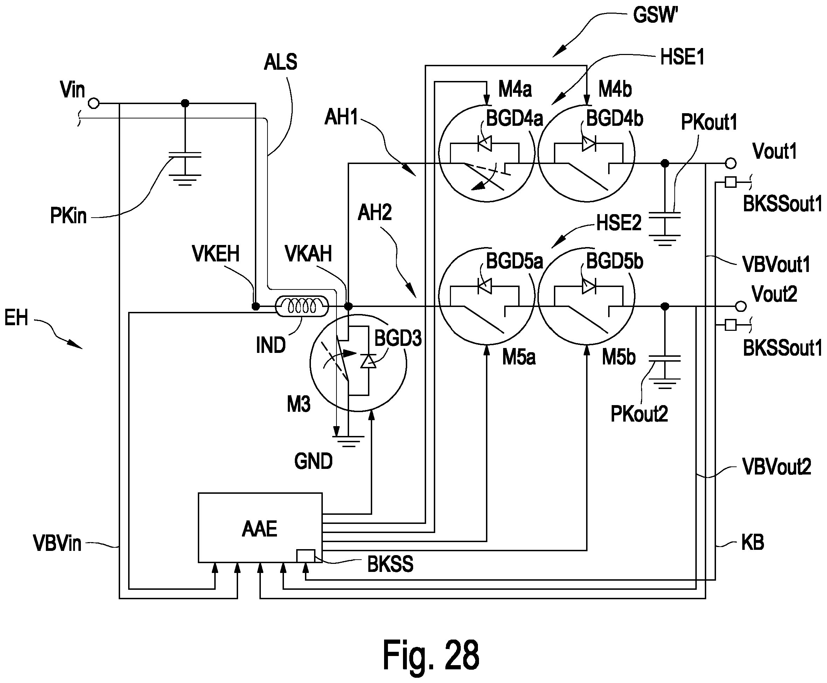

In den Fign. 27 und 28 sind wieder die Situationen gezeigt, die sich in der zweiten Umschaltphase und im zweiten Totzeitintervall ergeben. Bevor der Lowside-Schalter M3 geschlossen werden kann, muss zunächst der Highside-Schalter M4b der ausgewählten Highside-Schaltereinheit HSE1 geöffnet werden, mit der Folge, dass der Entladestrom ELS über dessen Backgate-Diode BGD4b abfließt. Erst danach kann der Lowside-Schalter M3 geschlossen werden (siehe Fig. 28), so dass nun wieder Aufladestrom ALS aus den von dem Eingangsanschluss Vin über den Induktor IND und den geschlossenen Lowside-Schalter M3 fließt.

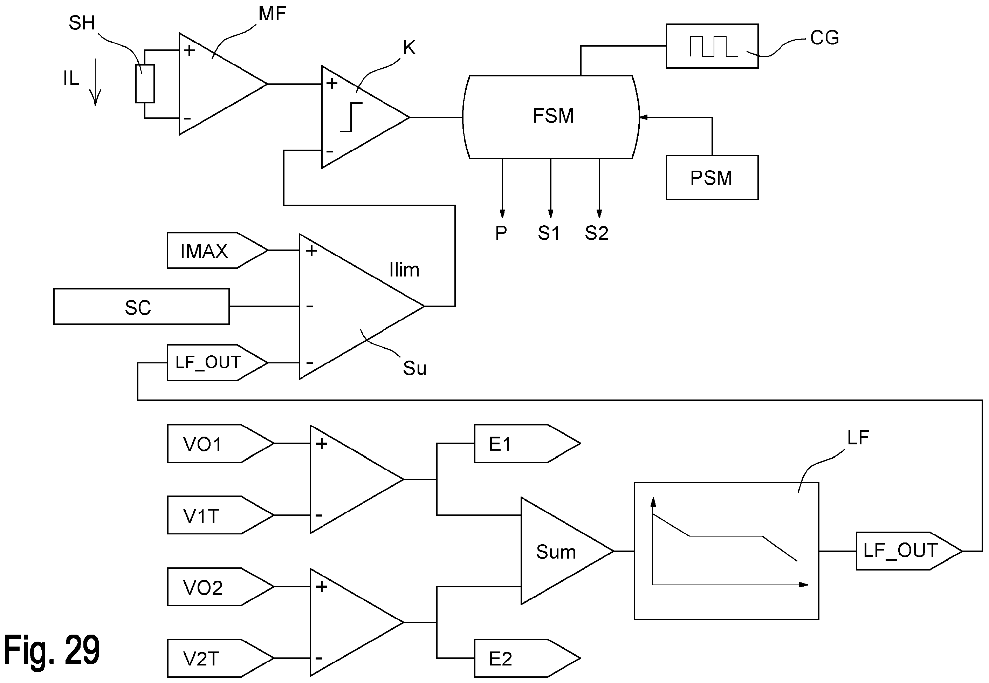

In Fig. 29 ist schematisch auf Blockschaltbildebene dargestellt, welche Komponenten die Auswerte- und Ansteuereinheit AAE aufweisen kann.

Mittels eines entsprechenden Messmittels in Form beispielsweise eines Shunts SH wird der Strom IL in der Induktivität gemessen. Der Ausgang eines dazu vorgesehenen Messverstärkers MV wird mit dem Eingang eines Komparators K verglichen. Am anderen Eingang des Komparators K liegt das Signal für den aktuell gültigen Grenzstrom Ilim des Induktors IND an. Dieses Signal ergibt sich als Differenz aus dem applikationsbedingten Maximalinduktorstrom Imax und einem Slope-Compensation-Wert SC. Bei der Slope-Compensation erhöht man die Rampensteilheit des Induktorstroms IL, indem man einen aus dem Systemtakt abgeleiteten Parameter als Rampe hinzufügt. Dazu wird die Stromanstiegsflanke um etwas mehr als die Hälfte des Betrags der Stromabwärtsflanke erhöht. Diese zur Verhinderung eines Aufschwingens vorgesehene Maßnahme ist grundsätzlich bekannt und soll hier nicht weiter ausgeführt werden.

Vom applikationsabhängig maximalen Induktorstrom Imax wird ferner ein Signal Lfout abgezogen. Diese Differenzbildung führt am Ausgang des Summierers SU zum Induktorgrenzstrom Ilim.

Das Ausgangssignal des Komparators K wird in diesem Ausführungsbeispiel einer Zustandsmaschine bzw. einem endlichen Automaten (Finite-State-Machine FSM) zugeführt. Übersteigt der Induktorstrom in einer Aufladephase den Grenzstrom Ilim so schaltet der Gleichspannungswandler von der Ladephase (unter Berücksichtigung der ersten Umschaltphase mit Totzeitintervall) in die Entladephase um. Seine Ausgangssignale steuern dementsprechend die elektronischen Schalter, wie zuvor beschrieben. Zu Beginn des nächsten Ansteuerzyklus T wird dann wieder von der Entladephase (unter Zwischenschaltung der zweiten Übergangsphase mit Totzeitintervall) auf die nächste Aufladephase umgeschaltet.

Die Zustandsmaschine FSM wird gesteuert von einem Taktgenerator CG und erhält über ein Port-Select-Modul PSM eine Information über die Bewertung des Entscheidungskriteriums, wonach entschieden wird, welcher der Ausgangsanschlüsse Vout1, Vout2 mit Ladung versorgt werden muss.

In Fig. 29 ist auch gezeigt, was Grundlage für das Filtersignal Lfout ist. Lfout ist das Ausgangssignal einer äußeren Regelschleife, das, wie zuvor anhand von Fig. 29 beschrieben, in die innere Regelschleife zur Bestimmung des Duty-Cycle eingeht, d.h. das Verhältnis aus der Dauer der Aufladephase P zur Dauer der Entladephase S mitbestimmt.

Die Arbeitsweise der äußeren Regelschleife ist kurz zusammengefasst wie folgt.

Der Grad der Abweichungen der Ist-Ausgangsspannungen V01 und V02 gegenüber ihren jeweiligen Soll-Ausgangsspannungen V1T und V2T wird bewertet.

Diese Aufweichungen bilden Fehlersignale E1 und E2, die vorzeichenberücksichtigt summiert werden im Summierer SUM. Das Ausgangssignal dieses Summierers SUM wird in einem Loop-Filter LF gefiltert und dessen Ausgangssignal bildet das Ausgangssignal Lfout. Das Loop-Filter LF ist beispielsweise als Integrator, also als Filter zweiter Ordnung ausgeführt.

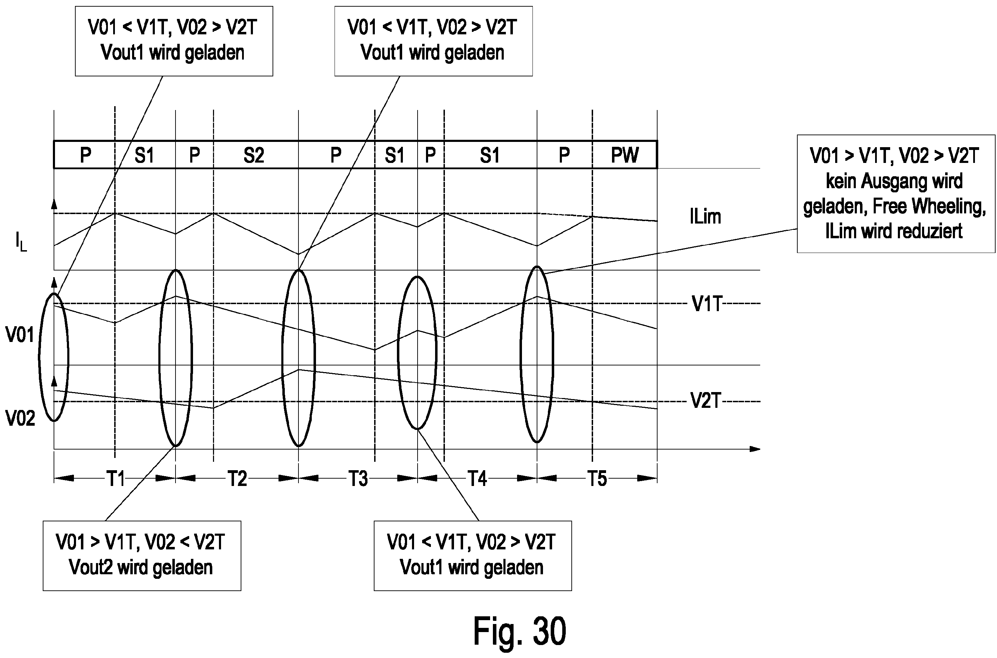

In Fig. 30 sind angenommene Beispiele für den Verlauf der Ist-Ausgangsspannungen V01 und V02 gezeigt. Über fünf aufeinanderfolgende Ansteuerzyklen T1 bis T5 hinweg wird betrachtet und erläutert, wie der Gleichspannungswandler GSW gemäß Fig. 1, also als Buck-Boost-Konverter ausgeführt ist, arbeitet. Es sei angenommen, dass zu Beginn der Aufladephase P des Ansteuerzyklus T1 die Ist-Ausgangsspannung V01 kleiner ist als die Soll-Ausgangsspannung V1T und die Ist-Ausgangsspannung V02 größer ist als die Soll-Ausgangsspannung V2T, so dass die Entscheidung getroffen wird, in der anschließenden Aufladephase Vout1 zu laden.

Zu Beginn des nächsten Ansteuerzyklus T2 steht bereits fest, dass die Ist-Ausgangsspannung V02 kleiner ist als die Soll-Ausgangsspannung V2T, während die Ist-Ausgangsspannung V01 größer als die Soll-Ausgangsspannung V1T ist. Mit anderen Worten wird also in der sich anschließenden Entladephase des Ansteuerzyklus T2 Vout2 geladen.

Die Situation ist dann wiederum umgekehrt zu Beginn des darauffolgenden Ansteuerzyklus T3 mit der Folge, dass nun in dessen Entladephase der Ausgang Vout1 geladen wird. Die Situation hat sich in diesem Ausführungsbeispiel zu Beginn des nächsten Ansteuerzyklus T4 noch nicht geändert. Weiterhin ist also in diesem Beispiel die Spannung am Ausgang Vout2 größer als die Soll-Ausgangsspannung V2T, während die Ist-Ausgangsspannung am Ausgang Vout1 weiterhin kleiner ist als die Soll-Ausgangsspannung V1T.

Schließlich wird in diesem Beispiel angenommen, dass zu Beginn des nächsten Ansteuerzyklus T5 beide Ist-Ausgangsspannungen größer sind als ihre jeweiligen Soll-Ausgangsspannungen. Jetzt wird entschieden, dass keiner der Ausgangsanschlüsse Vout1, Vout2 geladen wird. Es kommt also in der eigentlichen Entladephase dieses Ansteuerzyklus zum sogenannten Free Wheeling FW.

In dem Beispiel der Fig. 30 sind letztendlich zwei Situationen für die Entscheidung gezeigt, dass es zum Free Wheeling kommen kann. Trifft man die Entscheidung zu Beginn eines Ansteuerzyklus, so könnte man in dem dargestellten Beispiel auch im ersten Ansteuerzyklus T1 auf Free Wheeling entscheiden, da nämlich auch dort beide Ist-Spannungen größer sind als die jeweiligen Soll-Spannungen. Man kann aber auch den Verlauf der jeweiligen Soll-Ausgangsspannungen während einer Aufladephase P beobachten. Sollte es dann bei einem der beiden Ausgangsanschlüsse zu einem Abfall der Ist-Ausgangsspannung unterhalb der Soll-Ausgangsspannung kommen, kann statt Free Wheeling auf Laden des betreffenden Ausgangsanschlusses in der Entladephase S1, S2 entschieden werden.

Würde man dieses zuletzt genannte Prinzip durchgängig anwenden, so würde im dargestellten Beispielsfall auch im Ansteuerzyklus T5 statt auf Free Wheeling auf Laden des Ausgangsanschlusses Vout2 in der Entladephase entschieden.

In dem Beispiel der Fig. 30 ist auch gezeigt, wie die Stromregelung des Induktorstroms erfolgt. Der Induktorstrom IL steigt in jeder Aufladephase an und fällt in jeder Entladephase ab, es sei denn, dass es zum Free Wheeling kommt. Die Aufladephase ist in dem Augenblick beendet, in dem der Strom IL gleich dem Grenzstrom Ilim ist. Hierdurch wird der Duty-Cycle gesteuert. Beim Free Wheeling kann der Grenzstrom Ilim abnehmen.

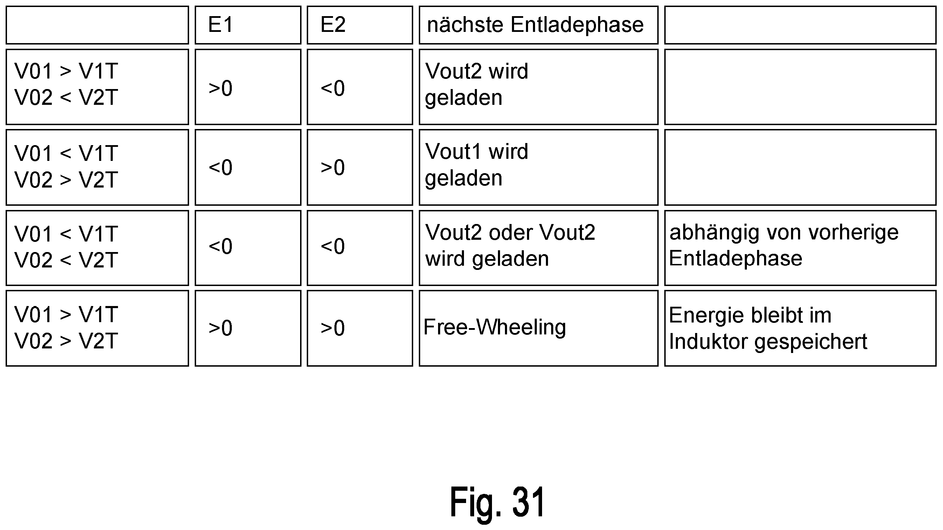

In Fig. 31 ist tabellarisch aufgeführt, wie das Port-Select-Modul PSM in Abhängigkeit von der Konstellation der Fehlersignale E1 und E2 reagiert. Wenn V02 unterhalb von V2T und V01 oberhalb von V1T liegt, ist das Fehlersignal E1 größer 0 und das Fehlersignal E2 kleiner 0. Daraufhin wird beispielsweise entschieden, dass in der folgenden Entladephase Vout2 geladen wird.

Umgekehrt ist die Situation, wenn V01 unterhalb von V1T und V02 oberhalb von V2T liegt. Dann wird das Fehlersignal E1 kleiner 0 und das Fehlersignal E2 größer 0 mit der Folge, dass in der Entladephase des aktuellen Ansteuerzyklus der Ausgang Vout1 gewählt wird.

Sind beide Ist-Ausgangsspannungen kleiner als ihre jeweiligen Ausgangsspannungen, also beide Fehlersignal E1 und E2 kleiner 0, hängt es möglicherweise von der Größe der Abweichungen ab, welcher Ausgang in der Entladephase des aktuellen Ansteuerzyklus ausgewählt wird. Auch andere Entscheidungskriterien sind denkbar. So könnte man beispielsweise auch dazu übergehen, dann, wenn die beiden Ist-Ausgangsspannungen über mehrere Zyklen kleiner als ihre jeweiligen Soll-Ausgangsspannungen bleiben, wie dies beispielsweise beim Anfahren des Gleichspannungswandlers der Fall sein wird, wechselweise geladen werden, wobei dies auch wiederum davon abhängig gemacht werden kann, wie groß die Entnahme der elektrischen Energie an den beiden Ausgangsanschlüssen ist.

Sind beide Ist-Ausgangsspannungen größer als die jeweiligen Soll-Ausgangsspannungen, so sind beide Fehlersignale E1 und E2 größer 0, was bedeutet, dass in der Entladephase des aktuellen Ansteuerzyklus keiner der beiden Ausgangsanschlüsse mit elektrischer Energie versorgt wird und es damit zum Free Wheeling kommt, so dass die elektrische Energie in dem Induktor IND gehalten wird, was wiederum dazu führen kann, dass im nächsten Ansteuerzyklus der Induktorgrenzsstrom Ilim reduziert wird.

### BEZUGSZEICHENLISTE

- AAE: Ansteuer- und Auswerteeinheit
- AH1: erste Ausgangshalbbrücke
- AH2: zweite Ausgangshalbbrücke
- ALS: Aufladestrom
- BGD1: Backgate-Diode des elektronischen Schalters M1
- BGD2: Backgate-Diode des elektronischen Schalters M2
- BGD3: Backgate-Diode des elektronischen Schalters M3
- BGD4a: Backgate-Diode des elektronischen Schalters M4a
- BGD4b: Backgate-Diode des elektronischen Schalters M4b
- BGD5a: Backgate-Diode des elektronischen Schalters M5a
- BGD5b: Backgate-Diode des elektronischen Schalters M5b
- BKSS: Buskommunikationsschnittstelle der Auswerte- und Ansteuereinheit
- BKSSout1: Buskommunikationsschnittstelle des ersten Ausgangs
- BKSSout2: Buskommunikationsschnittstelle des zweiten Ausgangs
- CG: Taktgenerator
- E1: Fehlersignal
- E2: Fehlersignal
- EH: Eingangshalbbrücke
- ELS: Entladestrom
- FSM: Zustandsmaschine (Finite-State-Machine)
- FW: Free Wheeling
- GND: Bezugspotential
- GSW: Gleichspannungswandler als Buck-Boost-Konverter
- GSW': Gleichspannungswandler als Boost-Konverter
- HSE1: erste Highside-Schaltereinheit
- HSE2: zweite Highside-Schaltereinheit
- IL: Induktorstrom
- Ilim: Induktorgrenzstrom
- Imax: Maximalinduktorstrom
- IND: Induktor
- K: Komparator
- KB: Kommunikationsbus
- LF: Loop-Filter
- Lfout: Filterausgangssignal
- M1: elektronischer Schalter (Highside-Schalter der Eingangshalbbrücke)
- M2: elektronischer Schalter (Lowside-Schalter der Eingangshalbbrücke)
- M3: elektronischer Schalter (Lowside-Schalter der Ausgangshalbbrücken)
- M4a: elektronischer Schalter (Highside-Schalter der ersten Ausgangshalbbrücke)
- M4b: elektronischer Schalter (Highside-Schalter der ersten Ausgangshalbbrücke)
- M5a: elektronischer Schalter (Highside-Schalter der zweiten Ausgangshalbbrücke)
- M5b: elektronischer Schalter (Highside-Schalter der zweiten Ausgangshalbbrücke)
- MV: Messverstärker
- P: Ladephase
- Pkout1: Pufferkondensator am ersten Ausgangsanschluss
- Pkout2: Pufferkondensator am zweiten Ausgangsanschluss
- Pkin: Pufferkondensator am Eingangsanschluss
- PSM: Port-Select-Modul
- S1: Entladephase
- S2: Entladephase
- SC: Slope-Compensation-Wert
- SH: Shuntwiderstand, Messmittel
- SU: Summierer
- SUM: Summierer
- T: Ansteuerzyklus
- V01: Ist-Ausgangsspannung an dem ersten Ausgangsanschluss
- V02: Ist-Ausgangsspannung an dem zweiten Ausgangsanschluss
- V1T: Soll-Ausgangsspannung an dem ersten Ausgangsanschluss
- V2T: Soll-Ausgangsspannung an dem zweiten Ausgangsanschluss
- Vout1: erster Ausgangsanschluss
- Vout2: zweiter Ausgangsanschluss
- Vin: Eingangsanschluss
- VBVin: Verbindungsleitung zwischen Ansteuer- und Auswerteeinheit und Eingangsanschluss
- VBVout1: Verbindungsleitung zwischen Ansteuer- und Auswerteeinheit und Vout1
- VBVout2: Verbindungsleitung zwischen Ansteuer- und Auswerteeinheit und Vout2
- VKAH: Verbindungsknoten der Ausgangshalbbrücke
- VKEH: Verbindungsknoten der Eingangshalbbrücke

## Patentansprüche

1. Gleichspannungswandler zur Wandlung einer Eingangsspannung in mindestens zwei Soll-Ausgangsspannungen, die innerhalb eines vorgebbaren Ausgangsspannungsbereichs unterschiedlich oder gleich sein können, mit
- einer Eingangshalbbrücke (EH), die einen Eingangsspannungsanschluss (Vin) zum Anlegen der Eingangsspannung sowie einen Bezugspotenzialanschluss (GND) und eine Reihenschaltung aus einem elektronischen Highside-Schalter (M1) sowie einem elektronischen Lowside-Schalter (M2) mit einem Verbindungsknoten zwischen beiden Schaltern (M1, M2) aufweist, wobei der Lowside-Schalter (M2) der Eingangshalbbrücke (EH) eine parallel zum Schalter liegenden Diode (BGD2) mit einer mit dem Bezugspotentialanschluss (GND) verbundener Kathode aufweist,
- mindestens zwei Ausgangshalbbrücken (AH1, AH2), von denen jede einen Ausgangsanschluss (Vout1, Vout2), an dem eine erste bzw. zweite Ausgangsspannung abgreifbar ist, einen gemeinsamen Verbindungsknoten (VKAH), einen gemeinsamen Bezugspotentialanschluss (GND), einen zwischen dem Verbindungsknoten (VKAH) und dem Bezugspotentialanschluss (GND) angeordneten gemeinsamen Lowside-Schalter (M3) und eine elektrische Highside-Schaltereinheit (HSE1, HSE2) aufweist, die zwischen dem gemeinsamen Verbindungsknoten (VKAH) und dem jeweiligen Ausgangsanschluss (Vout1, Vout2) angeordnet ist,
- einem Induktor (IND), der zwischen den Verbindungsknoten (VKEH, VKAH) der Eingangs- und der Ausgangshalbbrücken (EH, AH1, AH2) angeordnet ist und der in einer Aufladephase eines von mehreren aufeinanderfolgenden getakteten Ansteuerzyklen mit elektrischer Energie aufladbar sowie in einer Entladephase eines Ansteuerzyklus zur Weiterleitung elektrischer Energie an einen der Ausgangsanschlüsse (Vout1, Vout2) entladbar ist,
- wobei jede Highside-Schaltereinheit (HSE1, HSE2) einen ersten elektronischen Schalter (M4a, M5a) und einen zweiten elektronischen Schalter (M4b, M5b) mit jeweils einer parallel zum Schalter liegenden Diode (BGD4a, BGD4b, BGD5a, BGD5b) aufweist, wobei die beiden Schalter (M4a, M5a; M4b, M5b) jeder Highside-Schaltereinheit (HSE1, HSE2) unter antiserieller Ausrichtung ihrer Dioden in Reihe liegen und derjenige Schalter jeder Highside-Schaltereinheit (HSE1, HSE2), dessen Diode bezogen auf einen Stromfluss von dem Verbindungsknoten (VKAH) zu dem mit der betreffenden Highside-Schaltereinheit (HSE1, HSE2) verbundenen Ausgangsanschluss (Vout1, Vout2) in Sperrrichtung liegt, der erste Schalter (M4a, M5a) der betreffenden Highside-Schaltereinheit (HSE1, HSE2) ist und der jeweils andere Schalter der zweite Schalter (M4b, M5b) der betreffenden Highside-Schaltereinheit (HSE1, HSE2) ist, und
- einer Auswerte- und Ansteuereinheit (AAE), die eingerichtet ist, anhand der Größe der Eingangsspannung an dem Eingangsspannungsanschluss (Vin) und der Größen der Ist- sowie der Soll-Ausgangsspannungen an den Ausgangsanschlüssen (Vout1, Vout2) die elektronischen Schalter (M1, M2, M3, M4a, M4b, M5a, M5b) der Eingangshalbbrücke (EH) und der Ausgangshalbbrücken (AH1, AH2) anzusteuern, wobei die Auswerte- und Ansteuereinheit (AAE) eingerichtet ist, anhand eines Entscheidungskriteriums, das sich auf Basis einer potentiellen Unterschreitung einer bereitzustellenden Soll-Ausgangsspannung oder elektrischen Soll-Leistung an mindestens einem der Ausgangsanschlüsse (Vout1, Vout2) durch die an diesem aktuell anliegende Ist-Ausgangsspannung bzw. bereitgestellte elektrische Ist-Leistung ergibt, diejenige Highside-Schaltereinheit (HSE1, HSE2) auszuwählen, die mit demjenigen Ausgangsanschluss (Vout1, Vout2) verbunden ist, an den in der Entladephase eines Ansteuerzyklus in dem Induktor (IND) gespeicherte elektrische Energie weiterzuleiten ist,
- wobei die Auswerte- und Ansteuereinheit (AAE) dazu eingerichtet ist,
- in der zum Speichern des Induktors (IND) mit elektrischer Energie vorgesehenen Aufladephase eines Ansteuerzyklus
- den Lowside-Schalter (M2) der Eingangshalbbrücke (EH) sperrend zu schalten,
- den Highside-Schalter (M1) der Eingangshalbbrücke (EH) leitend zu schalten,
- den Lowside-Schalter (M3) der Ausgangshalbbrücken (AH1, AH2) leitend zu schalten und
- sofern noch nicht zum Ende der Entladephase des vorherigen Ansteuerzyklus geschehen und für den Fall, dass eine der beiden Ist-Ausgangsspannungen kleiner als die jeweilige vorgegebene Soll-Ausgangsspannung ist, für den aktuellen Ansteuerzyklus anhand des Entscheidungskriteriums eine der beiden Highside-Schaltereinheiten (HSE1, HSE2) auszuwählen, womit diese Highside-Schaltereinheit (HSE1, HSE2) die ausgewählte Highside-Schaltereinheit ist und die andere Highside-Schaltereinheit die nicht ausgewählte Highside-Schaltereinheit ist,
- die beiden Schalter (M4a, M4b, M5a, M5b) der nicht ausgewählten Highside-Schaltereinheit sperrend zu schalten oder sperrend geschaltet zu halten,
- den ersten Schalter (M4a, M5a) der ausgewählten Highside-Schaltereinheit von sperrend geschaltet nach leitend geschaltet zu überführen oder diesen ersten Schalter (M4a, M5a), wenn dieser bereits leitend geschaltet ist, leitend geschaltet zu halten, und
- den zweiten Schalter (M4b, M5b) der ausgewählten Highside-Schaltereinheit sperrend zu schalten oder, wenn dieser bereits sperrend geschaltet ist, sperrend geschaltet zu halten,
- in einer sich an die Aufladephase anschließenden ersten Übergangsphase
- den ersten Schalter (M4a, M5a) der ausgewählten Highside-Schaltereinheit leitend geschaltet zu halten,
- den Lowside-Schalter (M3) der Ausgangshalbbrücken (AH1, AH2) und den Highside-Schalter (M1) der Eingangshalbbrücke (EH) jeweils von leitend geschaltet nach sperrend geschaltet zu überführen und
- den zweiten Schalter (M5a, M5b) der ausgewählten Highside-Schaltereinheit und den Lowside-Schalter (M2) der Eingangshalbbrücke (EH) von sperrend geschaltet nach leitend geschaltet zu überführen,
- in der sich an die erste Übergangsphase anschließenden Entladephase eines Ansteuerzyklus
- die zum Ende der ersten Übergangsphase eingenommenen Zustände der elektronischen Schalter (M1, M2, M3, M4a, M4b, M5a, M5b) der Eingangshalbbrücke (EH) und der Ausgangshalbbrücken (AH1, AH2) beizubehalten und
- in einer sich an die Entladephase anschließenden zweiten Übergangsphase, auf die die Aufladephase des nächsten Ansteuerzyklus folgt,
- den zweiten Schalter (M5a, M5b) der ausgewählten Highside-Schaltereinheit und den Lowside-Schalter (M2) der Eingangshalbbrücke (EH) von leitend geschaltet nach sperrend geschaltet zu überführen,
- den Lowside-Schalter (M3) der Ausgangshalbbrücken (AH1, AH2) und den Highside-Schalter (M1) der Eingangshalbbrücke (EH) von sperrend geschaltet nach leitend geschaltet zu überführen,
- sofern es jetzt schon erfolgen soll und für den Fall, dass eine der beiden Ist-Ausgangsspannungen kleiner als die jeweilige vorgegebene Soll-Ausgangsspannung ist, für den nächsten Ansteuerzyklus anhand des Entscheidungskriteriums eine der beiden Highside-Schaltereinheiten (HSE1, HSE2) auszuwählen und
- die beiden Schalter der nicht ausgewählten Highside-Schaltereinheit des aktuellen Ansteuerzyklus sperrend geschaltet zu halten, wenn für den nächsten Ansteuerzyklus gemäß dem Entscheidungskriterium die nicht ausgewählte Highside-Schaltereinheit des aktuellen Ansteuerzyklus auch im nächsten Ansteuerzyklus nicht ausgewählt sein soll und die ausgewählte Highside-Schaltereinheit des aktuellen Ansteuerzyklus auch im nächsten Ansteuerzyklus ausgewählt sein soll,
- oder den ersten Schalter (M4a, M5a) der im aktuellen Ansteuerzyklus ausgewählten Highside-Schaltereinheit von leitend geschaltet nach sperrend geschaltet zu überführen und den ersten Schalter (M4a, M5a) der im aktuellen Ansteuerzyklus nicht ausgewählten Highside-Schaltereinheit von sperrend geschaltet nach leitend geschaltet zu überführen, wenn für den nächsten Ansteuerzyklus gemäß dem Entscheidungskriterium die ausgewählte Highside-Schaltereinheit des aktuellen Ansteuerzyklus nicht ausgewählt sein soll und die nicht ausgewählte Highside-Schaltereinheit des aktuellen Ansteuerzyklus ausgewählt sein soll,
- wobei die Auswerte- und Ansteuereinheit (AAE) dazu eingerichtet ist, wenn sie die Highside-Schaltereinheit (HSE1, HSE2) anhand des Entscheidungskriteriums auszuwählen hat, zu veranlassen, dass:
- für die Entladephase eines Ansteuerzyklus diejenige Highside-Schaltereinheit (HSE1, HSE2) ausgewählt wird, die mit demjenigen Ausgangsanschluss verbunden ist, an dem aktuell eine Ist-Ausgangsspannung anliegt, die kleiner als die bereitzustellende Soll-Ausgangsspannung ist, wobei die ausgewählte Highside-Schaltereinheit (HSE1, HSE2) maximal für eine vorgebbare Anzahl von Ansteuerzyklen ausgewählt bleibt, sofern die Ist-Ausgangsspannung des mit der ausgewählten Highside-Steuereinheit (HSE1, HSE2), verbundenen Ausgangsanschluss (Vout1, Vout2) weiterhin kleiner ist als die jeweilige bereitzustellende Soll-Ausgangsspannung, und/oder
- für die Entladephase eines Ansteuerzyklus dann, wenn an sämtlichen Ausgangsanschlüssen (Vout1, Vout2) aktuell eine Ist-Ausgangsspannung anliegt, die kleiner als die jeweilige bereitzustellende Soll-Ausgangsspannung ist, diejenige Highside-Schaltereinheit ausgewählt wird, die mit demjenigen Ausgangsanschluss (Vout1, Vout2) verbunden ist, an dem eine Ist-Ausgangsspannung anliegt, die die jeweilige bereitzustellende Soll-Ausgangsspannung um die betragsmäßig größere Differenz unterschreitet, wobei die ausgewählte Highside-Schaltereinheit (HSE1, HSE2) maximal für eine vorgebbare Anzahl von Ansteuerzyklen ausgewählt bleibt, sofern die Ist-Ausgangsspannung des mit der ausgewählten Highside-Schaltereinheit (HSE1, HSE2) verbundenen Ausgangsanschlusses (Vout1, Vout2) die bereitzustellende Soll-Ausgangsspannung weiterhin um die im Vergleich zur Unterschreitung der Ist-Ausgangsspannungen des oder der anderen Ausgangsanschlüsse (Vout1, Vout2) betragsmäßig größte Differenz unterschreitet, und/oder
- für die Entladephase eines Ansteuerzyklus dann, wenn an sämtlichen Ausgangsanschlüssen (Vout1, Vout2) aktuell jeweils eine Ist-Ausgangsspannung anliegt, die kleiner als die jeweilige bereitzustellende Soll-Ausgangsspannung ist, diejenige Highside-Schaltereinheit (HSE1, HSE2) ausgewählt wird, die mit demjenigen Ausgangsanschluss (Vout1, Vout2) verbunden ist, an dem eine Ist-Spannung anliegt, der ein Verringerungsgrad gegenüber ihrem Wert im vorherigen Ansteuerzyklus größer ist als der Verringerungsgrad der Ist-Ausgangsspannungen an den anderen Ausgangsanschlüssen (Vout1, Vout2) gegenüber deren jeweiligen Werte im vorherigen Ansteuerzyklus, wobei die ausgewählte Highside-Schaltereinheit (HSE1, HSE2) maximal für eine vorgebbare Anzahl von Ansteuerzyklen ausgewählt bleibt, und/oder
- für die Entladephase eines Ansteuerzyklus, wenn an sämtlichen Ausgangsanschlüssen (Vout1, Vout2) aktuell eine Ist-Ausgangsspannung anliegt, die kleiner als die jeweilige bereitzustellende Soll-Ausgangsspannung ist, die Highside-Schaltereinheiten (HSE1, HSE2) wechselweise oder zyklisch ausgewählt werden oder die jeweils ausgewählte Highside-Schaltereinheit (HSE1, HSE2) maximal für eine vorgebbare Anzahl von Ansteuerzyklen ausgewählt bleibt, bevor eine Highside-Schaltereinheit (HSE1, HSE2) ausgewählt wird, die mit einem anderen Ausgangsanschluss (Vout1, Vout2) verbunden ist, dessen Ist-Ausgangsspannung kleiner als die jeweils bereitzustellende Soll-Ausgangsspannung ist.

2. Gleichspannungswandler zur Wandlung einer Eingangsspannung in mindestens zwei Soll-Ausgangsspannungen, innerhalb eines vorgebbaren Ausgangsspannungsbereichs unterschiedlich oder gleich sein können, mit
- einem Eingangsspannungsanschluss (Vin) zum Anlegen der Eingangsspannung,
- mindestens zwei Ausgangshalbbrücken (AH1, AH2), von denen jede einen Ausgangsanschluss (Vout1, Vout2), an dem eine erste bzw. zweite Ausgangsspannung abgreifbar ist, einen gemeinsamen Verbindungsknoten (VKAH), einen gemeinsamen Bezugspotentialanschluss (GND), einen zwischen dem Verbindungsknoten (VKAH) und dem Bezugspotentialanschluss (GND) angeordneten gemeinsamen Lowside-Schalter (M3) und eine elektrische Highside-Schaltereinheit (HSE1, HSE2) aufweist, die zwischen dem gemeinsamen Verbindungsknoten (VKAH) und dem jeweiligen Ausgangsanschluss (Vout1, Vout2) angeordnet ist,
- einem Induktor (IND), der zwischen dem Eingangsspannungsanschluss (Vin) und dem Verbindungsknoten (VKAH) der Ausgangshalbbrücken (AH1, AH2) angeordnet ist und der in einer Aufladephase eines von mehreren aufeinanderfolgenden getakteten Ansteuerzyklen mit elektrischer Energie aufladbar ist sowie in einer Entladephase eines Ansteuerzyklus zur Weiterleitung der elektrischen Energie an einen der Ausgangsanschlüsse (Vout1, Vout2) entladbar ist,
- wobei jede Highside-Schaltereinheit (HSE1, HSE2) einen ersten elektronischen Schalter (M4a, M5a) und einen zweiten elektronischen Schalter (M4b, M5b) mit jeweils einer parallel zum Schalter liegenden Diode (BGD4a, BGD4b, BGD5a, BGD5b) aufweist, wobei die beiden Schalter (M4a, M5a; M4b, M5b) jeder Highside-Schaltereinheit (HSE1, HSE2) unter antiserieller Ausrichtung ihrer Dioden in Reihe liegen und derjenige Schalter jeder Highside-Schaltereinheit (HSE1, HSE2), dessen Diode bezogen auf einen Stromfluss von dem Verbindungsknoten (VKAH) zu dem mit der betreffenden Highside-Schaltereinheit (HSE1, HSE2) verbundenen Ausgangsanschluss (Vout1, Vout2) in Sperrrichtung liegt, der erste Schalter (M4a, M5a) der betreffenden Highside-Schaltereinheit (HSE1, HSE2) ist und der jeweils andere Schalter der zweite Schalter (M4b, M5b) der betreffenden Highside-Schaltereinheit (HSE1, HSE2) ist, und
- einer Auswerte- und Ansteuereinheit (AAE), die eingerichtet ist, anhand der Größe der Eingangsspannung an dem Eingangsspannungsanschluss (Vin) und der Größen der Ist- sowie der Soll-Ausgangsspannungen an den Ausgangsanschlüssen (Vout1, Vout2) die elektronischen Schalter der Ausgangshalbbrücken (AH1, AH2) anzusteuern, wobei die Auswerte- und Ansteuereinheit (AAE) eingerichtet ist, anhand eines Entscheidungskriteriums , das sich auf Basis einer potentiellen Unterschreitung einer bereitzustellenden Soll-Ausgangsspannung oder elektrischen Soll-Leistung an mindestens einem der Ausgangsanschlüsse (Vout1, Vout2) durch die an diesem aktuell anliegende Ist-Ausgangsspannung bzw. bereitgestellte elektrische Ist-Leistung ergibt, diejenige Highside-Schaltereinheit (HSE1, HSE2) auszuwählen, die mit demjenigen Ausgangsanschluss (Vout1, Vout2) verbunden ist, an den in der Entladephase eines Ansteuerzyklus in dem Induktor (IND) gespeicherte elektrische Energie weiterzuleiten ist,
- wobei die Auswerte- und Ansteuereinheit (AAE) dazu eingerichtet ist,
- in der Aufladephase eines Ansteuerzyklus
- den Lowside-Schalter (M3) der Ausgangshalbbrücken (AH1, AH2) leitend zu schalten und
- sofern noch nicht zum Ende der Entladephase des vorherigen Ansteuerzyklus geschehen und für den Fall, dass eine der beiden Ist-Ausgangsspannungen kleiner als die jeweilige ihr zugeordnete Soll-Ausgangsspannung ist, für den aktuellen Ansteuerzyklus anhand des Entscheidungskriteriums eine der beiden Highside-Schaltereinheiten (HSE1, HSE2) auszuwählen, womit diese Highside-Schaltereinheit die ausgewählte Highside-Schaltereinheit ist und die andere Highside-Schaltereinheit die nicht ausgewählte Highside-Schaltereinheit ist,
- die beiden Schalter der nicht ausgewählten Highside-Schaltereinheit sperrend zu schalten oder sperrend geschaltet zu halten,
- den ersten Schalter (M4a, M5a) der ausgewählten Highside-Schaltereinheit von sperrend geschaltet nach leitend geschaltet zu überführen oder diesen ersten Schalter (M4a, M5a), wenn dieser bereits leitend geschaltet ist, leitend geschaltet zu halten, und
- den zweiten Schalter (M5a, M5b) der ausgewählten Highside-Schaltereinheit sperrend zu schalten oder, wenn dieser bereits sperrend geschaltet ist, sperrend geschaltet zu halten,
- in einer sich an die Aufladephase anschließenden ersten Übergangsphase
- die beiden Schalter der nicht ausgewählten Highside-Schaltereinheit sperrend geschaltet zu halten,
- den ersten Schalter (M4a, M5a) der ausgewählten Highside-Schaltereinheit leitend geschaltet zu halten,
- den Lowside-Schalter (M3) der Ausgangshalbbrücken (AH1, AH2) von leitend geschaltet nach sperrend geschaltet zu überführen und,
- anschließend nach Abwarten des Totzeitintervalls den zweiten Schalter (M5a, M5b) der ausgewählten Highside-Schaltereinheit von sperrend geschaltet nach leitend geschaltet zu überführen,
- in der sich an die erste Übergangsphase anschließenden Entladephase eines Ansteuerzyklus
- die zum Ende der ersten Übergangsphase eingenommenen Zustände der elektronischen Schalter der Ausgangshalbbrücken (AH1, AH2) beizubehalten und
- in einer sich an die Entladephase anschließenden zweiten Übergangsphase, auf die die Aufladephase des nächsten Ansteuerzyklus folgt,
- den Lowside-Schalter (M3) der Ausgangshalbbrücken (AH1, AH2) von sperrend geschaltet nach leitend geschaltet zu überführen,
- anschließend nach Abwarten des Totzeitintervalls den zweiten Schalter (M5a, M5b) der ausgewählten Highside-Schaltereinheit von leitend geschaltet nach sperrend geschaltet zu überführen und
- sofern es jetzt schon erfolgen soll und für den Fall, dass eine der beiden Ist-Ausgangsspannungen kleiner als die jeweilige vorgegebene Soll-Ausgangsspannung ist, für den nächsten Ansteuerzyklus anhand des Entscheidungskriteriums eine der beiden Highside-Schaltereinheiten (HSE1, HSE2) auszuwählen und
- die beiden Schalter der nicht ausgewählten Highside-Schaltereinheit des aktuellen Ansteuerzyklus sperrend geschaltet zu halten, wenn für den nächsten Ansteuerzyklus gemäß dem Entscheidungskriterium die nicht ausgewählte Highside-Schaltereinheit des aktuellen Ansteuerzyklus auch im nächsten Ansteuerzyklus nicht ausgewählt sein soll und die ausgewählte Highside-Schaltereinheit des aktuellen Ansteuerzyklus auch im nächsten Ansteuerzyklus ausgewählt sein soll,
- oder den ersten Schalter (M4a, M5a) der im aktuellen Ansteuerzyklus ausgewählten Highside-Schaltereinheit von leitend geschaltet nach sperrend geschaltet zu überführen und den ersten Schalter (M4a, M5a) der im aktuellen Ansteuerzyklus nicht ausgewählten Highside-Schaltereinheit von sperrend geschaltet nach leitend geschaltet zu überführen, wenn für den nächsten Ansteuerzyklus gemäß dem Entscheidungskriterium die ausgewählte Highside-Schaltereinheit des aktuellen Ansteuerzyklus nicht ausgewählt sein wird und die nicht ausgewählte Highside-Schaltereinheit des aktuellen Ansteuerzyklus ausgewählt sein wird,
- wobei die Auswerte- und Ansteuereinheit (AAE) dazu eingerichtet ist, wenn sie die Highside-Schaltereinheit (HSE1, HSE2) anhand des Entscheidungskriteriums auszuwählen hat, zu veranlassen, dass:
- für die Entladephase eines Ansteuerzyklus diejenige Highside-Schaltereinheit (HSE1, HSE2) ausgewählt wird, die mit demjenigen Ausgangsanschluss verbunden ist, an dem aktuell eine Ist-Ausgangsspannung anliegt, die kleiner als die bereitzustellende Soll-Ausgangsspannung ist, wobei die ausgewählte Highside-Schaltereinheit (HSE1, HSE2) maximal für eine vorgebbare Anzahl von Ansteuerzyklen ausgewählt bleibt, sofern die Ist-Ausgangsspannung des mit der ausgewählten Highside-Steuereinheit (HSE1, HSE2), verbundenen Ausgangsanschluss (Vout1, Vout2) weiterhin kleiner ist als die jeweilige bereitzustellende Soll-Ausgangsspannung, und/oder
- für die Entladephase eines Ansteuerzyklus dann, wenn an sämtlichen Ausgangsanschlüssen (Vout1, Vout2) aktuell eine Ist-Ausgangsspannung anliegt, die kleiner als die jeweilige bereitzustellende Soll-Ausgangsspannung ist, diejenige Highside-Schaltereinheit ausgewählt wird, die mit demjenigen Ausgangsanschluss (Vout1, Vout2) verbunden ist, an dem eine Ist-Ausgangsspannung anliegt, die die jeweilige bereitzustellende Soll-Ausgangsspannung um die betragsmäßig größere Differenz unterschreitet, wobei die ausgewählte Highside-Schaltereinheit (HSE1, HSE2) maximal für eine vorgebbare Anzahl von Ansteuerzyklen ausgewählt bleibt, sofern die Ist-Ausgangsspannung des mit der ausgewählten Highside-Schaltereinheit (HSE1, HSE2) verbundenen Ausgangsanschlusses (Vout1, Vout2) die bereitzustellende Soll-Ausgangsspannung weiterhin um die im Vergleich zur Unterschreitung der Ist-Ausgangsspannungen des oder der anderen Ausgangsanschlüsse (Vout1, Vout2) betragsmäßig größte Differenz unterschreitet, und/oder
- für die Entladephase eines Ansteuerzyklus dann, wenn an sämtlichen Ausgangsanschlüssen (Vout1, Vout2) aktuell jeweils eine Ist-Ausgangsspannung anliegt, die kleiner als die jeweilige bereitzustellende Soll-Ausgangsspannung ist, diejenige Highside-Schaltereinheit (HSE1, HSE2) ausgewählt wird, die mit demjenigen Ausgangsanschluss (Vout1, Vout2) verbunden ist, an dem eine Ist-Spannung anliegt, der ein Verringerungsgrad gegenüber ihrem Wert im vorherigen Ansteuerzyklus größer ist als der Verringerungsgrad der Ist-Ausgangsspannungen an den anderen Ausgangsanschlüssen (Vout1, Vout2) gegenüber deren jeweiligen Werte im vorherigen Ansteuerzyklus, wobei die ausgewählte Highside-Schaltereinheit (HSE1, HSE2) maximal für eine vorgebbare Anzahl von Ansteuerzyklen ausgewählt bleibt, und/oder
- für die Entladephase eines Ansteuerzyklus, wenn an sämtlichen Ausgangsanschlüssen (Vout1, Vout2) aktuell eine Ist-Ausgangsspannung anliegt, die kleiner als die jeweilige bereitzustellende Soll-Ausgangsspannung ist, die Highside-Schaltereinheiten (HSE1, HSE2) wechselweise oder zyklisch ausgewählt werden oder die jeweils ausgewählte Highside-Schaltereinheit (HSE1, HSE2) maximal für eine vorgebbare Anzahl von Ansteuerzyklen ausgewählt bleibt, bevor eine Highside-Schaltereinheit (HSE1, HSE2) ausgewählt wird, die mit einem anderen Ausgangsanschluss (Vout1, Vout2) verbunden ist, dessen Ist-Ausgangsspannung kleiner als die jeweils bereitzustellende Soll-Ausgangsspannung ist.

3. Gleichspannungswandler nach Anspruch 1 oder 2 mit einem Kommunikationsbus (KB), an den die Auswerte- und Ansteuereinheit (AAE) angeschlossen ist und über den im Falle des Anschlusses von Verbrauchern an den ersten und zweiten Ausgangsanschlüssen (Vout1, Vout2) die Auswerte- und Ansteuereinheit (AAE) ausgelegt ist, von dem jeweiligen Verbraucher ein die Größe der bereitzustellenden Soll-Ausgangsspannung repräsentierendes Spannungsanforderungssignal zu empfangen.

4. Gleichspannungswandler nach einem der Ansprüche 1 bis 3, wobei die Auswerte- und Ansteuereinheit (AAE) einen Komparator, insbesondere in Form eines Schmitt-Triggers, aufweist, dessen beide Eingänge mit den beiden Ausgangsanschlüssen (Vout1, Vout2) verbunden sind und der an seinem Ausgang ein Ausgangssignal liefert, das für das Entscheidungskriterium repräsentativ ist, welche der Highside-Schaltereinheiten (HSE1, HSE2) auszuwählen ist.

5. Gleichspannungswandler nach Anspruch 1 oder Anspruch 3 oder Anspruch 4, sofern auf Anspruch 1 rückbezogen, wobei die Auswerte- und Ansteuereinheit (AAE) ausgelegt ist, keine der Highside-Schaltereinheiten (HSE1, HSE2) der Ausgangshalbbrücken (AH1, AH2) auszuwählen, wenn die Ist-Ausgangsspannungen an den Ausgangsanschlüssen (Vout1, Vout2) größer als die oder gleich groß wie die jeweiligen Soll-Ausgangsspannungen sind, wobei die Auswerte- und Ansteuereinheit (AAE) ausgelegt ist, die folgenden Schritte durchzuführen:
- in der ersten Übergangsphase
- die ersten Schalter (M4a, M5a) der beiden Highside-Schaltereinheiten (HSE1, HSE2) leitend schaltend oder leitend geschaltet hält oder sperrend schaltet oder sperrend geschaltet hält,
- die zweiten Schalter (M4b, M5b) der beiden Highside-Schaltereinheiten (HSE1, HSE2) sperrend geschaltet hält,
- den Lowside-Schalter (M3) der Ausgangshalbbrücken (AH1, AH2) leitend geschaltet hält und
- den Highside-Schalter (M1) der Eingangshalbbrücke (EH) von leitend geschaltet nach sperrend geschaltet überführt und
- anschließend nach Abwarten des Totzeitintervalls den Lowside-Schalter (M2) der Eingangshalbbrücke (EH) von sperrend geschaltet nach leitend geschaltet überführt,
- in der Entladephase
- die am Ende der ersten Übergangsphase eingenommenen Zustände sämtlicher Schalter (M1, M2, M3, M4a, M4b, M5a, M5b) der Eingangshalbbrücke (EH) und der Ausgangshalbbrücken (AH1, AH2) beibehält und
- in der zweiten Übergangsphase
- den Lowside-Schalter (M2) der Eingangshalbbrücke (EH) von leitend geschaltet nach sperrend geschaltet überführt und
- anschließend nach Abwarten des Totzeitintervalls den Highside-Schalter (M1) der Eingangshalbbrücke (EH) von sperrend geschaltet nach leitend geschaltet überführt.

6. Gleichspannungswandler nach einem der Ansprüche 1 bis 5, wobei die Auswerte- und Ansteuereinheit (AAE) eine Messvorrichtung (SH) zur Lieferung eines der Größe des Stroms durch den Induktor (IND) repräsentierenden Messsignals aufweist und dass die Auswerte- und Ansteuereinheit (AAE) ausgelegt ist, die Aufladephase eines Ansteuerzyklus dann zu beenden, wenn das Messsignal einen Schwellwert überschreitet, der einen vorgebbaren Maximalstrom repräsentiert.

7. Gleichspannungswandler nach Anspruch 6, wobei sich der Schwellwert in Abhängigkeit davon, ob eine der oder jede der aktuellen Ist-Ausgangsspannungen größer oder kleiner als die jeweilige Soll-Ausgangsspannung ist, und/oder in Abhängigkeit von der Soll-Größe einer Slope-Compensation-Regelung (SC) veränderbar ist.

8. Gleichspannungswandler nach einem der Ansprüche 1 bis 7, wobei die ersten und zweiten Schalter (M4a, M4b, M5a, M5b) jeder Highside-Schaltereinheit (HSE1, HSE2) und, sofern vorhanden, der Highside-Schalter (M1) und der Lowside-Schalter (M2) der Eingangshalbbrücke (EH) jeweils als MOS-Transistor (M4a, M5a; M4b, M5b) mit Freilauf-Diode ausgebildet sind.

9. Gleichspannungswandler nach Anspruch 8, wobei die Source-Anschlüsse der beiden MOS-Transistoren jeder Highside-Schaltereinheit (HSE1, HSE2) miteinander verbunden sind und dass der Drain-Anschluss des einen MOS-Transistors (M4b) jeder Highside-Schaltereinheit (HSE1, HSE2) mit dem Lowside-Schalter (M3) der Ausgangshalbbrücken (AH1, AH2) und der Drain-Anschluss des anderen MOS-Transistors (M5b) jeder Highside-Schaltereinheit (HSE1, HSE2) mit dem jeweiligen Ausgangsanschluss (Vout1, Vout2) der Ausgangshalbbrücken (AH1, AH2) verbunden ist.

10. Gleichspannungswandler nach einem der Ansprüche 1 bis 8, wobei die ersten und zweiten Schalter (M4a, M4b, M5a, M5b) jeder Highside-Schaltereinheit (HSE1, HSE2) als Bipolartransistoren oder IGBT ausgebildet sind, zu deren Strompfaden jeweils eine Diode, insbesondere eine Schottky-Diode parallel liegt.

## Claims

1. A DC/DC converter for converting an input voltage into at least two desired output voltages, which can be different or the same within a predeterminable output voltage range, comprising
- an input half-bridge (EH) having an input voltage terminal (Vin) for applying the input voltage and a reference potential terminal (GND) and a series circuit comprising an electronic high-side switch (M1) and an electronic low-side switch (M2) with a connection node between the two switches (M1, M2), wherein the low-side switch (M2) of the input half-bridge (EH) has a diode (BGD2) connected in parallel with the switch with a cathode connected to the reference potential terminal (GND),
- at least two output half-bridges (AH1, AH2), each of which has an output terminal (Vout1, Vout2) at which a first or second output voltage can be tapped, a common connection node (VKAH), a common reference potential terminal (GND), a common low-side switch (M3) arranged between the connection node (VKAH) and the reference potential terminal (GND) and an electrical high-side switch unit (HSE1, HSE2) which is arranged between the common connection node (VKAH) and the respective output terminal (Vout1, Vout2),
- an inductor (IND), which is arranged between the connection nodes (VKEH, VKAH) of the input and output half bridges (EH, AH1, AH2) and which can be charged with electrical energy in a charging phase of one of several successive clocked control cycles and can be discharged in a discharging phase of a control cycle for forwarding electrical energy to one of the output terminals (Vout1, Vout2),
- wherein each high-side switch unit (HSE1, HSE2) has a first electronic switch (M4a, M5a) and a second electronic switch (M4b, M5b) each with a diode (BGD4a, BGD4b, BGD5a, BGD5b) in parallel with the switch, wherein the two switches (M4a, M5a; M4b, M5b) of each high-side switch unit (HSE1, HSE2) are connected in series with their diodes in antiserial alignment, and the switch of each high-side switch unit (HSE1, HSE2), the diode of which is located in a reverse direction relative to a current flow from the connection node (VKAH) to the output terminal (Vout1, Vout2) connected to the relevant high-side switch unit (HSE1, HSE2), is the first switch (M4a, M5a) of the respective high-side switch unit (HSE1, HSE2) and the respective other switch is the second switch (M4b, M5b) of the respective high-side switch unit (HSE1, HSE2), and
- an evaluation and control unit (AAE) which is configured to control the electronic switches (M1, M2, M3, M4a, M4b, M5a, M5b) of the input half-bridge (EH) and the output half-bridges (AH1, AH2) on the basis of the magnitude of the input voltage at the input voltage terminal (Vin) and the magnitudes of the actual and the target output voltages at the output terminals (Vout1, Vout2), wherein the evaluation and control unit (AAE) is configured to select, on the basis of a decision criterion based on a potential undershoot of a target output voltage or target electrical power to be provided at at least one of the output terminals (Vout1, Vout2) by the actual output voltage currently applied thereto or the actual electrical power provided, the high-side switch unit (HSE1, HSE2) connected to the output terminal (Vout1, Vout2) to which electrical energy stored in the inductor (IND) is to be transferred during the discharging phase of a control cycle.
- wherein the evaluation and control unit (AAE) is configured to
- in the charging phase of a control cycle provided for storing the inductor (IND) with electrical energy
- switch the low-side switch (M2) of the input half-bridge (EH) to be blocking,
- switch the high-side switch (M1) of the input half-bridge (EH) to be conducting,
- switch the low-side switch (M3) of the output half bridges (AH1, AH2) to be conducting, and
- if not yet done at the end of the discharging phase of the previous control cycle and in the event that one of the two actual output voltages is smaller than the respective specified target output voltage, select one of the two high-side switch units (HSE1, HSE2) for the current control cycle using the decision criterion, wherein this high-side switch unit (HSE1, HSE2) is the selected high-side switch unit and the other high-side switch unit is the non-selected high-side switch unit,
- switch the two switches (M4a, M4b, M5a, M5b) of the non-selected high-side switch unit to be blocking or keep them switched to be blocking,
- transfer the first switch (M4a, M5a) of the selected high-side switch unit from switched to be blocking to switched to be conducting or to keep this first switch (M4a, M5a) switched to be conducting if it is already switched to be conducting, and
- switch the second switch (M4b, M5b) of the selected high-side switch unit to be blocking or, if it is already switched to be blocking, keep it switched to be blocking,
- in an initial transition phase following the charging phase
- keep the first switch (M4a, M5a) of the selected high-side switch unit switched to be conducting,
- transfer the low-side switch (M3) of the output half-bridges (AH1, AH2) and the high-side switch (M1) of the input half-bridge (EH) from switched to be conducting to switched to be blocking, and
- transfer the second switch (M5a, M5b) of the selected high-side switch unit and the low-side switch (M2) of the input half-bridge (EH) from switched to be blocking to switched to be conducting,
- in the discharging phase of a control cycle following the first transition phase
- keep the states of the electronic switches (M1, M2, M3, M4a, M4b, M5a, M5b) of the input half-bridge (EH) and the output half-bridges (AH1, AH2) assumed at the end of the first transition phase, and
- in a second transition phase following the discharging phase, which is followed by the charging phase of the next control cycle,
- transfer the second switch (M5a, M5b) of the selected high-side switch unit and the low-side switch (M2) of the input half-bridge (EH) from switched to be conducting to switched to be blocking,
- transfer the low-side switch (M3) of the output half-bridges (AH1, AH2) and the high-side switch (M1) of the input half-bridge (EH) from switched to be blocking to switched to be conducting,
- if it is already to take place now and in the event that one of the two actual output voltages is smaller than the respective specified target output voltage, select one of the two high-side switch units (HSE1, HSE2) for the next control cycle on the basis of the decision criterion, and
- keep the two switches of the non-selected high-side switch unit of the current control cycle switched to be blocking if the non-selected high-side switch unit of the current control cycle is not to be selected for the next control cycle in accordance with the decision criterion and the selected high-side switch unit of the current control cycle is also to be selected in the next control cycle,
- or transfer the first switch (M4a, M5a) of the high-side switch unit selected in the current control cycle from switched to be conducting to switched to be blocking, and transfer the first switch (M4a, M5a) of the high-side switch unit not selected in the current control cycle from switched to be blocking to switched to be conducting, if the selected high-side switch unit of the current control cycle is not to be selected for the next control cycle in accordance with the decision criterion and the non-selected high-side switch unit of the current control cycle is to be selected,
- wherein the evaluation and control unit (AAE) is configured to cause, when it has to select the high-side switch unit (HSE1, HSE2) on the basis of the decision criterion, that:
- for the discharging phase of a control cycle, that high-side switch unit (HSE1, HSE2) is selected which is connected to that output terminal at which an actual output voltage is currently applied which is smaller than the target output voltage to be provided, wherein the selected high-side switch unit (HSE1, HSE2) remains selected for a maximum of a predeterminable number of control cycles, provided that the actual output voltage of the output terminal (Vout1, Vout2) connected to the selected high-side control unit (HSE1, HSE2) is still smaller than the respective target output voltage to be provided, and/or
- for the discharging phase of a control cycle, if an actual output voltage is currently applied to all output terminals (Vout1, Vout2) which is smaller than the respective target output voltage to be provided, the high-side switch unit is selected which is connected to the output terminal (Vout1, Vout2) at which an actual output voltage is applied which is smaller than the respective target output voltage to be provided by the greater difference in amount, wherein the selected high-side switch unit (HSE1, HSE2) remains selected for a maximum of a predeterminable number of control cycles, provided that the actual output voltage of the output terminal (Vout1, Vout2) connected to the selected high-side switch unit (HSE1, HSE2) continues to fall below the target output voltage to be provided by the difference which is greater in amount compared to the undershoot of the actual output voltages of the other output terminal or terminals (Vout1, Vout2), and/or
- for the discharging phase of a control cycle, if an actual output voltage is currently applied to all output terminals (Vout1, Vout2) which is smaller than the respective target output voltage to be provided, the high-side switch unit (HSE1, HSE2) is selected which is connected to the output terminal (Vout1, Vout2) at which an actual voltage is applied, a degree of reduction compared to its value in the previous control cycle is greater than the degree of reduction of the actual output voltages at the other output terminals (Vout1, Vout2) compared to their respective values in the previous control cycle, wherein the selected high-side switch unit (HSE1, HSE2) remains selected for a maximum of a predeterminable number of control cycles, and/or
- for the discharging phase of a control cycle, if an actual output voltage is currently applied to all output terminals (Vout1, Vout2) which is smaller than the respective target output voltage to be provided, the high-side switch units (HSE1, HSE2) are selected alternately or cyclically or the respectively selected high-side switch unit (HSE1, HSE2) remains selected for a maximum of a predeterminable number of control cycles before a high-side switch unit (HSE1, HSE2) is selected which is connected to another output terminal (Vout1, Vout2), the actual output voltage of which is smaller than the respective target output voltage to be provided.

2. The DC/DC converter for converting an input voltage into at least two desired output voltages, which can be different or the same within a predeterminable output voltage range, comprising
- an input voltage terminal (Vin) for applying the input voltage,
- at least two output half-bridges (AH1, AH2), each of which has an output terminal (Vout1, Vout2) at which a first or second output voltage can be tapped, a common connection node (VKAH), a common reference potential terminal (GND), a common low-side switch (M3) arranged between the connection node (VKAH) and the reference potential terminal (GND) and an electrical high-side switch unit (HSE1, HSE2) which is arranged between the common connection node (VKAH) and the respective output terminal (Vout1, Vout2),
- an inductor (IND), which is arranged between the input voltage terminal (Vin) and the connection node (VKAH) of the output half bridges (AH1, AH2) and which can be charged with electrical energy in a charging phase of one of several successive clocked control cycles and can be discharged in a discharging phase of a control cycle for forwarding the electrical energy to one of the output terminals (Vout1, Vout2),
- wherein each high-side switch unit (HSE1, HSE2) has a first electronic switch (M4a, M5a) and a second electronic switch (M4b, M5b) each with a diode (BGD4a, BGD4b, BGD5a, BGD5b) in parallel with the switch, wherein the two switches (M4a, M5a; M4b, M5b) of each high-side switch unit (HSE1, HSE2) are connected in series with their diodes in antiserial alignment, and the switch of each high-side switch unit (HSE1, HSE2), the diode of which is located in a reverse direction relative to a current flow from the connection node (VKAH) to the output terminal (Vout1, Vout2) connected to the relevant high-side switch unit (HSE1, HSE2), is the first switch (M4a, M5a) of the respective high-side switch unit (HSE1, HSE2) and the respective other switch is the second switch (M4b, M5b) of the respective high-side switch unit (HSE1, HSE2), and
- an evaluation and control unit (AAE) which is configured to control the electronic switches of the output half-bridges (AH1, AH2) on the basis of the magnitude of the input voltage at the input voltage terminal (Vin) and the magnitudes of the actual and the target output voltages at the output terminals (Vout1, Vout2), wherein the evaluation and control unit (AAE) is configured to select, on the basis of a decision criterion based on a potential undershoot of a target output voltage or target electrical power to be provided at at least one of the output terminals (Vout1, Vout2) by the actual output voltage currently applied thereto or the actual electrical power provided, the high-side switch unit (HSE1, HSE2) connected to the output terminal (Vout1, Vout2) to which electrical energy stored in the inductor (IND) is to be transferred during the discharging phase of a control cycle.
- wherein the evaluation and control unit (AAE) is configured to
- in the charging phase of a control cycle
- switch the low-side switch (M3) of the output half bridges (AH1, AH2) to be conducting, and
- if not yet done at the end of the discharging phase of the previous control cycle and in the event that one of the two actual output voltages is smaller than the respective target output voltage associated therewith, select one of the two high-side switch units (HSE1, HSE2) for the current control cycle using the decision criterion, wherein this high-side switch unit is the selected high-side switch unit and the other high-side switch unit is the non-selected high-side switch unit,
- switch the two switches of the non-selected high-side switch unit to be blocking or keep them switched to be blocking,
- transfer the first switch (M4a, M5a) of the selected high-side switch unit from switched to be blocking to switched to be conducting or to keep this first switch (M4a, M5a) switched to be conducting if it is already switched to be conducting, and
- switch the second switch (M5a, M5b) of the selected high-side switch unit to be blocking or, if it is already switched to be blocking, keep it switched to be blocking,
- in an initial transition phase following the charging phase
- keep the two switches of the non-selected high-side switch unit switched to be blocking,
- keep the first switch (M4a, M5a) of the selected high-side switch unit switched to be conducting,
- transfer the low-side switch (M3) of the output half-bridges (AH1, AH2) from switched to be conducting to switched to be blocking, and
- then, after waiting for the dead time interval, transfer the second switch (M5a, M5b) of the selected high-side switch unit from switched to be blocking to switched to be conducting,
- in the discharging phase of a control cycle following the first transition phase
- keep the states of the electronic switches of the output half-bridges (AH1, AH2) assumed at the end of the first transition phase, and
- in a second transition phase following the discharging phase, which is followed by the charging phase of the next control cycle,
- transfer the low-side switch (M3) of the output half-bridges (AH1, AH2) from switched to be blocking to switched to be conducting,
- then, after waiting for the dead time interval, transfer the second switch (M5a, M5b) of the selected high-side switch unit from switched to be conducting to switched to be blocking, and
- if it is already to take place now and in the event that one of the two actual output voltages is smaller than the respective specified target output voltage, select one of the two high-side switch units (HSE1, HSE2) for the next control cycle on the basis of the decision criterion, and
- keep the two switches of the non-selected high-side switch unit of the current control cycle switched to be blocking if the non-selected high-side switch unit of the current control cycle is not to be selected for the next control cycle in accordance with the decision criterion and the selected high-side switch unit of the current control cycle is also to be selected in the next control cycle,
- or transfer the first switch (M4a, M5a) of the high-side switch unit selected in the current control cycle from switched to be conducting to switched to be blocking, and transfer the first switch (M4a, M5a) of the high-side switch unit not selected in the current control cycle from switched to be blocking to switched to be conducting, if the selected high-side switch unit of the current control cycle will not be selected for the next control cycle in accordance with the decision criterion and the non-selected high-side switch unit of the current control cycle will be selected,
- wherein the evaluation and control unit (AAE) is configured to cause, when it has to select the high-side switch unit (HSE1, HSE2) on the basis of the decision criterion, that:
- for the discharging phase of a control cycle, that high-side switch unit (HSE1, HSE2) is selected which is connected to that output terminal at which an actual output voltage is currently applied which is smaller than the target output voltage to be provided, wherein the selected high-side switch unit (HSE1, HSE2) remains selected for a maximum of a predeterminable number of control cycles, provided that the actual output voltage of the output terminal (Vout1, Vout2) connected to the selected high-side control unit (HSE1, HSE2) is still smaller than the respective target output voltage to be provided, and/or
- for the discharging phase of a control cycle, if an actual output voltage is currently applied to all output terminals (Vout1, Vout2) which is smaller than the respective target output voltage to be provided, the high-side switch unit is selected which is connected to the output terminal (Vout1, Vout2) at which an actual output voltage is applied which is smaller than the respective target output voltage to be provided by the greater difference in amount, wherein the selected high-side switch unit (HSE1, HSE2) remains selected for a maximum of a predeterminable number of control cycles, provided that the actual output voltage of the output terminal (Vout1, Vout2) connected to the selected high-side switch unit (HSE1, HSE2) continues to fall below the target output voltage to be provided by the difference which is greater in amount compared to the undershoot of the actual output voltages of the other output terminal or terminals (Vout1, Vout2), and/or
- for the discharging phase of a control cycle, if an actual output voltage is currently applied to all output terminals (Vout1, Vout2) which is smaller than the respective target output voltage to be provided, the high-side switch unit (HSE1, HSE2) is selected which is connected to the output terminal (Vout1, Vout2) at which an actual voltage is applied, a degree of reduction compared to its value in the previous control cycle is greater than the degree of reduction of the actual output voltages at the other output terminals (Vout1, Vout2) compared to their respective values in the previous control cycle, wherein the selected high-side switch unit (HSE1, HSE2) remains selected for a maximum of a predeterminable number of control cycles, and/or
- for the discharging phase of a control cycle, if an actual output voltage is currently applied to all output terminals (Vout1, Vout2) which is smaller than the respective target output voltage to be provided, the high-side switch units (HSE1, HSE2) are selected alternately or cyclically or the respectively selected high-side switch unit (HSE1, HSE2) remains selected for a maximum of a predeterminable number of control cycles before a high-side switch unit (HSE1, HSE2) is selected which is connected to another output terminal (Vout1, Vout2), the actual output voltage of which is smaller than the respective target output voltage to be provided.

3. The DC/DC converter according to claim 1 or 2, comprising a communication bus (KB) to which the evaluation and control unit (AAE) is connected and via which, in the case of connection of loads to the first and second output terminals (Vout1, Vout2), the evaluation and control unit (AAE) is configured to receive from the respective load a voltage request signal representing the magnitude of the target output voltage to be provided.

4. The DC/DC converter according to any one of claims 1 to 3, wherein the evaluation and control unit (AAE) has a comparator, in particular in the form of a Schmitt trigger, the two inputs of which are connected to the two output terminals (Vout1, Vout2) and which supplies at its output an output signal which is representative of the decision criterion as to which of the high-side switch units (HSE1, HSE2) is to be selected.

5. The DC/DC converter according to claim 1 or claim 3 or claim 4, if referred back to claim 1, wherein the evaluation and control unit (AAE) is configured not to select any of the high-side switch units (HSE1, HSE2) of the output half-bridges (AH1, AH2) when the actual output voltages are greater than or equal to the respective target output voltages, wherein the evaluation and control unit (AAE) is configured to perform the following steps:
- in the first transition phase
- keep the first switches (M4a, M5a) of the two high-side switch units (HSE1, HSE2) conductively switching or switched to be conducting or blockingly switching or switched to be blocking,
- keep the second switches (M4b, M5b) of the two high-side switch units (HSE1, HSE2) switched to be blocking,
- keep the low-side switch (M3) of the output half bridges (AH1, AH2) switched to be conducting, and
- transfer the high-side switch (M1) of the input half-bridge (EH) from switched to be conducting to switched to be blocking, and
- after waiting for the dead time interval, transfer the low-side switch (M2) of the input half-bridge (EH) from switched to be blocking to switched to be conducting,
- in the discharging phase
- keep the states of all switches (M1, M2, M3, M4a, M4b, M5a, M5b) of the input half-bridge (EH) and the output half-bridges (AH1, AH2) assumed at the end of the first transition phase, and
- in the second transition phase
- transfer the low-side switch (M2) of the input half-bridge (EH) from switched to be conducting to switched to be blocking, and
- after waiting for the dead time interval, transfer the high-side switch (M1) of the input half-bridge (EH) from switched to be blocking to switched to be conducting.

6. The DC/DC converter according to any one of claims 1 to 5, wherein the evaluation and control unit (AAE) comprises a measuring device (SH) for supplying a measuring signal representing the magnitude of the current through the inductor (IND) and that the evaluation and control unit (AAE) is configured to terminate the charging phase of a control cycle when the measuring signal exceeds a threshold value representing a predeterminable maximum current.

7. The DC/DC converter according to claim 6, wherein the threshold value can be changed depending on whether one or each of the current actual output voltages is greater or smaller than the respective target output voltage and/or depending on the target value of a slope compensation control (SC).

8. The DC/DC converter according to any one of claims 1 to 7, wherein the first and second switches (M4a, M4b, M5a, M5b) of each high-side switch unit (HSE1, HSE2) and, if present, the high-side switch (M1) and the low-side switch (M2) of the input half-bridge (EH) are each designed as MOS transistor (M4a, M5a; M4b, M5b) with free-wheeling diode.

9. The DC/DC converter according to claim 8, wherein the source terminals of the two MOS transistors of each high-side switch unit (HSE1, HSE2) are connected to each other and the drain terminal of one MOS transistor (M4b) of each high-side switch unit (HSE1, HSE2) is connected to the low-side switch (M3) of the output half-bridges (AH1, AH2) and the drain terminal of the other MOS transistor (M5b) of each high-side switch unit (HSE1, HSE2) is connected to the respective output terminal (Vout1, Vout2) of the output half-bridges (AH1, AH2).

10. The DC/DC converter according to any one of claims 1 to 8, wherein the first and second switches (M4a, M4b, M5a, M5b) of each high-side switch unit (HSE1, HSE2) are designed as bipolar transistors or IGBTs, with a diode, in particular a Schottky diode, in parallel with each of their current paths.

## Revendications

1. Convertisseur de tension continue pour convertir une tension d'entrée en au moins deux tensions de sortie de consigne, qui peuvent être différentes ou identiques dans une plage de tensions de sortie prédéfinie, avec
- un demi-pont d'entrée (EH) comprenant une borne de tension d'entrée (Vin) pour appliquer la tension d'entrée ainsi qu'une borne de potentiel de référence (GND) et une connexion en série d'un commutateur électronique côté haut (M1) et d'un commutateur électronique côté bas (M2) reliés par un nœud de connexion entre les deux commutateurs (M1, M2), le commutateur côté bas (M2) du demi-pont d'entrée (EH) comportant une diode (BGD2) connectée en parallèle au commutateur et ayant une cathode reliée à la borne de potentiel de référence (GND),
- au moins deux demi-ponts de sortie (AH1, AH2), chacun comportant une borne de sortie (Vout1, Vout2) à laquelle une première ou une deuxième tension de sortie peut être prélevée, un nœud de connexion commun (VKAH), une borne de potentiel de référence commune (GND), un commutateur côté bas (M3) commun disposé entre le nœud de connexion (VKAH) et la borne de potentiel de référence (GND), et une unité de commutateurs électrique côté haut (HSE1, HSE2) disposée entre le nœud de connexion commun (VKAH) et la borne de sortie respective (Vout1, Vout2),
- une inductance (IND) qui est disposée entre les nœuds de connexion (VKEH, VKAH) des demi-ponts d'entrée et de sortie (EH, AH1, AH2) et qui peut être chargée en énergie électrique pendant une phase de charge de l'un de plusieurs cycles de commande cadencés successifs et déchargée pendant une phase de décharge d'un cycle de commande pour transmettre de l'énergie électrique à l'une des bornes de sortie (Vout1, Vout2),
- chaque unité de commutateurs côté haut (HSE1, HSE2) comprenant un premier commutateur électronique (M4a, M5a) et un deuxième commutateur électronique (M4b, M5b) ayant chacun une diode (BGD4a, BGD4b, BGD5a, BGD5b) montée en parallèle au commutateur, les deux commutateurs (M4a, M5a ; M4b, M5b) de chaque unité de commutateurs côté haut (HSE1, HSE2) étant montés en série avec leurs diodes en opposition de phase, et celui des commutateurs de chaque unité de commutateurs côté haut (HSE1, HSE2), dont la diode est polarisée en inverse par rapport à un courant circulant du nœud de connexion (VKAH) à la borne de sortie (Vout1, Vout2) reliée à l'unité de commutateurs côté haut (HSE1, HSE2) respective, étant le premier commutateur (M4a, M5a) de l'unité de commutateurs côté haut respective (HSE1, HSE2), et le respectivement autre commutateur étant le deuxième commutateur (M4b, M5b) de l'unité de commutateurs côté haut (HSE1, HSE2) respective, et
- une unité d'évaluation et de commande (AAE) qui est configurée pour commander les commutateurs électroniques (M1, M2, M3, M4a, M4b, M5a, M5b) du demi-pont d'entrée (EH) et des demi-ponts de sortie (AH1, AH2), en fonction de la valeur de la tension d'entrée à la borne de connexion de tension d'entrée (Vin) et des valeurs réelles et des valeurs de consigne des tensions de sortie aux bornes de sortie (Vout1, Vout2), l'unité d'évaluation et de commande (AAE) étant configurée pour sélectionner, sur la base d'un critère de décision fondé sur un franchissement potentiel à la baisse d'une tension de sortie de consigne ou d'une puissance électrique de consigne à au moins une des bornes de sortie (Vout1, Vout2) par la tension de sortie réelle ou la puissance électrique réelle mise à disposition à celle-ci, celle des unités de commutation côté haut (HSE1, HSE2) qui est connectée à la borne de sortie (Vout1, Vout2) à laquelle, pendant la phase de décharge d'un cycle de commande, l'énergie électrique stockée dans l'inducteur (IND) doit être transmise,
- l'unité d'évaluation et de commande (AAE) étant configurée pour,
- pendant la phase de charge d'un cycle de commande prévu pour l'approvisionnement en énergie électrique de l'inductance (IND),
- mettre le commutateur côté bas (M2) du demi-pont d'entrée (EH) à l'état bloqué,
- mettre le commutateur côté haut (M1) du demi-pont d'entrée (EH) à l'état conducteur,
- mettre le commutateur côté bas (M3) des demi-ponts de sortie (AH1, AH2) à l'état conducteur et
- si cela n'a pas encore été fait à la fin de la phase de décharge du cycle de commande précédent ou au cas où une des deux tensions de sortie réelles est inférieure à la tension de sortie de consigne respective, sélectionner, selon le critère de décision, pour le cycle de commande actuel, une des deux unités de commutation côté haut (HSE1, HSE2), cette unité de commutateurs côté haut (HSE1, HSE2) étant l'unité de commutateurs côté haut sélectionnée et l'autre unité de commutateurs côté haut étant l'unité de commutateurs côté haut non sélectionnée,
- mettre ou maintenir les deux commutateurs (M4a, M4b, M5a, M5b) de l'unité de commutateurs côté haut non sélectionnée à l'état bloqué,
- changer le premier commutateur (M4a, M5a) de l'unité de commutateurs côté haut sélectionnée de l'état bloqué à l'état conducteur ou, si celui-ci est déjà mis à l'état conducteur, de maintenir ce premier commutateur (M4a, M5a) à l'état conducteur, et
- mettre le deuxième commutateur (M4b, M5b) de l'unité de commutateurs côté haut sélectionnée à l'état bloqué ou, si celui-ci est déjà mis à l'état bloqué, le maintenir à l'état bloqué,
- pendant une première phase de transition à la suite de la phase de charge
- maintenir le premier commutateur (M4a, M5a) du bloc de commutation côté haut à l'état conducteur,
- changer le commutateur côté bas (M3) des demi-ponts de sortie (AH1, AH2) et le commutateur côté haut (M1) du demi-pont d'entrée (EH) respectivement de l'état conducteur à l'état bloqué et
- changer le deuxième commutateur (M5a, M5b) de l'unité de commutateurs côté haut sélectionnée et le commutateur côté bas (M2) du demi-pont d'entrée (EH) de l'état bloqué à l'état conducteur,
- pendant la phase de décharge d'un cycle de commande qui suit la première phase de transition
- maintenir les positions des commutateurs électroniques (M1, M2, M3, M4a, M4b, M5a, M5b) du demi-pont d'entrée (EH) et des demi-ponts de sortie (AH1, AH2) qu'ils ont eues à la fin de la première phase de transition et
- pendant une deuxième phase de transition à la suite de la phase de décharge, à laquelle suit la phase de charge du cycle de commande suivant,
- changer le deuxième commutateur (M5a, M5b) de l'unité de commutateurs côté haut sélectionnée et le commutateur côté bas (M2) du demi-pont d'entrée (EH) de l'état conducteur à l'état bloqué,
- changer le commutateur côté bas (M3) des demi-ponts de sortie (AH1, AH2) et le commutateur côté haut (M1) du demi-pont d'entrée (EH) de l'état bloqué à l'état conducteur,
- si cela doit se faire déjà maintenant et au cas où l'une des deux tensions de sortie réelles est inférieure à la tension de sortie de consigne spécifiée respective, sélectionner pour le cycle de commande suivant, sur le fond du critère de décision, une des deux unités de commutation côté haut (HSE1, HSE2) et
- maintenir les deux commutateurs de l'unité de commutateurs non sélectionnée du cycle de commande actuel à l'état bloqué, si pour le cycle de commande suivant, selon le critère de décision, l'unité de commutateurs côté haut non sélectionnée du cycle de commande actuel ne doit pas être sélectionnée non plus pour le cycle de commande suivant et que l'unité de commutateurs côté haut sélectionnée du cycle de commande actuel doit être sélectionnée aussi pour le cycle de commande suivant,
- ou changer le premier commutateur (M4a, M5a) de l'unité de commutateurs côté haut sélectionnée dans le cycle de commande actuel de l'état conducteur à l'état bloqué et changer le premier commutateur (M4a, M5a) de l'unité de commutateurs côté haut non sélectionnée dans le cycle de commande actuel de l'état bloqué à l'état conducteur si, selon le critère de décision, pour le cycle de commande suivant, l'unité de commutateurs côté haut sélectionnée du cycle de commande actuel ne doit pas être sélectionnée pour le cycle de commande suivant, et l'unité de commutateurs côté haut non sélectionnée du cycle de commande actuel doit être sélectionnée,
- l'unité d'évaluation et de commande (AAE) étant configurée pour faire en sorte, lorsqu'elle doit sélectionner l'unité de commutateurs côté haut (HSE1, HSE2) sur la base du critère de décision, que
- pour la phase de décharge d'un cycle de commande, celle des unités de commutation côté haut (HSE1, HSE2) soit sélectionnée qui est connectée à la borne de sortie à laquelle la tension de sortie réelle est actuellement inférieure à la tension de sortie de consigne à fournir, l'unité de commutateurs côté haut (HSE1, HSE2) sélectionnée restant sélectionnée pendant un nombre maximal de cycles de commande, qui peut être prédéterminé, si la tension de sortie réelle de la borne de sortie (Vout1, Vout2) connectée à l'unité de commutateurs côté haut (HSE1, HSE2) sélectionnée continue à être inférieure à la tension de sortie de consigne respective à fournir, et/ou
- pour la phase de décharge d'un cycle de commande, lorsqu'actuellement, à toutes les bornes de sortie (Vout1, Vout2), il y a une tension de sortie réelle qui est inférieure à la tension de sortie de consigne respective à fournir, celle des unités de commutation côté haut soit sélectionnée qui est connectée à celle des bornes de sortie (Vout1, Vout2) à laquelle il y a une tension de sortie réelle qui est inférieure à la tension de sortie de consigne par la différence plus grande en valeur absolue, l'unité de commutateurs côté haut sélectionnée (HSE1, HSE2) restant sélectionnée pendant un nombre maximal de cycles de commande qui peut être prédéterminé, si la tension de sortie réelle de la borne de sortie (Vout1, Vout2) connectée à l'unité de commutateurs côté haut (HSE1, HSE2) sélectionnée continue à être inférieure à la tension de sortie de consigne à fournir, par la différence la plus grande en valeur absolue, comparée au franchissement à la baisse de la ou des autres bornes de sortie (Vout1, Vout2), et/ou
- pour la phase de décharge d'un cycle de commande, lorsqu'actuellement, à chaque borne de sortie (Vout1, Vout2), il y a une tension de sortie réelle inférieure à la tension de sortie de consigne respective à fournir, celle des unités de commutation côté haut (HSE1, HSE2) soit sélectionnée qui est connectée à la borne de sortie (Vout1, Vout2) à laquelle il y a une tension réelle dont le degré de réduction par rapport à sa valeur lors du cycle de commande précédent est supérieur au degré de réduction des tensions de sortie réelles aux autres bornes de sortie (Vout1, Vout2) par rapport à leurs valeurs respectives lors du cycle de commande précédent, l' unité de commutateurs côté haut sélectionnée (HSE1, HSE2) restant sélectionnée pendant un nombre maximal de cycles de commande pouvant être prédéterminé, et/ou
- pour la phase de décharge d'un cycle de commande, lorsqu'actuellement, à chaque borne de sortie (Vout1, Vout2), il y a une tension de sortie réelle inférieure à la tension de sortie de consigne respective à fournir, les unités de commutation côté haut (HSE1, HSE2) soient sélectionnées en alternance ou de façon cyclique ou que l'unité de commutateurs côté haut (HSE1, HSE2) respectivement sélectionnée reste sélectionnée pendant un nombre maximal de cycles de commande pouvant être prédéterminé, avant qu'une unité de commutateurs côté haut (HSE1, HSE2) soit sélectionnée qui est connectée à une autre borne de sortie (Vout1, Vout2) dont la tension de sortie réelle est inférieure à la tension de sortie de consigne respective à fournir.

2. Convertisseur de tension continue pour convertir une tension d'entrée en au moins deux tensions de sortie de consigne, qui peuvent être différentes ou identiques dans une plage de tensions de sortie prédéfinie, avec
- une borne de tension d'entrée (Vin) pour appliquer la tension d'entrée,
- au moins deux demi-ponts de sortie (AH1, AH2), dont chacun comporte une borne de sortie (Vout1, Vout2) à laquelle une première ou une deuxième tension de sortie peut être prélevée, un nœud de connexion commun (VKAH), une borne de potentiel de référence commune (GND), un commutateur côté bas (M3) commun disposé entre le nœud de connexion (VKAH) et la borne de potentiel de référence (GND), et une unité de commutateurs électrique côté haut (HSE1, HSE2) disposée entre le nœud de connexion commun (VKAH) et la borne de sortie respective (Vout1, Vout2),
- une inductance (IND) qui est disposée entre la borne de tension d'entrée (Vin) et le nœud de connexion (VKAH) des demi-ponts d'entrée et de sortie (AH1, AH2) et qui peut être chargée en énergie électrique pendant une phase de charge de l'un de plusieurs cycles de commande cadencés successifs et déchargée pendant une phase de décharge d'un cycle de commande pour transmettre de l'énergie électrique à l'une des bornes de sortie (Vout1, Vout2),
- chaque unité de commutateurs côté haut (HSE1, HSE2) comprenant un premier commutateur électronique (M4a, M5a) et un deuxième commutateur électronique (M4b, M5b) ayant chacun une diode (BGD4a, BGD4b, BGD5a, BGD5b) montée en parallèle au commutateur, les deux commutateurs (M4a, M5a ; M4b, M5b) de chaque unité de commutateurs côté haut (HSE1, HSE2) étant montés en série avec leurs diodes en opposition de phase, et celui des commutateurs de chaque unité de commutateurs côté haut (HSE1, HSE2), dont la diode est polarisée en inverse par rapport à un courant circulant du nœud de connexion (VKAH) à la borne de sortie (Vout1, Vout2) reliée à l'unité de commutateurs côté haut (HSE1, HSE2) respective, étant le premier commutateur (M4a, M5a) de l'unité de commutateurs côté haut respective (HSE1, HSE2), et le respectivement autre commutateur étant le deuxième commutateur (M4b, M5b) de l'unité de commutateurs côté haut (HSE1, HSE2) respective, et
- une unité d'évaluation et de commande (AAE) qui est configurée pour commander les commutateurs électroniques des demi-ponts de sortie (AH1, AH2), en fonction de la valeur de la tension d'entrée à la borne de connexion de tension d'entrée (Vin) et des valeurs réelles et des valeurs de consigne des tensions de sortie aux bornes de sortie (Vout1, Vout2), l'unité d'évaluation et de commande (AAE) étant configurée pour sélectionner, sur la base d'un critère de décision fondé sur un franchissement potentiel à la baisse d'une tension de sortie de consigne ou d'une puissance électrique de consigne à au moins une des bornes de sortie (Vout1, Vout2) par la tension de sortie réelle ou la puissance électrique réelle mise à disposition à celle-ci, celle des unités de commutation côté haut (HSE1, HSE2) qui est connectée à la borne de sortie (Vout1, Vout2) à laquelle, pendant la phase de décharge d'un cycle de commande, l'énergie électrique stockée dans l'inducteur (IND) doit être transmise,
- l'unité d'évaluation et de commande (AAE) étant configurée pour,
- pendant la phase de charge d'un cycle de commande
- mettre le commutateur côté bas (M3) des demi-ponts de sortie (AH1, AH2) à l'état conducteur et
- si cela n'a pas encore été fait à la fin de la phase de décharge du cycle de commande précédent ou au cas où une des deux tensions de sortie réelles est inférieure à la tension de sortie de consigne respective, sélectionner, selon le critère de décision, pour le cycle de commande actuel, une des deux unités de commutation côté haut (HSE1, HSE2), cette unité de commutateurs côté haut (HSE1, HSE2) étant l'unité de commutateurs côté haut sélectionnée et l'autre unité de commutateurs côté haut étant l'unité de commutateurs côté haut non sélectionnée,
- mettre ou maintenir les deux commutateurs de l'unité de commutateurs côté haut non sélectionnée à l'état bloqué,
- changer le premier commutateur (M4a, M5a) de l'unité de commutateurs côté haut sélectionnée de l'état bloqué à l'état conducteur ou, si celui-ci est déjà mis à l'état conducteur, de maintenir ce premier commutateur (M4a, M5a) à l'état conducteur, et
- mettre le deuxième commutateur (M4b, M5b) de l'unité de commutateurs côté haut sélectionnée à l'état bloqué ou, si celui-ci est déjà mis à l'état bloqué, le maintenir à l'état bloqué,
- pendant une première phase de transition à la suite de la phase de charge
- maintenir les deux commutateurs de l'unité de commutateurs côté haut non sélectionné à l'état bloqué,
- maintenir le premier commutateur (M4a, M5a) du bloc de commutation côté haut sélectionné à l'état conducteur,
- changer le commutateur côté bas (M3) des demi-ponts de sortie (AH1, AH2) de l'état conducteur à l'état bloqué et
- ensuite, après l'intervalle de temps mort, changer le deuxième commutateur (M5a, M5b) de l'unité de commutateurs côté haut sélectionnée de l'état bloqué à l'état conducteur,
- pendant la phase de décharge d'un cycle de commande qui suit la première phase de transition
- maintenir les états des commutateurs électroniques des demi-ponts de sortie (AH1, AH2) qu'ils ont eu à la fin de la première phase de transition et
- pendant une deuxième phase de transition à la suite de la phase de décharge, à laquelle suit la phase de charge du cycle de commande suivant,
- changer le commutateur côté bas (M3) des demi-ponts de sortie (AH1, AH2) de l'état bloqué à l'état conducteur,
- ensuite, après l'intervalle de temps mort, changer le deuxième commutateur (M5a, M5b) de l'unité de commutateurs côté haut sélectionnée de l'état bloqué à l'état conducteur, et
- si cela doit se faire déjà maintenant et au cas où l'une des deux tensions de sortie réelles est inférieure à la tension de sortie de consigne spécifiée respective, sélectionner pour le cycle de commande suivant, sur le fond du critère de décision, une des deux unités de commutation côté haut (HSE1, HSE2) et
- maintenir les deux commutateurs de l'unité de commutateurs non sélectionnée du cycle de commande actuel à l'état bloqué, si pour le cycle de commande suivant, selon le critère de décision, l'unité de commutateurs côté haut non sélectionnée du cycle de commande actuel ne doit pas être sélectionnée non plus pour le cycle de commande suivant et que l'unité de commutateurs côté haut sélectionnée du cycle de commande actuel doit être sélectionnée aussi pour le cycle de commande suivant,
- ou changer le premier commutateur (M4a, M5a) de l'unité de commutateurs côté haut sélectionnée dans le cycle de commande actuel de l'état conducteur à l'état bloqué et changer le premier commutateur (M4a, M5a) de l'unité de commutateurs côté haut non sélectionnée dans le cycle de commande actuel de l'état bloqué à l'état conducteur si, selon le critère de décision, pour le cycle de commande suivant, l'unité de commutateurs côté haut sélectionnée du cycle de commande actuel ne doit pas être sélectionnée pour le cycle de commande suivant, et l'unité de commutateurs côté haut non sélectionnée du cycle de commande actuel doit être sélectionnée,
- l'unité d'évaluation et de commande (AAE) étant configurée pour faire en sorte, lorsqu'elle doit sélectionner l'unité de commutateurs côté haut (HSE1, HSE2) sur la base du critère de décision, que
- pour la phase de décharge d'un cycle de commande, celle des unités de commutation côté haut (HSE1, HSE2) soit sélectionnée qui est connectée à la borne de sortie à laquelle la tension de sortie réelle est actuellement inférieure à la tension de sortie de consigne à fournir, l'unité de commutateurs côté haut (HSE1, HSE2) sélectionnée restant sélectionnée pendant un nombre maximal de cycles de commande, qui peut être prédéterminé, si la tension de sortie réelle de la borne de sortie (Vout1, Vout2) connectée à l'unité de commutateurs côté haut (HSE1, HSE2) sélectionnée continue à être inférieure à la tension de sortie de consigne respective à fournir, et/ou
- pour la phase de décharge d'un cycle de commande, lorsqu'actuellement, à toutes les bornes de sortie (Vout1, Vout2), il y a une tension de sortie réelle qui est inférieure à la tension de sortie de consigne respective à fournir, celle des unités de commutation côté haut soit sélectionnée qui est connectée à celle des bornes de sortie (Vout1, Vout2) à laquelle il y a une tension de sortie réelle qui est inférieure à la tension de sortie de consigne par la différence plus grande en valeur absolue, l'unité de commutateurs côté haut sélectionnée (HSE1, HSE2) restant sélectionnée pendant un nombre maximal de cycles de commande qui peut être prédéterminé, si la tension de sortie réelle de la borne de sortie (Vout1, Vout2) connectée à l'unité de commutateurs côté haut (HSE1, HSE2) sélectionnée continue à être inférieure à la tension de sortie de consigne à fournir, par la différence la plus grande en valeur absolue, comparée au franchissement à la baisse de la ou des autres bornes de sortie (Vout1, Vout2), et/ou
- pour la phase de décharge d'un cycle de commande, lorsqu'actuellement, à chaque borne de sortie (Vout1, Vout2), il y a une tension de sortie réelle inférieure à la tension de sortie de consigne respective à fournir, celle des unités de commutation côté haut (HSE1, HSE2) soit sélectionnée qui est connectée à la borne de sortie (Vout1, Vout2) à laquelle il y a une tension réelle dont le degré de réduction par rapport à sa valeur lors du cycle de commande précédent est supérieur au degré de réduction des tensions de sortie réelles aux autres bornes de sortie (Vout1, Vout2) par rapport à leurs valeurs respectives lors du cycle de commande précédent, l' unité de commutateurs côté haut sélectionnée (HSE1, HSE2) restant sélectionnée pendant un nombre maximal de cycles de commande pouvant être prédéterminé, et/ou
- pour la phase de décharge d'un cycle de commande, lorsqu'actuellement, à chaque borne de sortie (Vout1, Vout2), il y a une tension de sortie réelle inférieure à la tension de sortie de consigne respective à fournir, les unités de commutation côté haut (HSE1, HSE2) soient sélectionnées en alternance ou de façon cyclique ou que l'unité de commutateurs côté haut (HSE1, HSE2) respectivement sélectionnée reste sélectionnée pendant un nombre maximal de cycles de commande pouvant être prédéterminé, avant qu'une unité de commutateurs côté haut (HSE1, HSE2) soit sélectionnée qui est connectée à une autre borne de sortie (Vout1, Vout2) dont la tension de sortie réelle est inférieure à la tension de sortie de consigne respective à fournir.

3. Convertisseur de tension continue selon la revendication 1 ou 2 avec un bus de communication (KB) auquel l'unité d'évaluation et de commande (AAE) est connectée et par le biais duquel, dans le cas d'une connexion de consommateurs aux première et deuxième bornes de sortie (Vout1, Vout2), l'unité d'évaluation et de commande (AAE) est configurée de façon à recevoir du consommateur respectif un signal de demande de tension représentant la valeur de la tension de sortie de consigne à fournir.

4. Convertisseur de tension continue selon l'une des revendications 1 à 3, l'unité d'évaluation et de commande (AAE) comprenant un comparateur, notamment sous forme de trigger de Schmitt, dont les deux entrées sont connectées aux deux bornes de sortie (Vout1, Vout2) et qui fournit à sa sortie un signal de sortie qui est représentatif pour le critère de décision, à savoir laquelle des unités de commutation côté haut (HSE1, HSE2) est à sélectionner.

5. Convertisseur de tension continue selon la revendication 1 ou la revendication 3 ou la revendication 4 si rattachée à la revendication 1, l'unité d'évaluation et de commande (AAE) étant configurée pour ne sélectionner aucune des unités de commutation côté haut (HSE1, HSE2) des demi-ponts de sortie (AH1, AH2), lorsque les tensions de sortie réelles aux bornes de sortie (Vout1, Vout2) sont supérieures ou égales aux tensions de sortie de consigne respectives, l'unité d'évaluation et de commande (AAE) étant configurée pour mettre en œuvre les étapes suivantes :
- pendant la première phase de transition
- commuter ou maintenir les premiers commutateurs (M4a, M5a) des deux unités de commutation côté haut à l'état conducteur ou les commuter ou maintenir à l'état bloqué,
- maintenir les deuxièmes commutateurs (M4b, M5b) des deux unités de commutation côté haut (HSE1, HSE2) à l'état bloqué,
- maintenir le commutateur côté bas (M3) des demi-ponts de sortie (AH1, AH2) à l'état conducteur et
- changer le commutateur côté haut (M1) du demi-pont d'entrée (EH) de l'état conducteur à l'état bloqué et
- ensuite, après l'intervalle de temps mort, changer le commutateur côté bas (M2) du demi-pont d'entrée (EH) de l'état bloqué à l'état conducteur,
- pendant la phase de décharge
- maintenir les états de tous les commutateurs (M1, M2, M3, M4a, M4b, M5a, M5b) du demi-pont d'entrée (EH) et des demi-ponts de sortie (AH1, AH2) qu'ils ont eu à la fin de la deuxième phase de transition et
- pendant la deuxième phase de transition
- changer le commutateur côté bas (M2) du demi-pont d'entrée (EH) de l'état conducteur à l'état bloqué et
- ensuite, après l'intervalle de temps mort, changer le commutateur côté haut (M1) du demi-pont d'entrée (EH) de l'état bloqué à l'état conducteur.

6. Convertisseur de tension continue selon l'une des revendications 1 à 5, l'unité d'évaluation et de contrôle (AAE) comprenant un dispositif de mesure (SH) pour fournir un signal de mesure représentant la valeur du courant livré par l'inductance (IND) et l'unité d'évaluation et de commande (AAE) étant configurée pour terminer la phase de charge d'un cycle de commande lorsque le signal de mesure dépasse un seuil qui représente un courant maximal qui peut être prédéterminé.

7. Convertisseur de tension continue selon la revendication 6, la valeur seuil pouvant varier du fait qu'une ou chacune des tensions de sortie réelles actuelles est supérieure ou inférieure à la tension de sortie de consigne respective et/ou en fonction de la valeur de consigne d'une commande à pente-compensation (SC).

8. Convertisseur de tension continue selon l'une des revendications 1 à 7, les premiers et deuxièmes commutateurs (M4a, M4b, M5a, M5b) de chaque unité de commutateurs côté haut (HSE1, HSE2) et, si présent, le commutateur côté haut (M1) et le commutateur côté bas (M2) du demi-pont d'entrée (EH) étant formés chacun comme transistor MOS (M4a, M5a ; M4b, M5b) en roue libre.

9. Convertisseur de tension continue selon la revendication 8, les bornes de source des deux transistors MOS de chaque unité de commutateurs côté haut (HSE1, HSE2) étant connectées entre elles et la borne de drain de l'un des transistors MOS (M4b) de chaque unité de commutateurs côté haut (HSE1, HSE2) étant connectée au commutateur côté bas (M3) des demi-ponts de sortie (AH1, AH2) et la borne de drain de l'autre transistor MOS (M5b) de chaque unité de commutateurs côté haut (HSE1, HSE2) étant connectée à la borne de sortie respective (Vout1, Vout2) des demi-ponts de sortie (AH1, AH2).

10. Convertisseur de tension continue selon l'une des revendications 1 à 8, les premiers et deuxièmes commutateurs (M4a, M4b, M5a, M5b) de chaque unité de commutateurs côté haut (HSE1, HSE2) étant conçus comme transistors bipolaires ou IGBT aux circuits desquels une diode respective, notamment une diode Schottky, est connectée parallèlement.
